# EUROPEAN PATENT SPECIFICATION

(11) **EP 1 851 904 B1**
(45) Date of publication and mention of the grant of the patent: **18.05.2011**
(21) Application number: 05714479.2
(22) Date of filing: 22.02.2005
(51) Int. Cl.: H04L 12/02, H04L 12/16, H04W 88/02

(54) **FACILITATING MOBILE DEVICE AWARENESS OF THE AVAILABILITY OF NEW OR UPDATED SERVER-SIDE APPLICATIONS**
ERMÖGLICHUNG VON MOBILGERÄTE-BEWUSSTHEIT ÜBER DIE VERFÜGBARKEIT NEUER ODER AKTUALISIERTER SERVERSEITIGER ANWENDUNGEN
PROCEDE FACILITANT LA CONNAISSANCE DU DISPOSITIF MOBILE DE LA DISPONIBILITE D'APPLICATIONS NOUVELLES OU MISES A JOUR COTE SERVEUR

(43) Date of publication of application: 07.11.2007
(73) Proprietor: Nextair Corporation, Waterloo, ON N2L 3W8 (CA)
(72) Inventor: NEIL, Tim, Mississauga, Ontario L5M 7H2 (CA); NEIL, Scott, Toronto, Ontario M5V 3R7 (CA); GRENIER, Steve, Georgetown, Ontario L7G 5V7 (CA); CHALMERS, Paul, Windsor, Ontario N9J 3P6 (CA)
(74) Representative: MERH-IP Matias Erny Reichl Hoffmann
(86) International application number: PCT/CA2005/000237
(87) International publication number: WO 2006/089390

(56) References cited:
- WO-A-00/17789
- US-A1- 2002 087 643
- US-A1- 2003 050 046
- US-A1- 2004 230 661
- US-B1- 6 654 786

## Description

### COPYRIGHT NOTICE

A portion of the disclosure of this patent document contains material which is subject to copyright protection. The copyright owner has no objection to the facsimile reproduction by any one of the patent document or patent disclosure, as it appears in a Patent Office patent file or records, but otherwise reserves all copyright rights whatsoever.

### FIELD OF THE INVENTION

The present invention relates to software, devices and methods allowing varied mobile devices to interact with server side software applications, and more particularly, to software, devices and methods for facilitating mobile device awareness of the availability of new or updated server-side applications.

### BACKGROUND OF THE INVENTION

Wireless connectivity is a feature of the modern telecommunications environment. An increasing range of people are using a wide variety of wireless data networks to access corporate data applications.

However, there are numerous competing mobile devices (i.e. wireless communications devices) that can be used to achieve this. Each device has its own operating system and its own display characteristics. Operating systems are not mutually compatible, nor are the display characteristics--some are color, some are black and white, some are text-only, and some are pictorial.

At the same time, an increasing number of mobile device users are people without a technical background or high level of educational achievement. Such people are often intimidated by the need to run complex installation programs. Furthermore, at present, such installation programs generally depend on cable connections to a personal computer by the means of a 'cradle' or other such device.

U.S. Patent Publication No. US 2003/0060896, discloses a mechanism allowing server-side applications to be presented at multiple wireless devices with minimal modification of the application at the server. As disclosed, the manner in which an application is presented at a mobile device is defined by a text based application definition file. The definition file describes how an application is to be presented at mobile device; the format of transactions over the wireless network; and a format of data related to the application to be stored at the mobile device. A virtual machine software component at the mobile device interprets the definition file and presents an interface to the application in accordance with the definition file. Conveniently, the application definition file may be independent of the particular type of mobile device, while virtual machine software components specific to the mobile device may be created.

As is also disclosed in U.S. Patent Publication No. US 2003/0060896, a mobile device may interrogate a middleware server to determine which applications are available to that device. Unfortunately, such an arrangement may have certain shortcomings. In particular, a mobile device only becomes aware of the applications available to it by actively querying the middleware server. No provision exists for notifying the mobile device of the availability of a new application or updated version of an existing application. As a result, the set of applications capable of use at the mobile device may become outdated in relation to the set of applications which are potentially available for use at the mobile device.

Accordingly, there is a need for facilitating mobile device awareness of new or updated server-side applications.
Document WO 00/17789 A1 discloses a method, wherein a feature management server associates individual user profiles with new features, devices or services from a feature data base. The server then notifies a user if new releases of software or new functionalities are available for any devices registered for this user.

### SUMMARY OF THE INVENTION

To facilitate wireless communication device awareness of the availability of new or updated server-side applications, in response to either of a new application being made available at a server or an updated version of an application being made available at a server, a message is transmitted over a wireless connection to a set of wireless communications devices allocated to a plurality of users. The message indicates that the new or updated application is available. A notification may be displayed on each of the mobile devices in the set. A device user may choose to register for the new or updated application on the basis of the notification. The message may be transmitted when an application has been added to a group of applications to which access by the set of wireless communication devices is provided as a whole.

In one aspect of the present invention, there is provided a computer-implemented method, comprising: in response to either of a new application being made available at a server or an updated version of an application being made available at a server, transmitting a message over a wireless network to a set of wireless communication devices allocated to a plurality of users, the message indicating that the new or updated application is available, the transmitting being triggered automatically in response to the new application being made available at the server or the updated version of the application being made available at the server, the transmitting further being conditional upon the new application or the updated version of the application being added to a group of applications with which the set of wireless communications devices is associated and to which access by the set of wireless communication devices is provided as a whole; receiving over the wireless network from at least one wireless communication device of the set a user indication that the new application or the updated version of the application is desired, the user indication being responsive to the message; and in response to the receiving, transmitting the new application or the updated version of the application over the wireless network to the at least one wireless communication device.

In another aspect of the present invention, there is provided a server comprising a processor and memory in communication with the processor storing instructions which, when executed by the processor, adapt the server to perform the above method.

In a further aspect of the present invention, there is provided a machine-readable medium storing instructions which, when executed by a processor of a server, adapt the server to perform the above method.
[0012A] In a further aspect of the present invention, there is provided a method of deploying software from a server to a set of wireless communication devices allocated to a plurality of users, comprising: in response to either of a new application being made available at the server or an updated version of an application being made available at the server, transmitting a message over a wireless network to the set of wireless communication devices indicating that the new or updated application is available, the transmitting being triggered automatically in response to the new application being made available at the server or the updated version of the application being made available at the server, the transmitting further being conditional upon the new application or the updated version of the application being added to a group of applications with which the set of wireless communications devices is associated and to which access by the set of wireless communication devices is provided as a whole; at each wireless communication device of the set, presenting a selectable option to a user whose selection by the user indicates that the new application or the updated version of the application is desired, the presenting being responsive to the message; from each wireless communication device of the set where the user selection has been made, sending an indication of the user selection over the wireless network to the server; and in response to the indication, transmitting the new application or the updated version of the application, from the server and over the wireless network, to the each wireless communication device of the set where the user selection has been made.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

In the figures which illustrate by way of example only, embodiments of the present invention,

FIG. 1 schematically illustrates a mobile device, exemplary of an embodiment of the present invention, including virtual machine software, further exemplary of an embodiment of the present invention;

FIG. 2 further illustrates the organization of exemplary virtual machine software at the mobile device of FIG. 1;

FIG. 3 illustrates an operating environment for the device of FIG. 1;

FIG. 4 illustrates the structure of example application definitions stored at a server of FIG. 2 used by the device of FIG. 1;

FIG. 5 schematically illustrates the formation of application definition files at a middleware server of FIG. 2;

FIG. 6 schematically illustrates the middleware server of FIG. 2, exemplary of an embodiment of the present invention, including an application definitions database, further exemplary of an embodiment of the present invention;

FIG. 7 is a flow diagram (also referred to as a sequence diagram) illustrating the exchange of sample messages passed between a mobile device, middleware server and application server of FIG. 2;

FIG. 8 is a sequence diagram illustrating operation for notifying a mobile device of the availability of a new or updated application;

FIG. 9 illustrates an exemplary GUI by which new or updated application notification may be triggered at a middleware server;

FIG. 10 illustrates the format and content of an exemplary message which may be used for purposes of notifying mobile devices of new or updated applications;

FIG. 11 illustrates the format and content of an exemplary general "application notify" message;

FIGS. 12-14 illustrate steps performed at a mobile device under control of virtual machine software of FIG. 2;

FIG. 15 illustrates the format of messages exchanged in the message flow of FIG. 7;

FIG. 16 illustrates a presentation of a user interface for a sample application at a mobile device;

FIG. 17 illustrates a sample portion of an application definition file defining a user interface illustrated in FIG. 16;

FIG. 18 illustrates the format of a message formed in accordance with the sample portion of an application definition file of FIG. 17;

FIG. 19A illustrates a sample portion of an application definition file defining a local storage at a mobile device;

FIG. 19B schematically illustrates local storage in accordance with FIG. 19A;

FIG. 19C illustrates how locally stored data is updated by a sample message in accordance with the sample portion of an application file definition of FIG. 19A; and

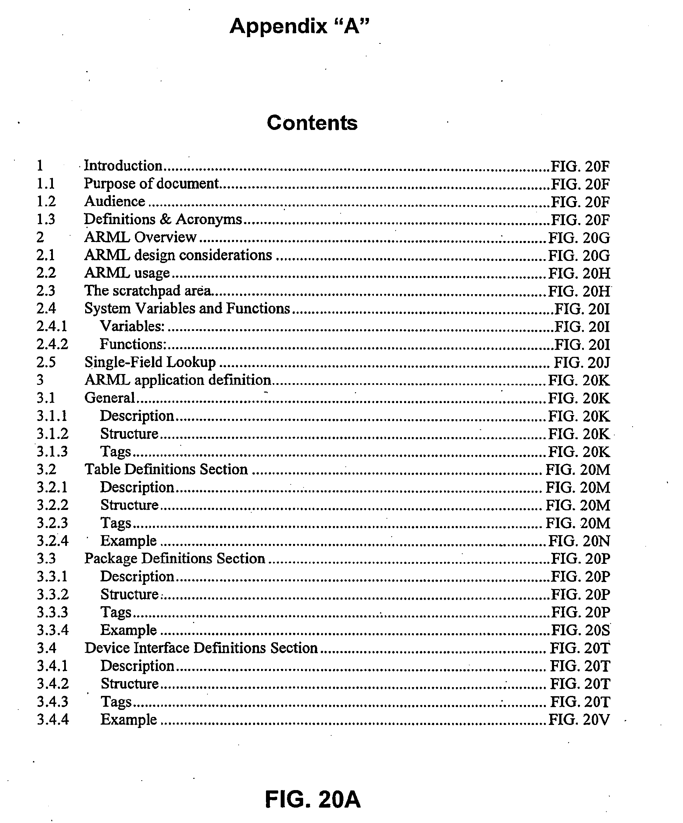

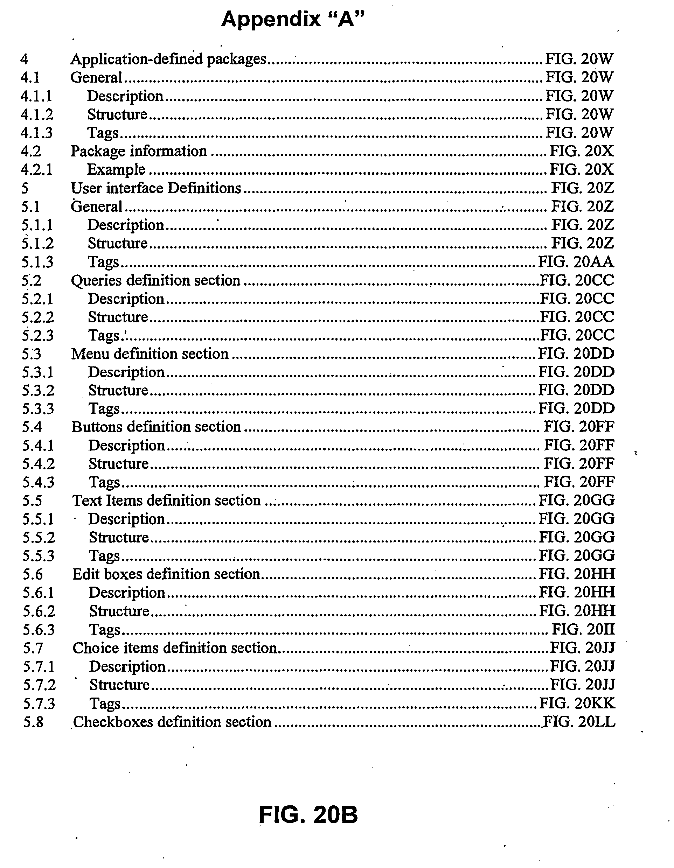

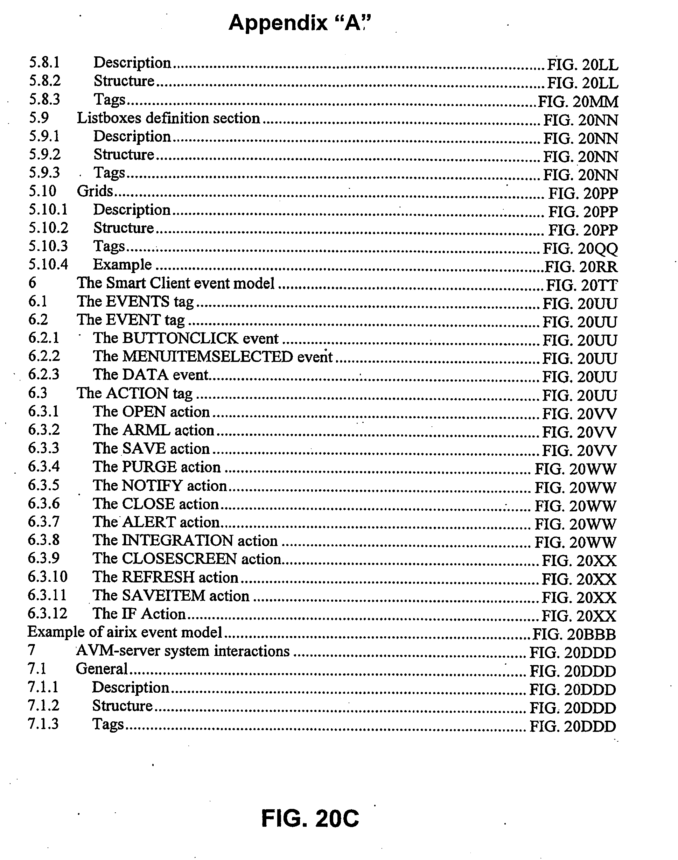

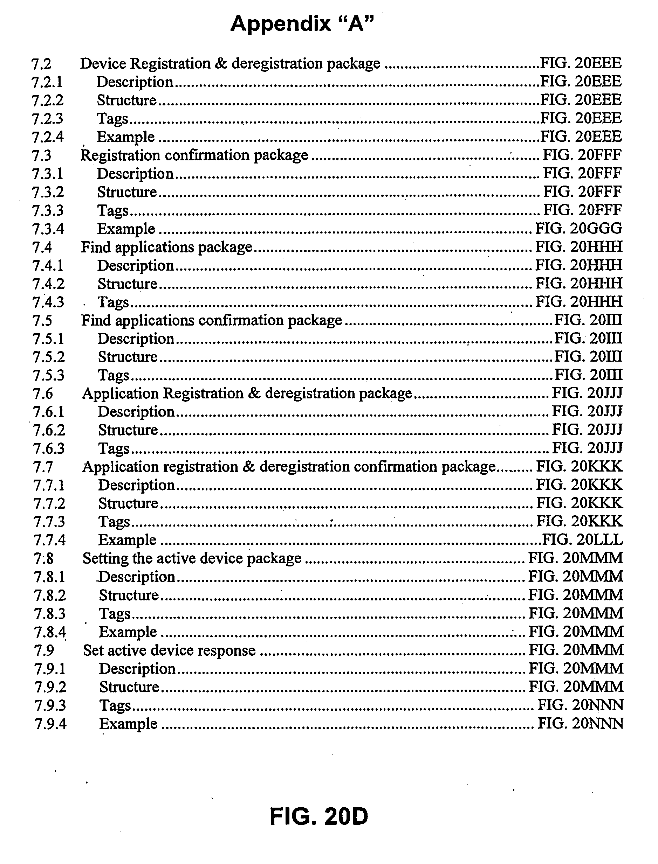

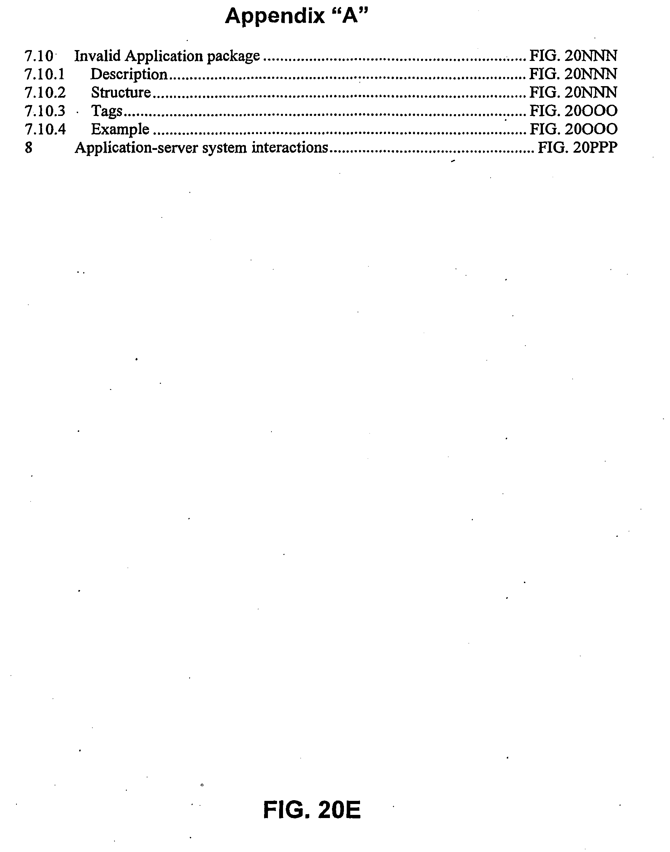

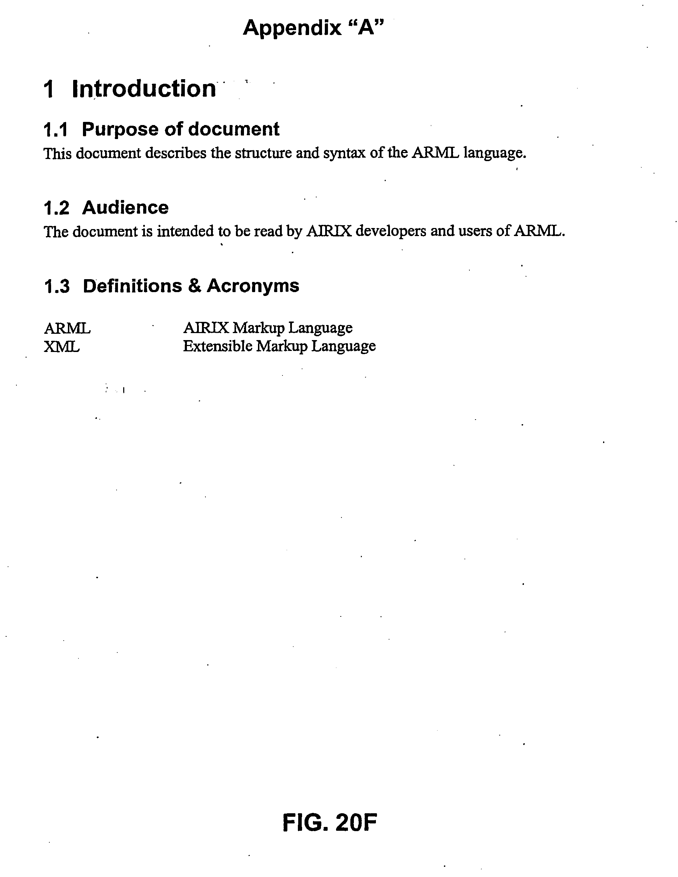

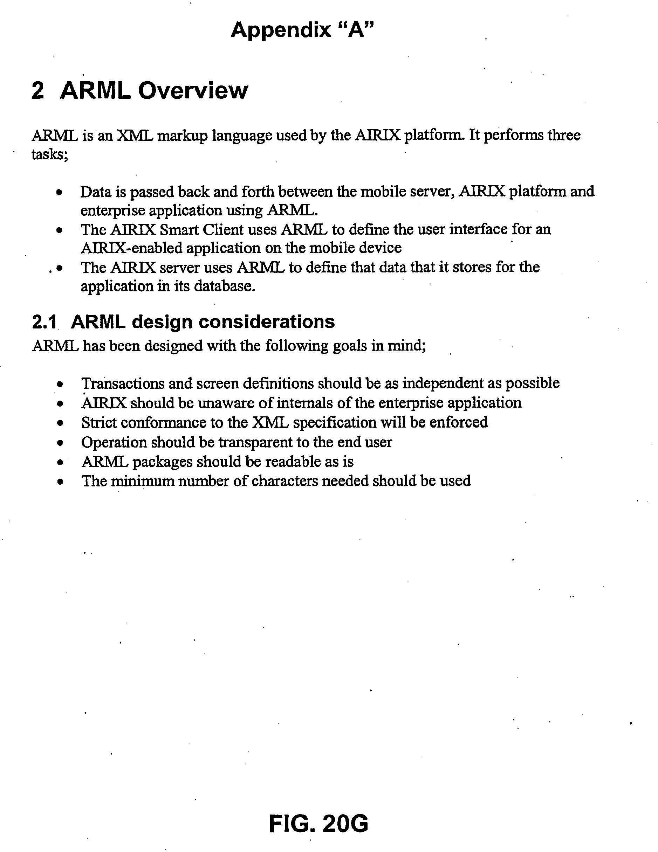

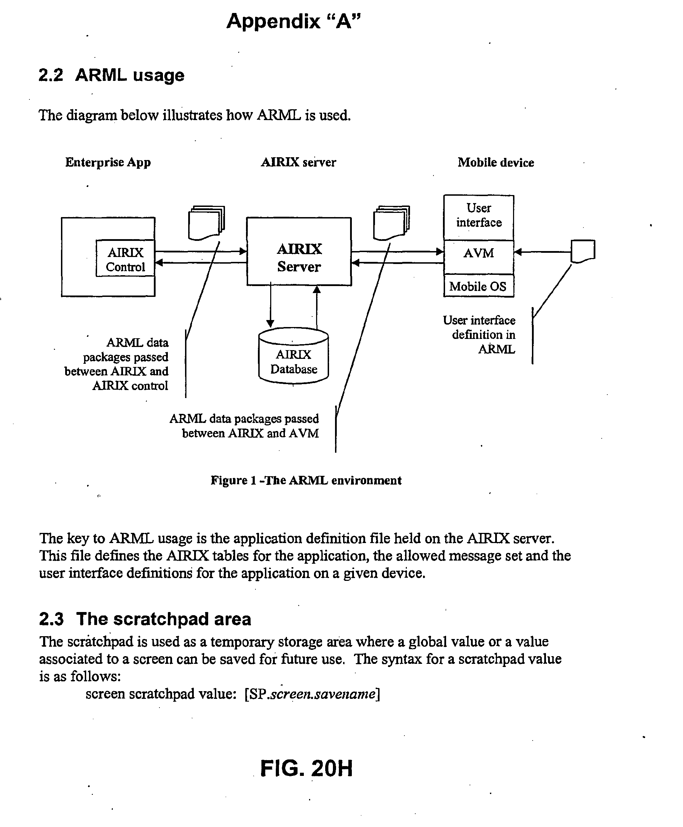

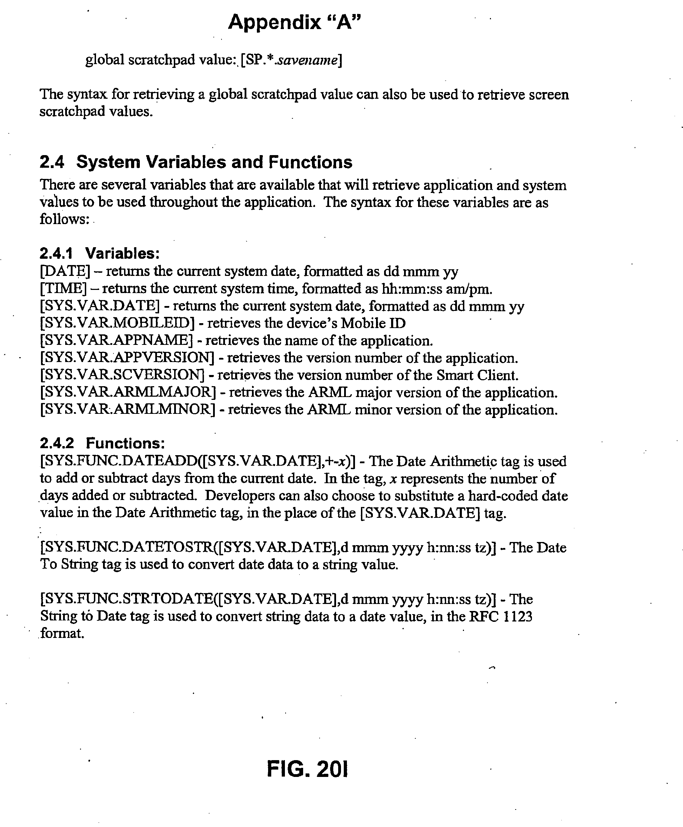

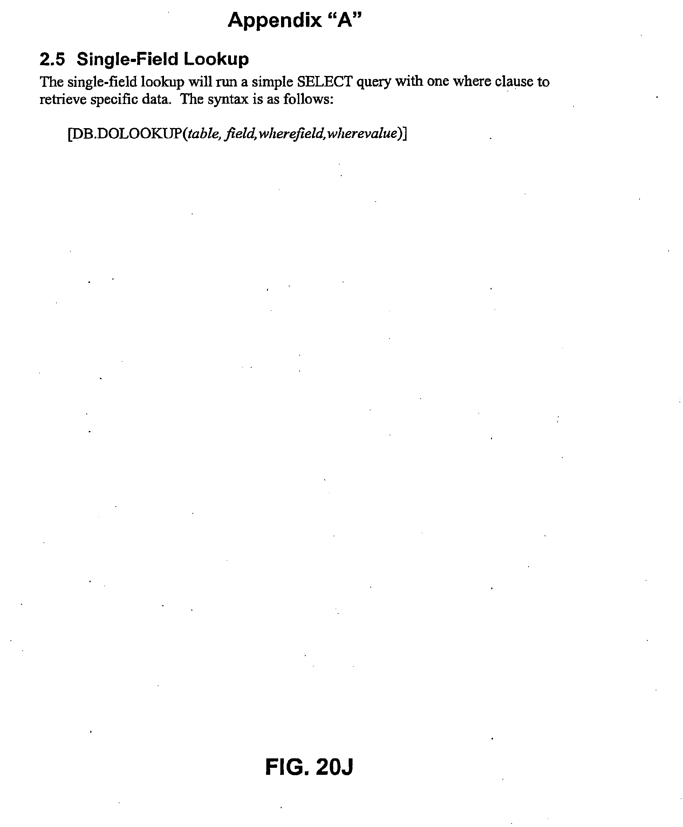

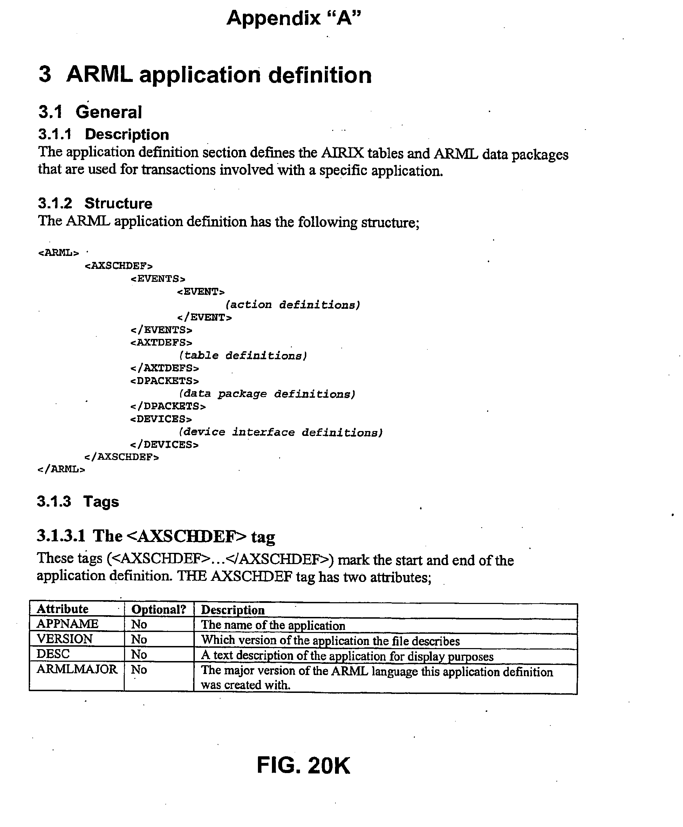

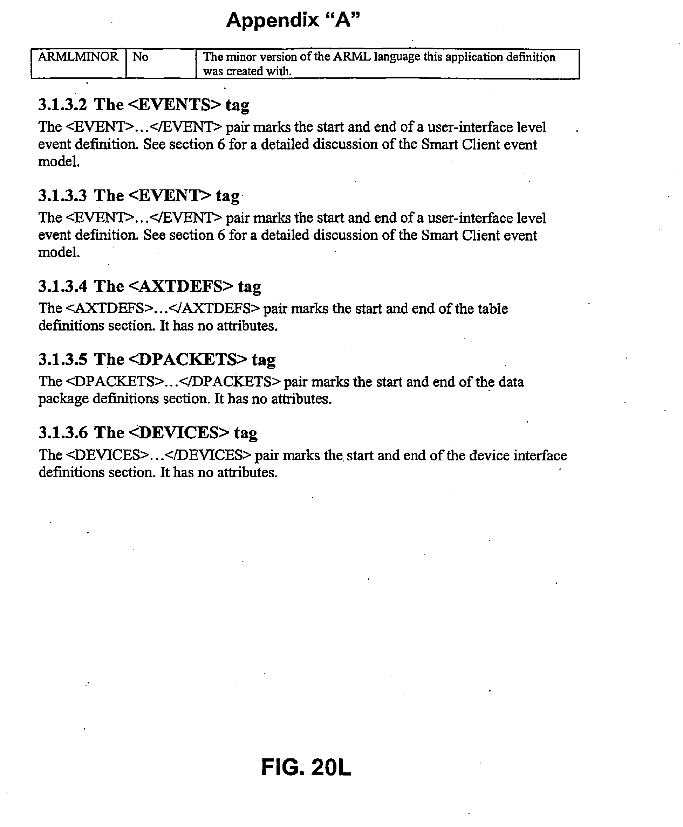

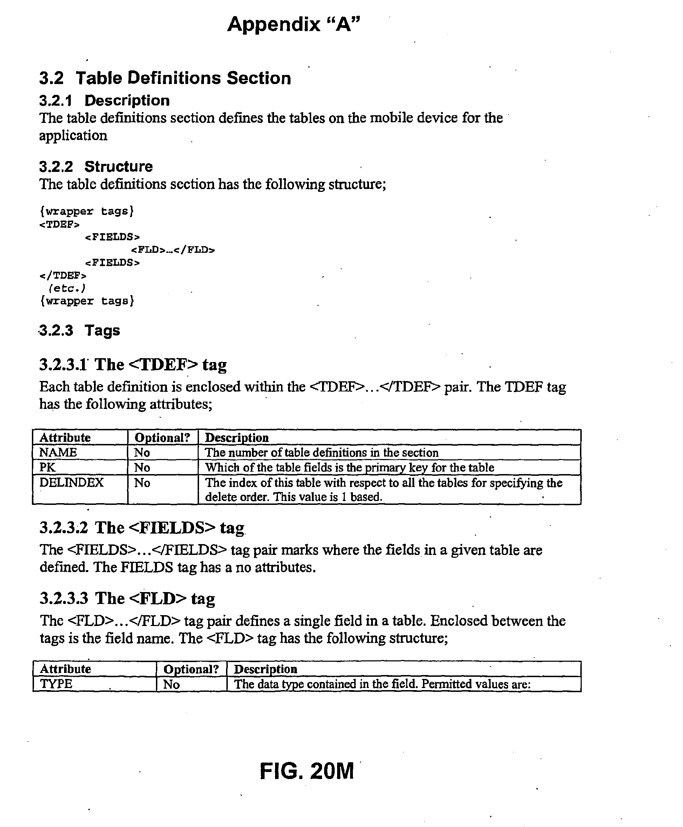

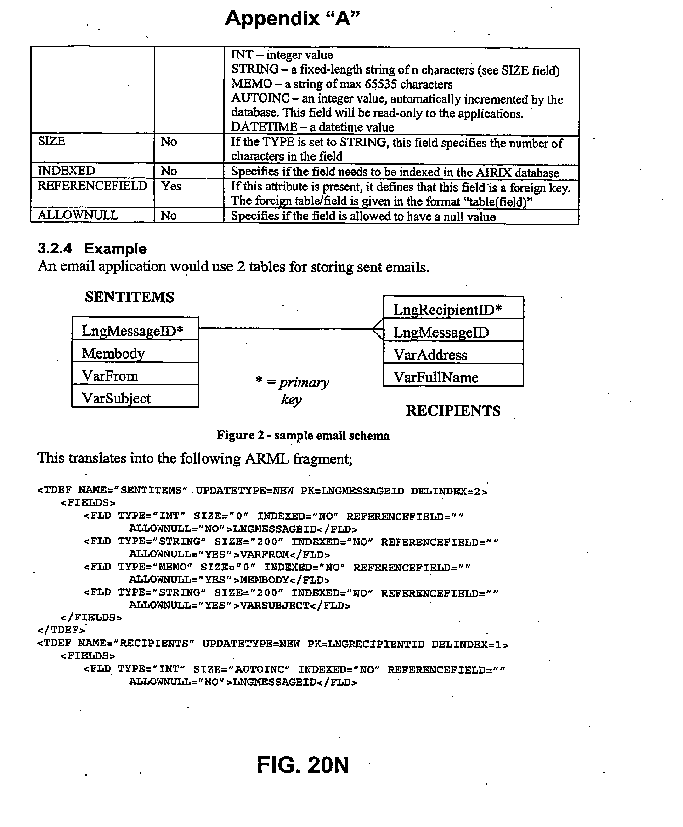

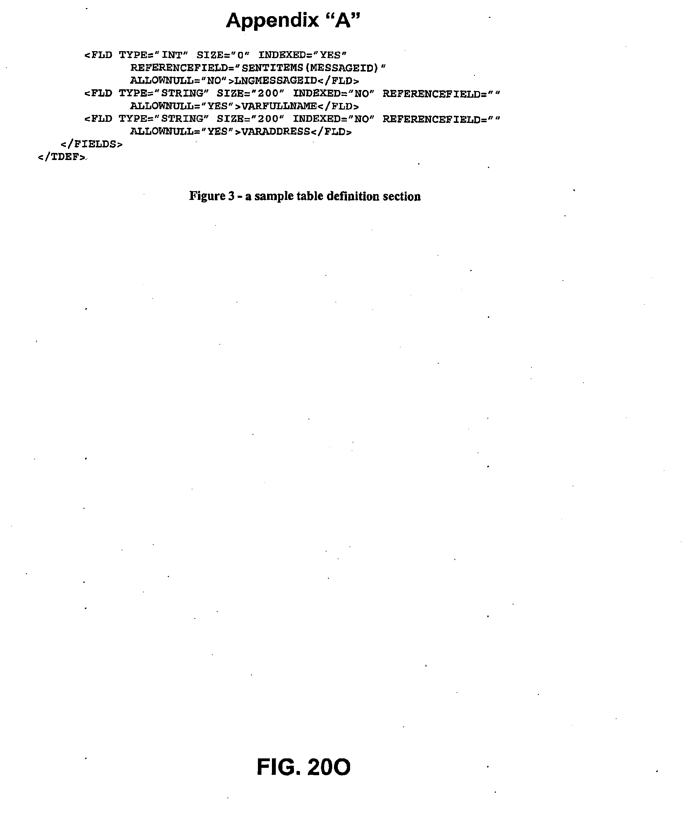

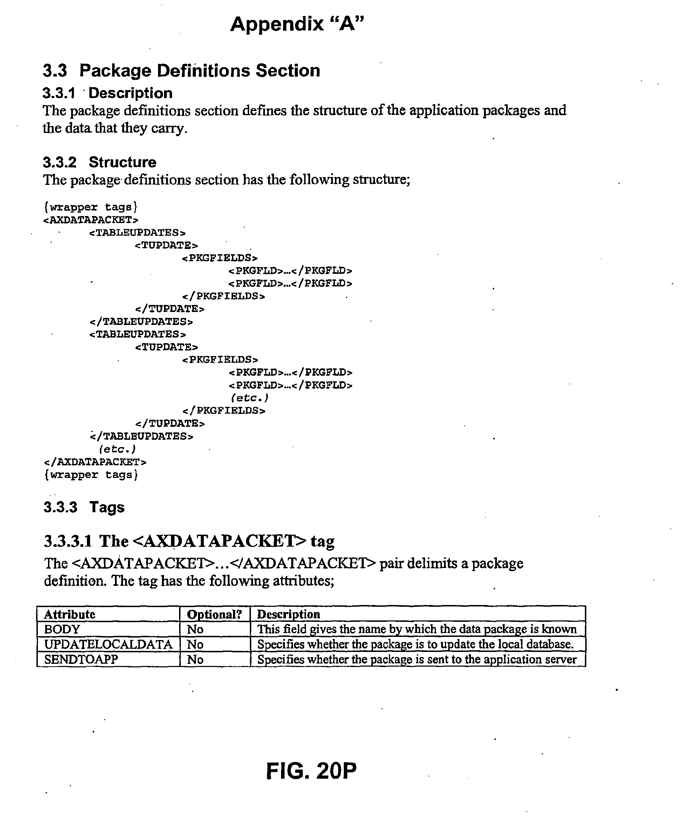

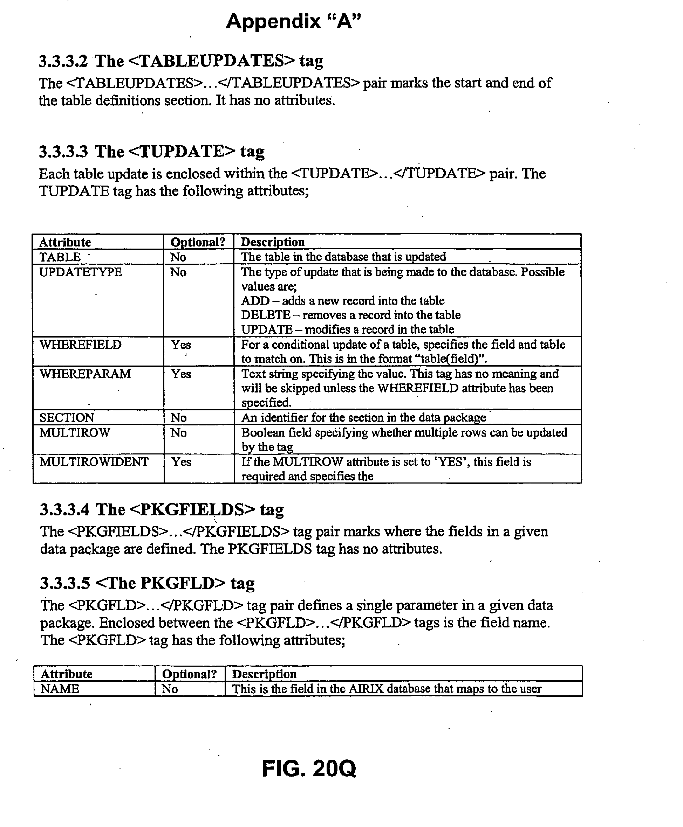

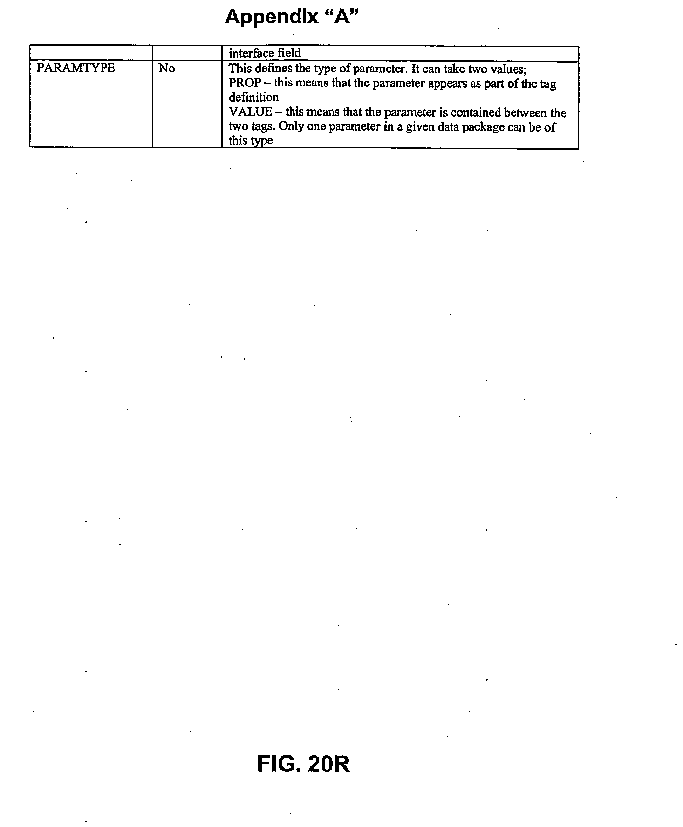

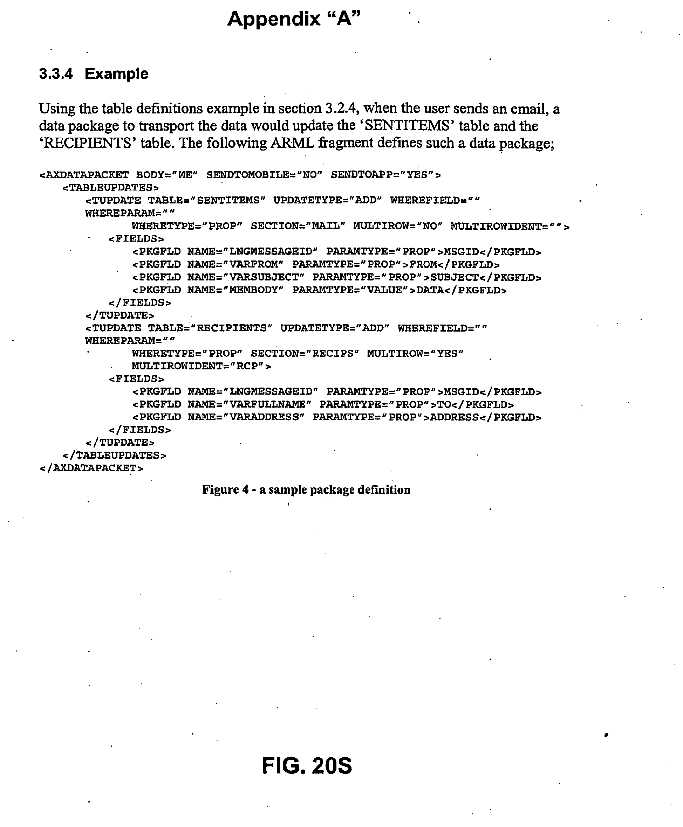

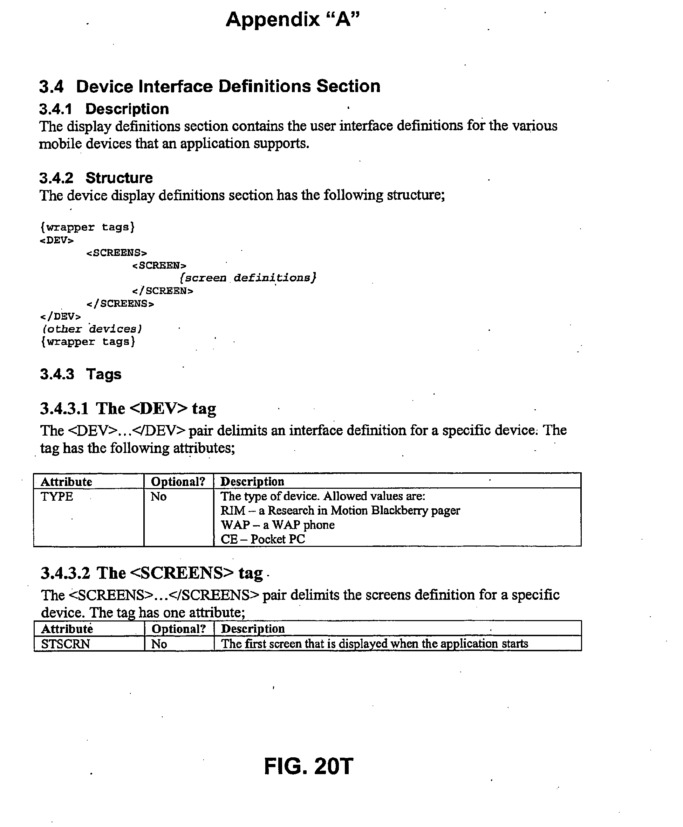

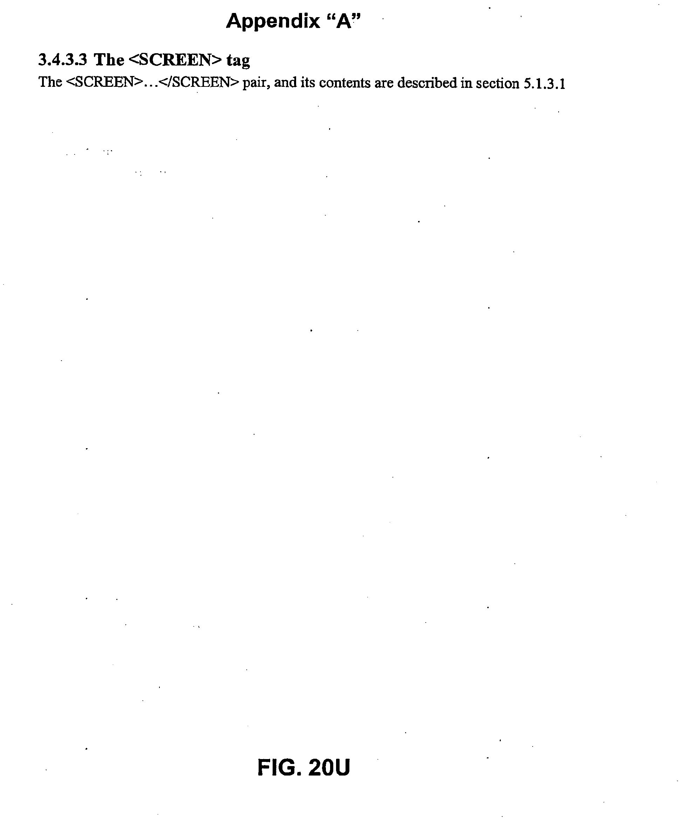

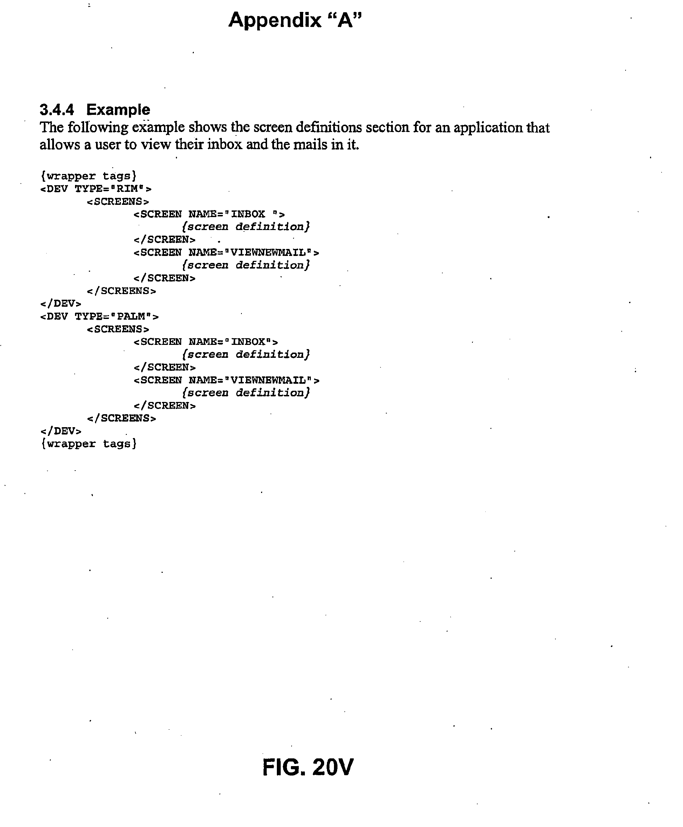

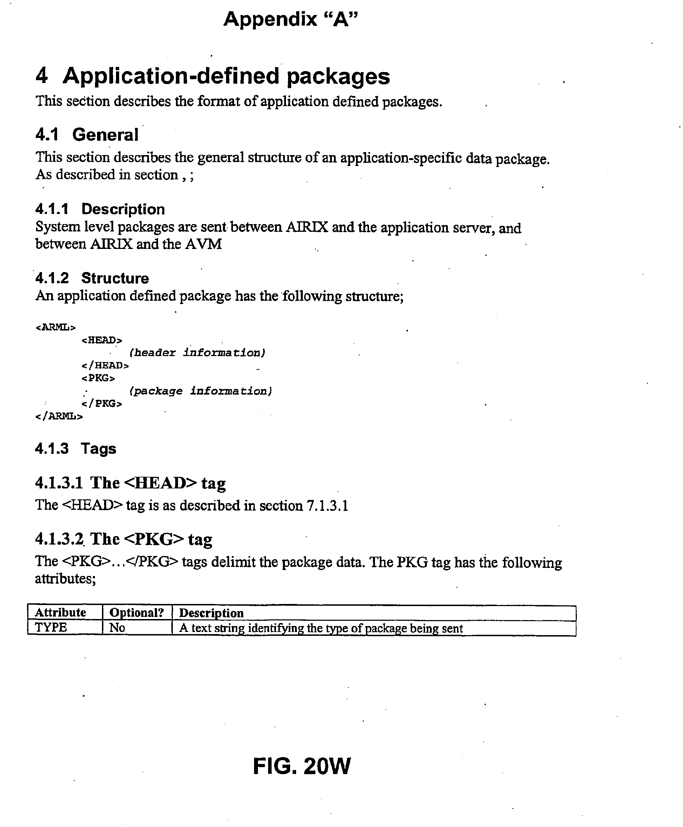

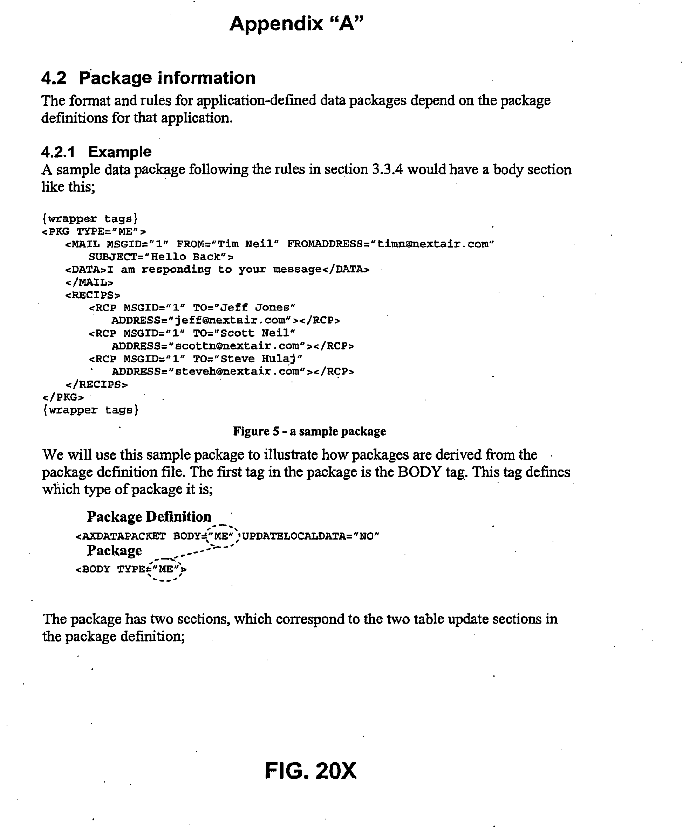

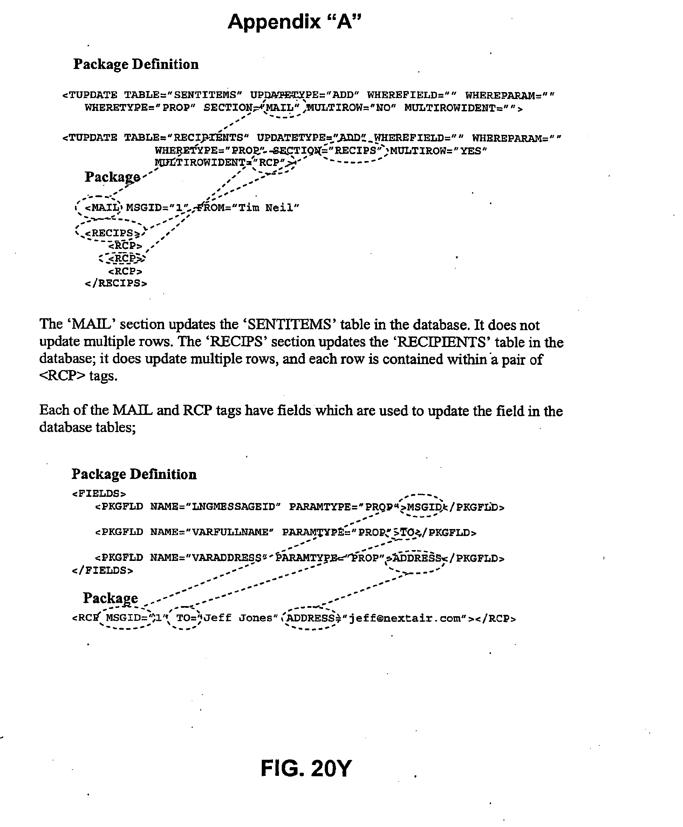

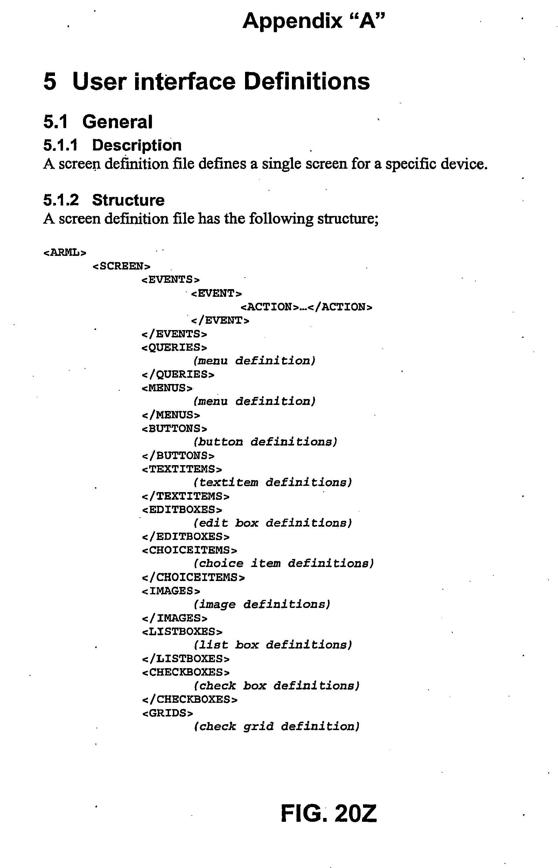

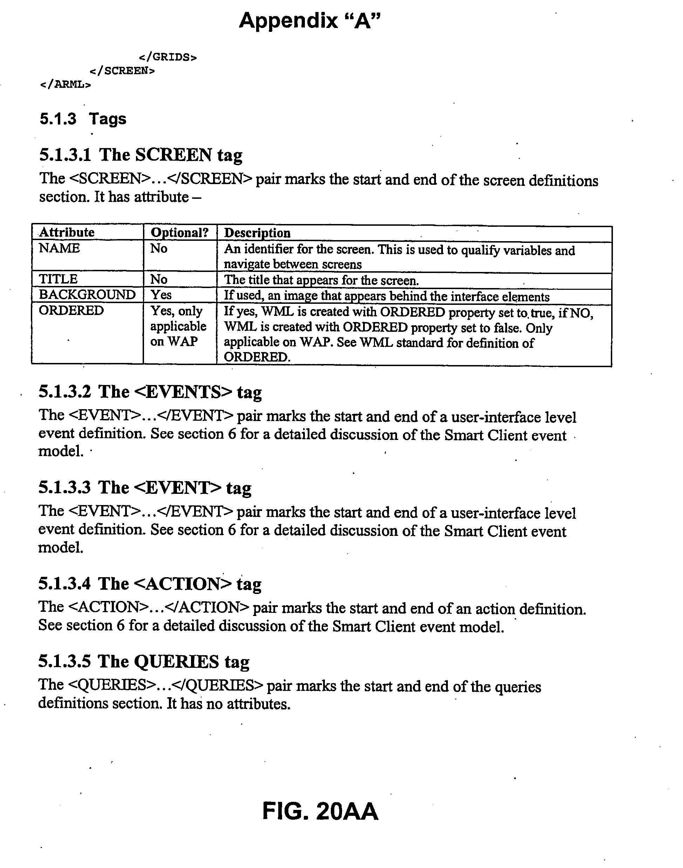

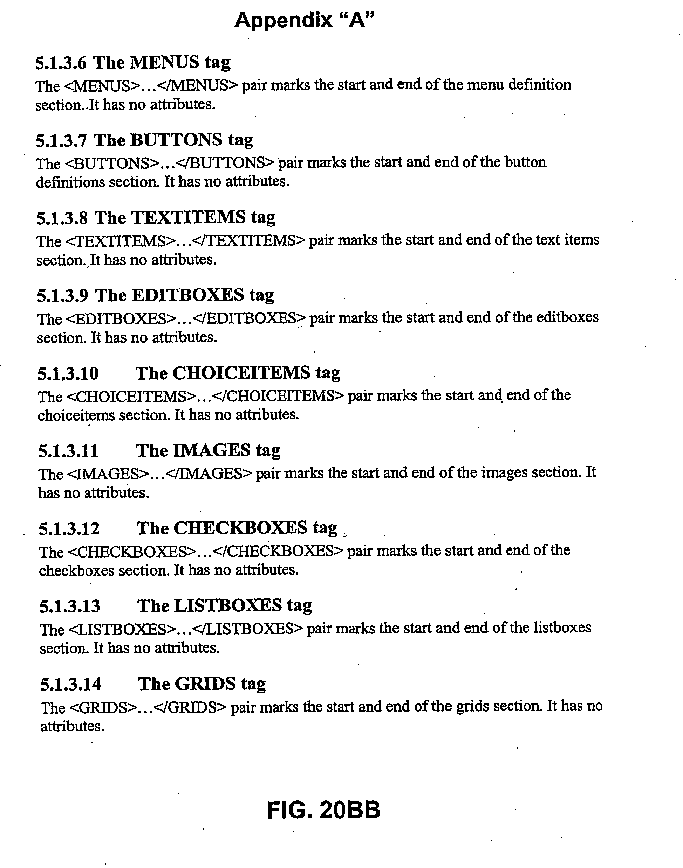

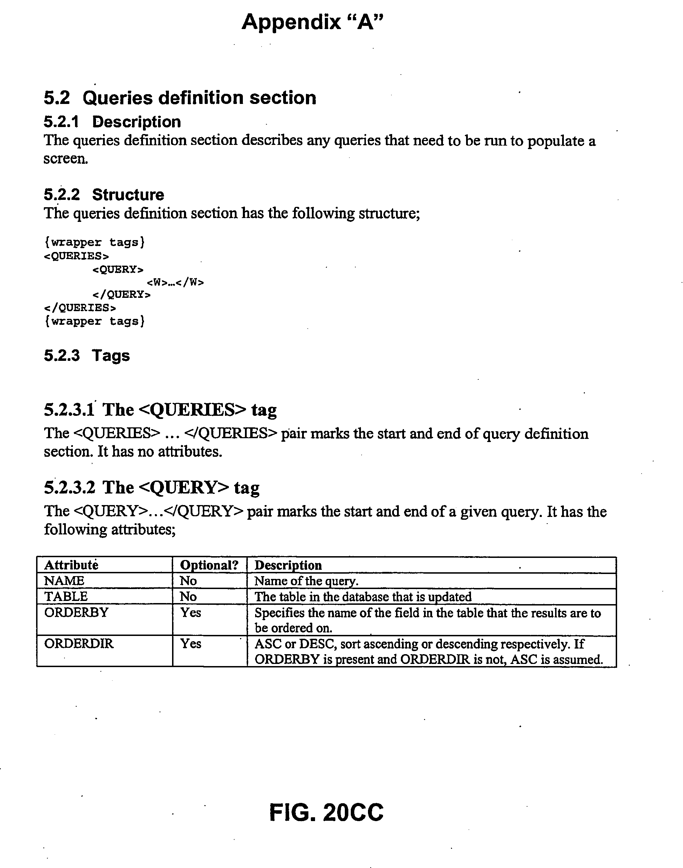

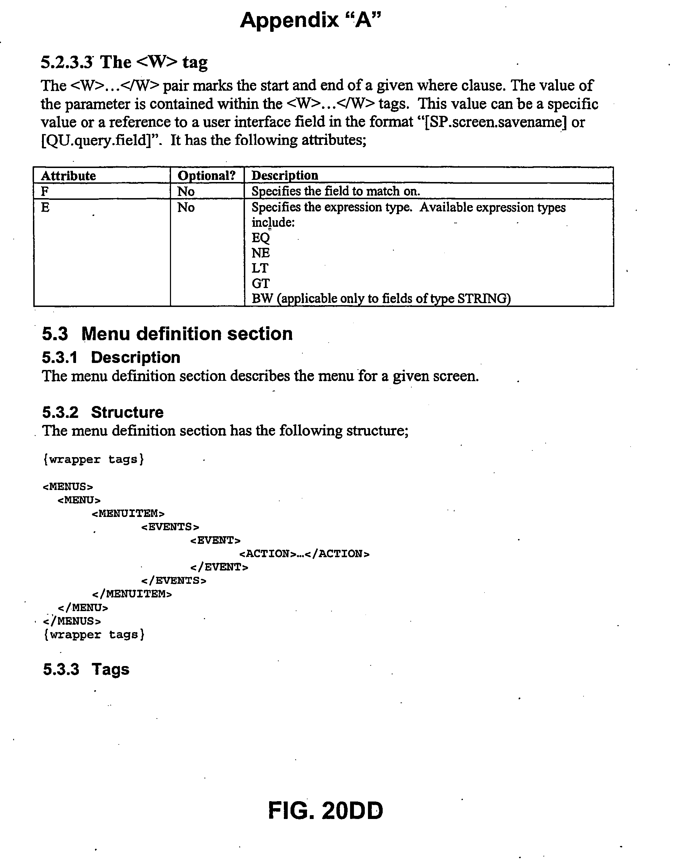

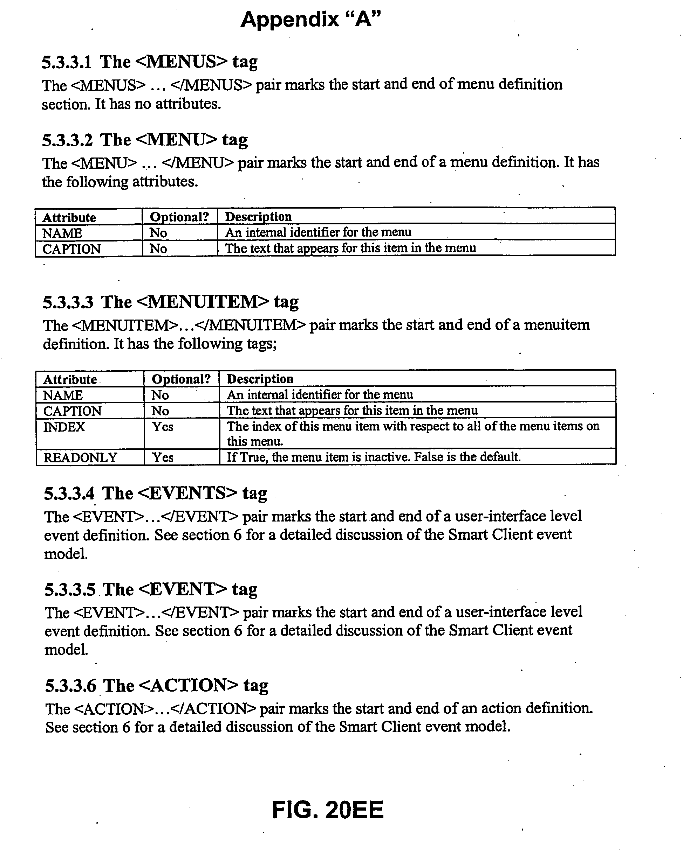

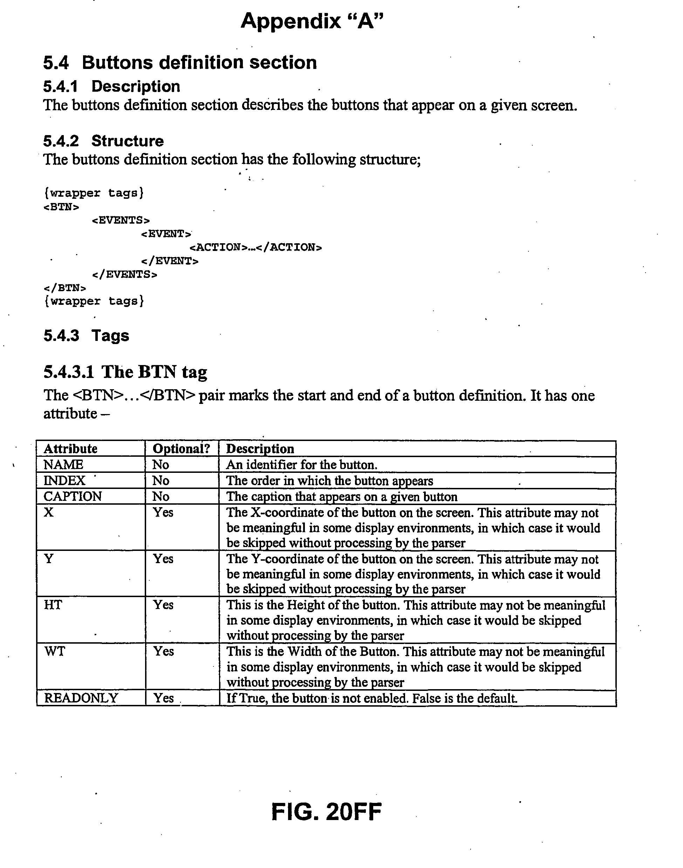

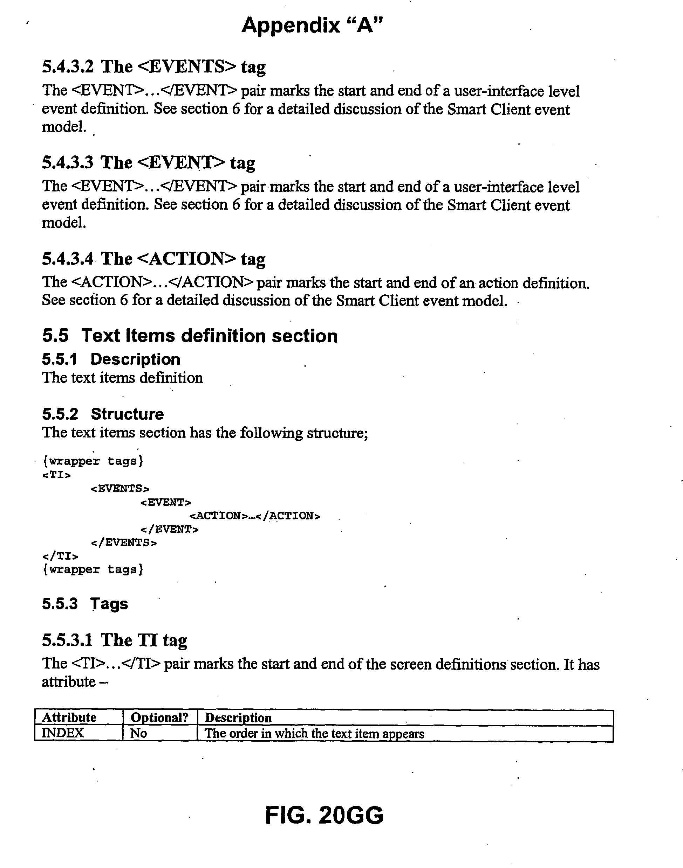

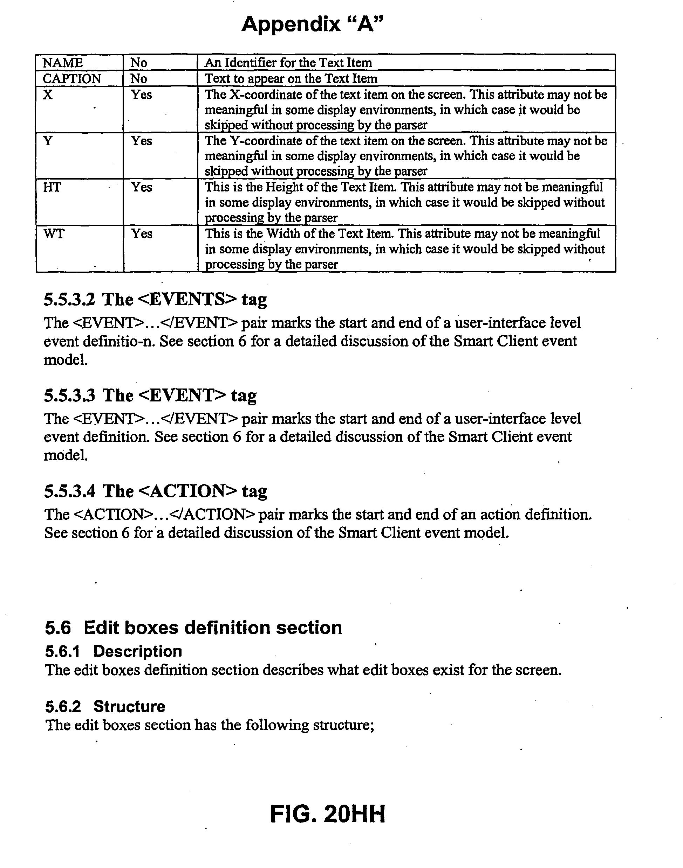

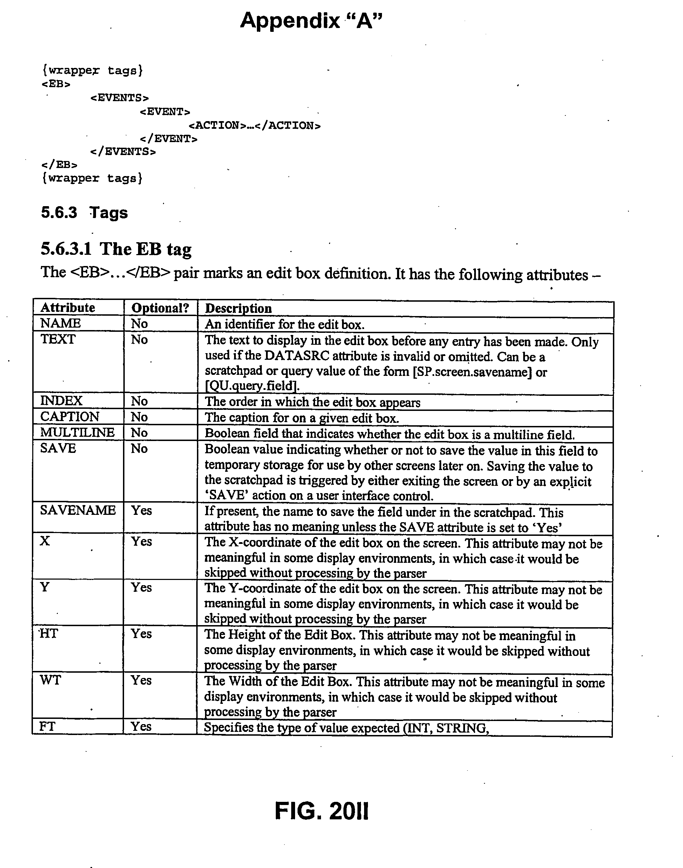

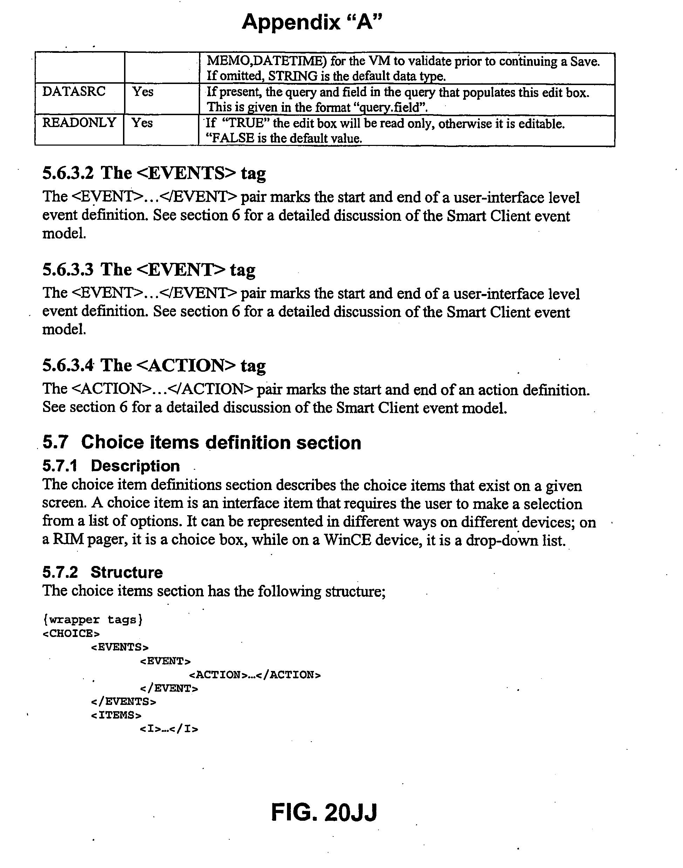

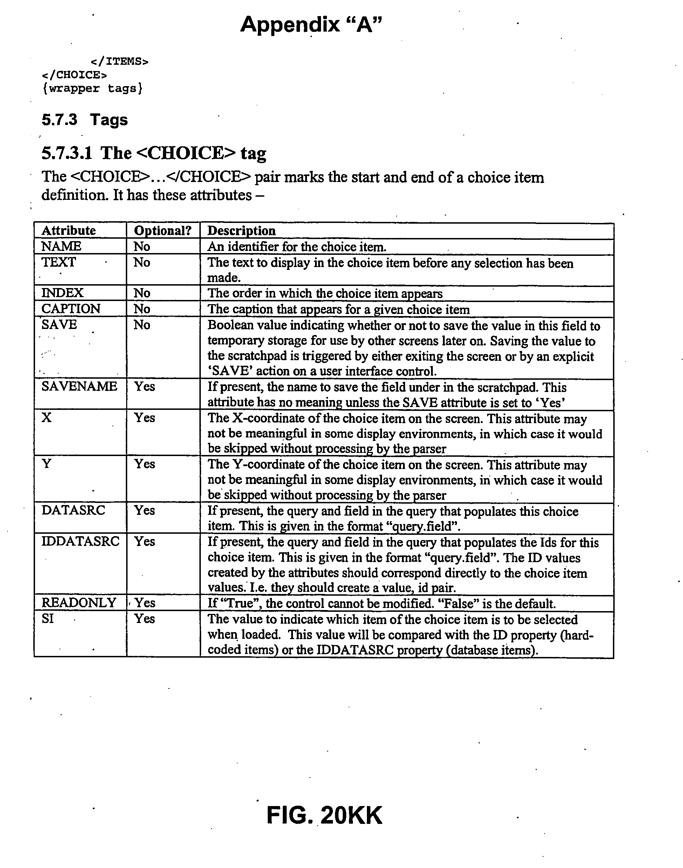

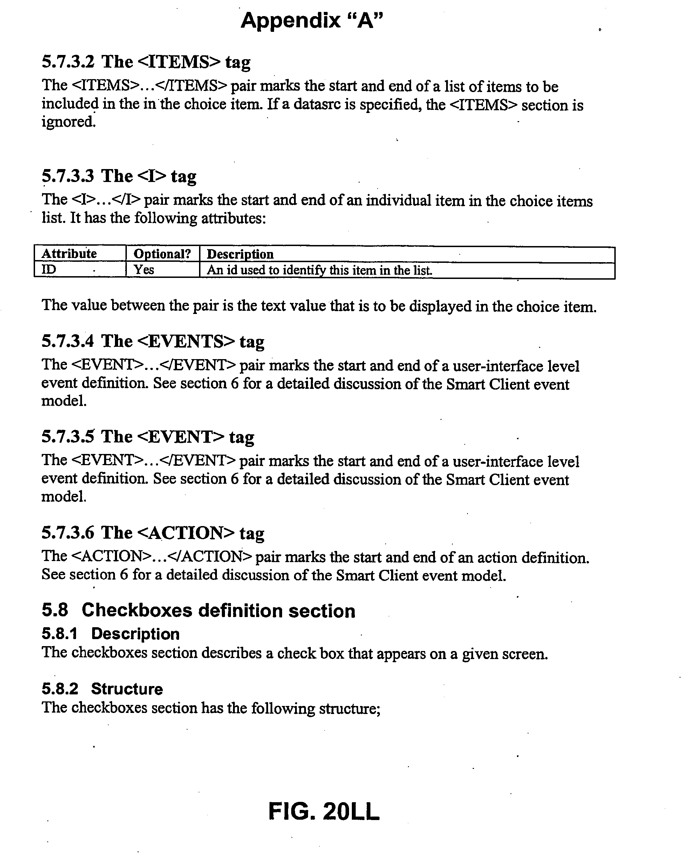

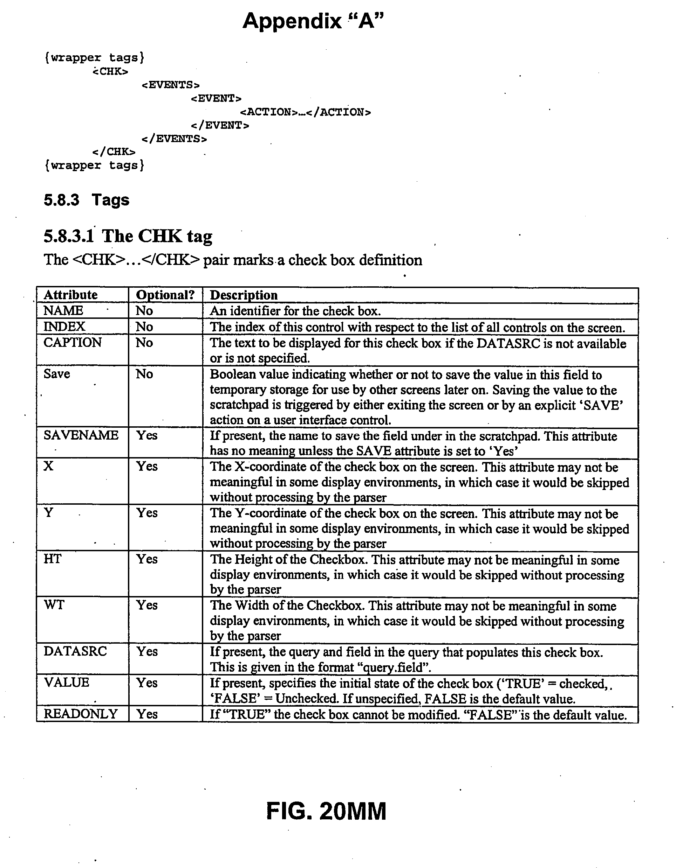

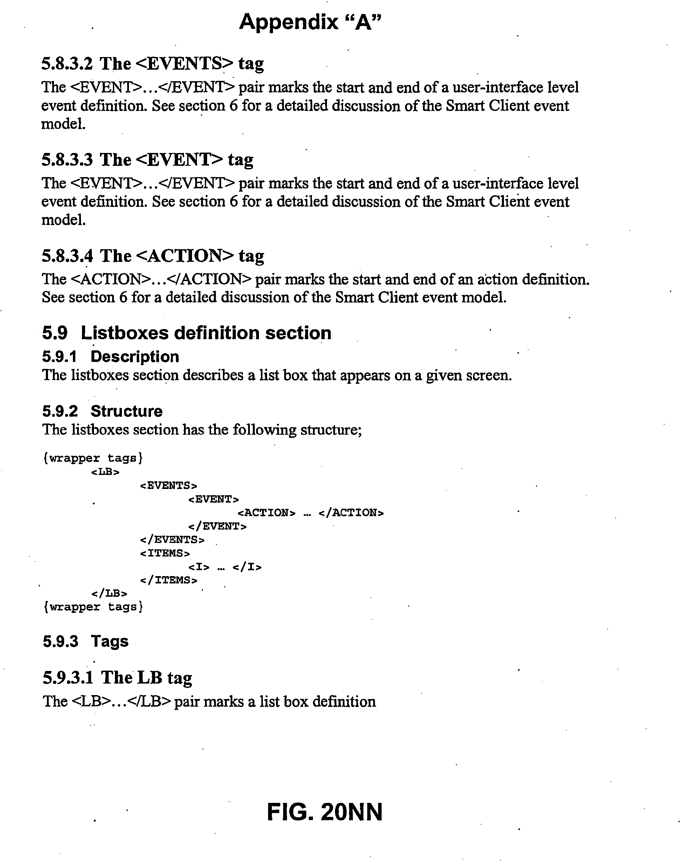

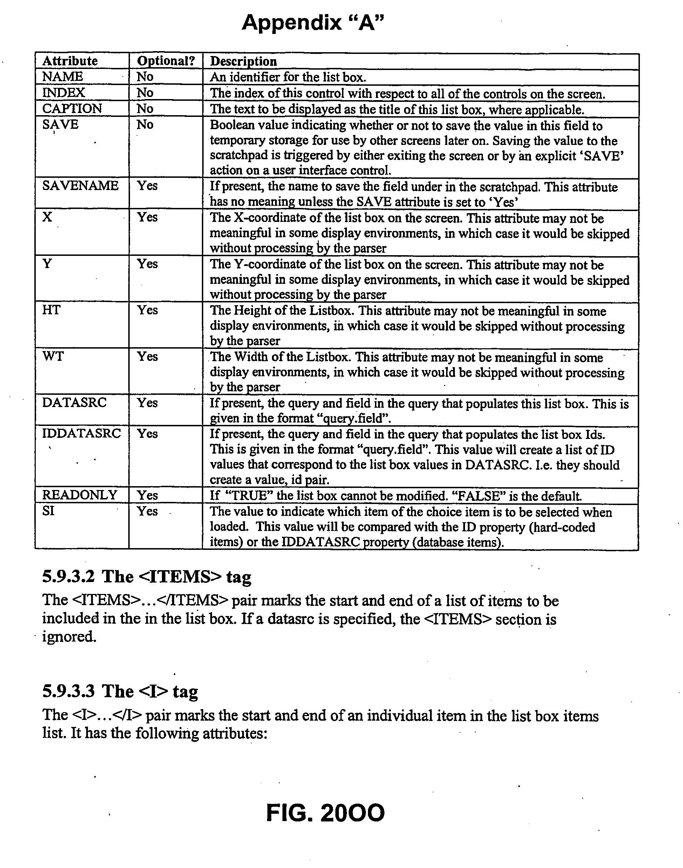

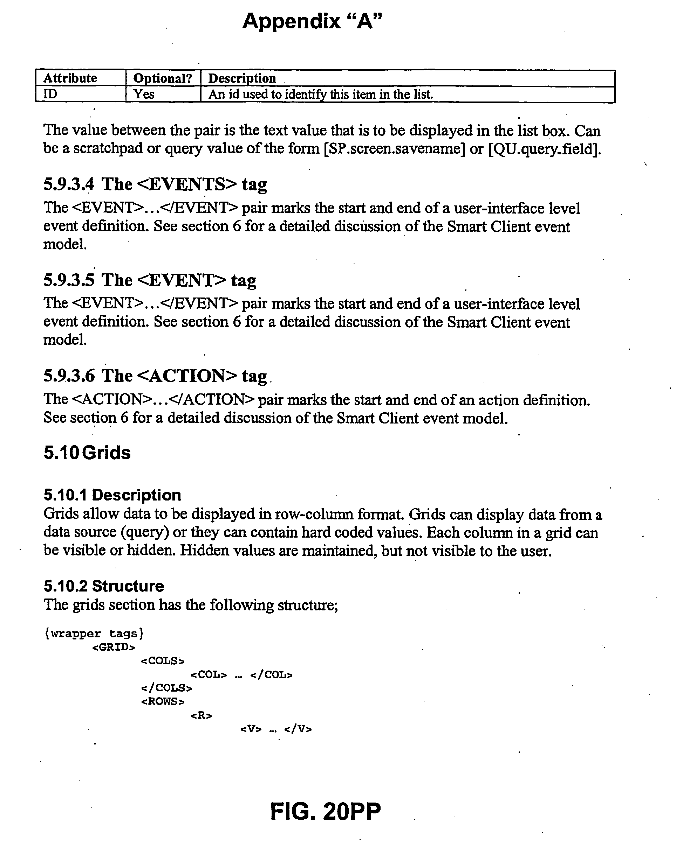

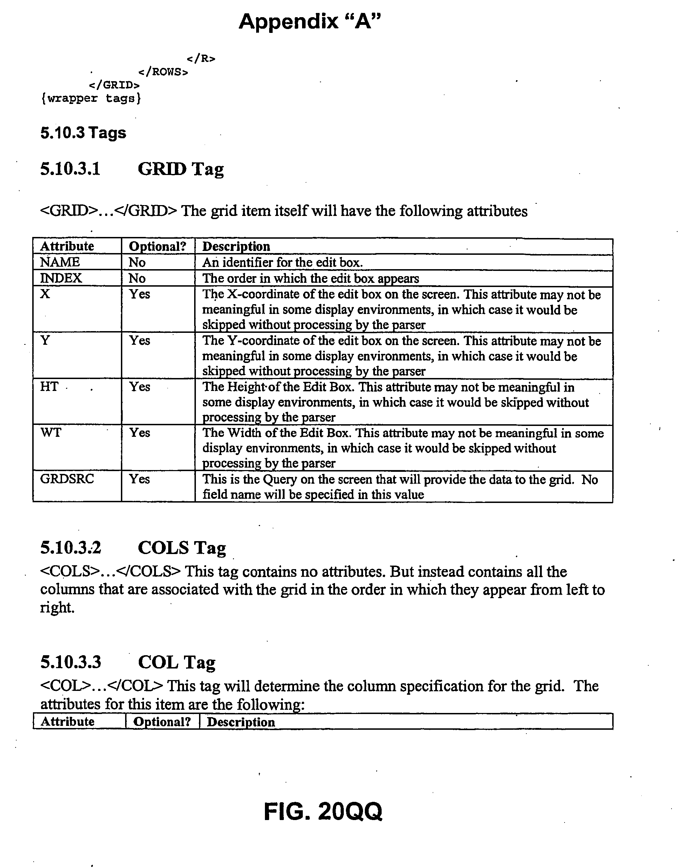

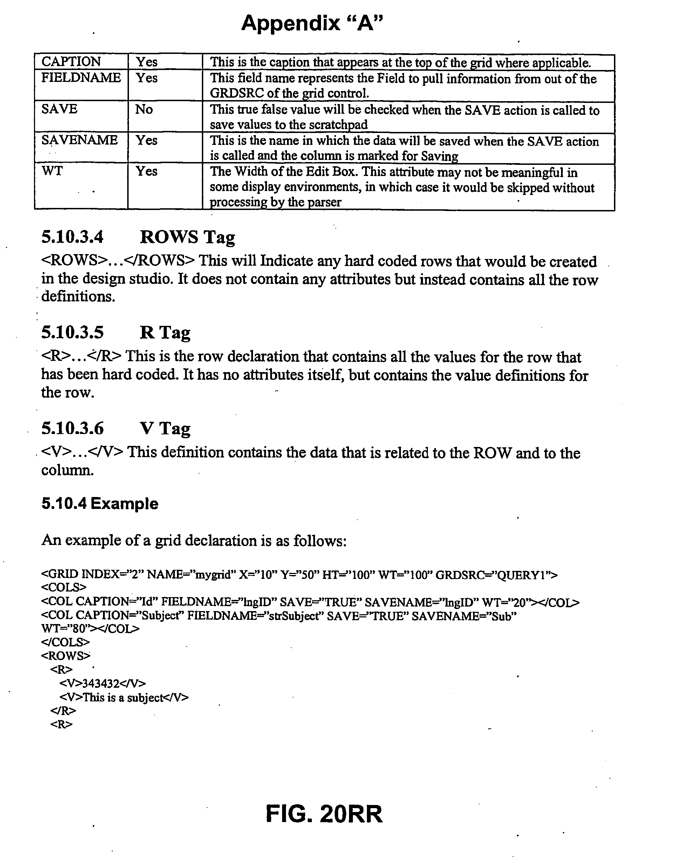

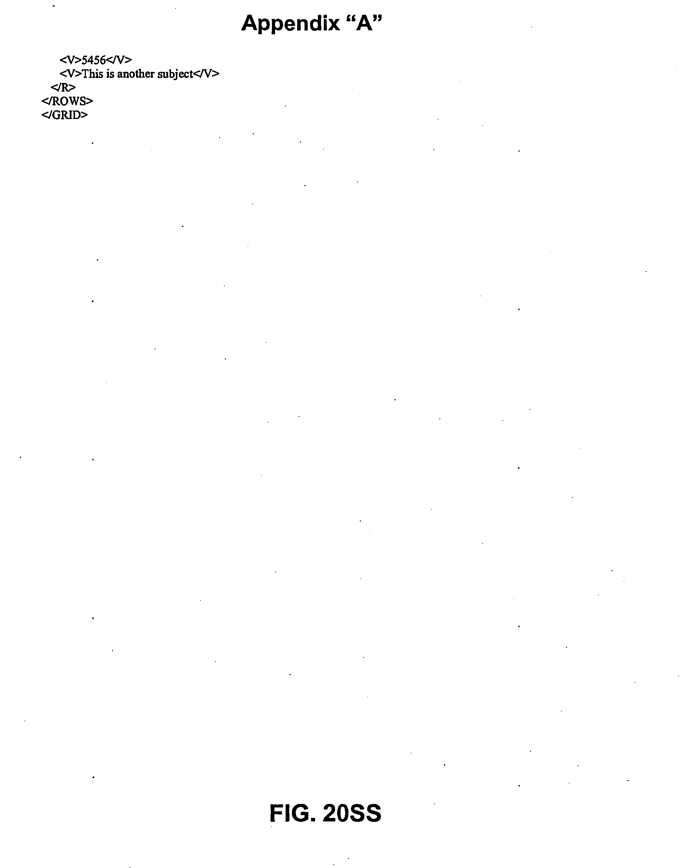

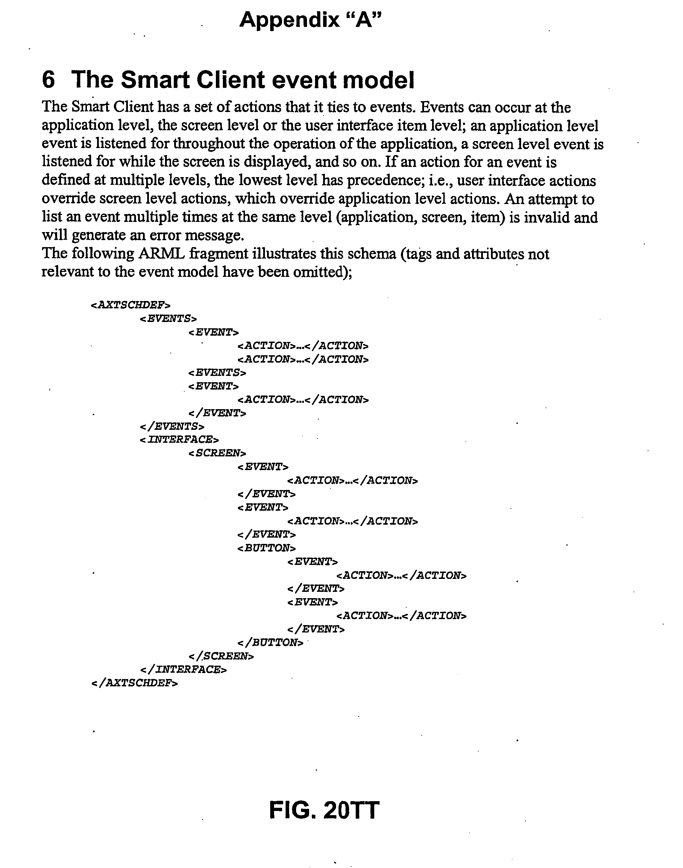

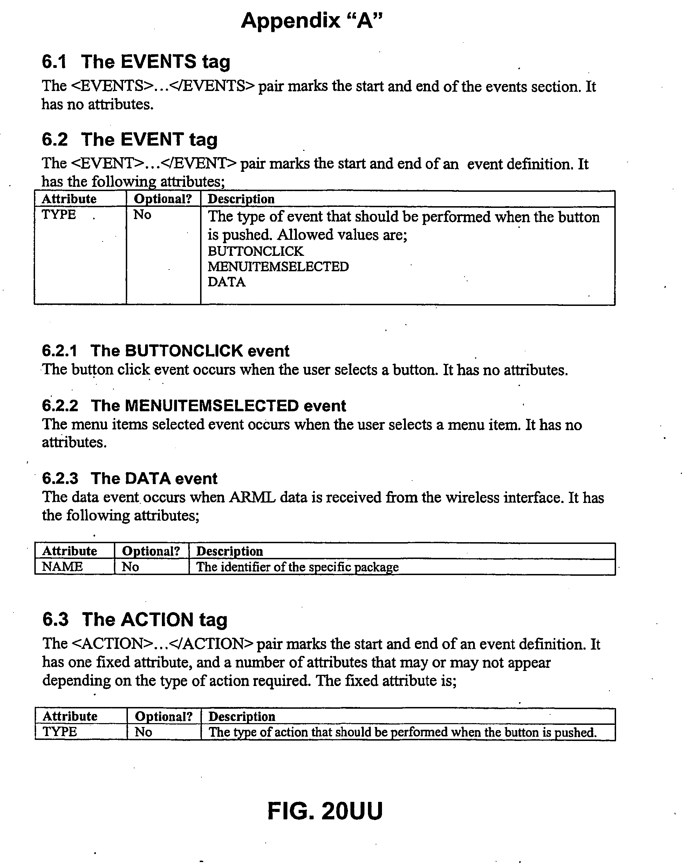

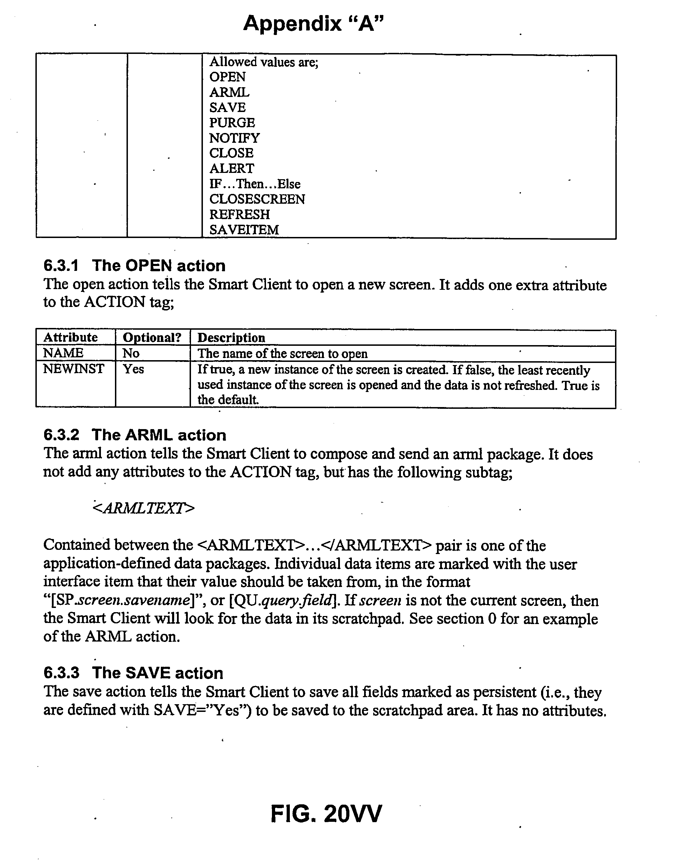

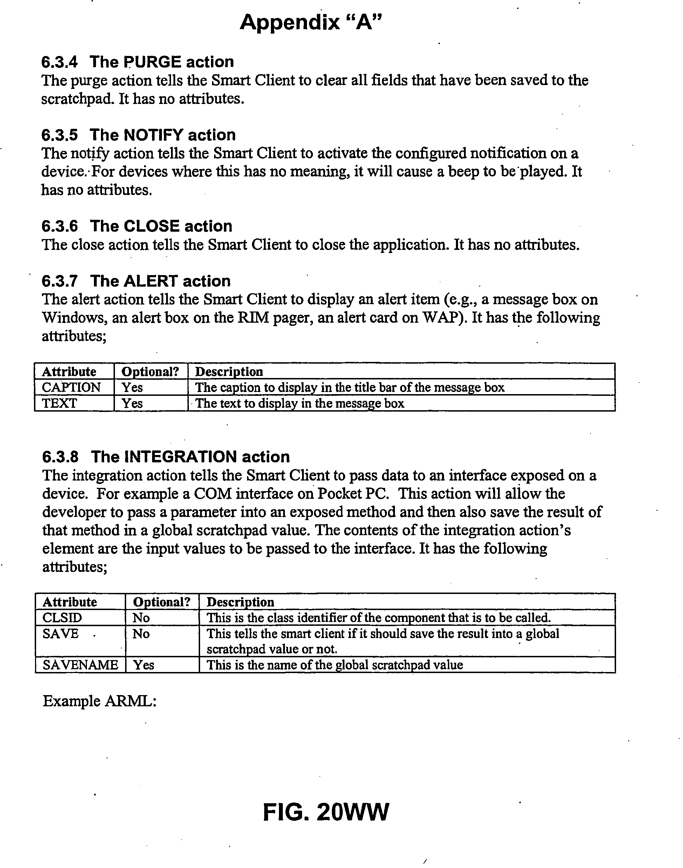

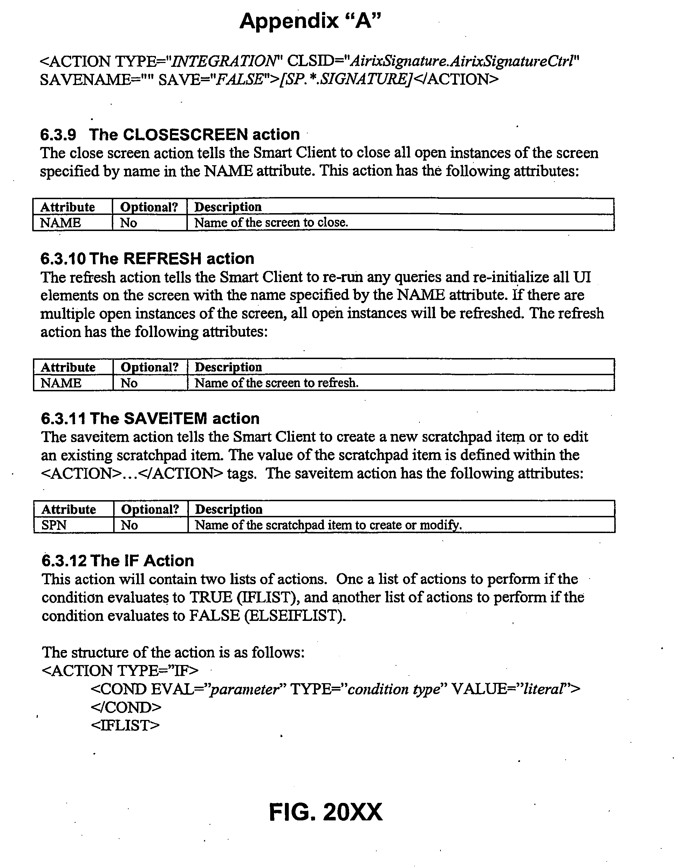

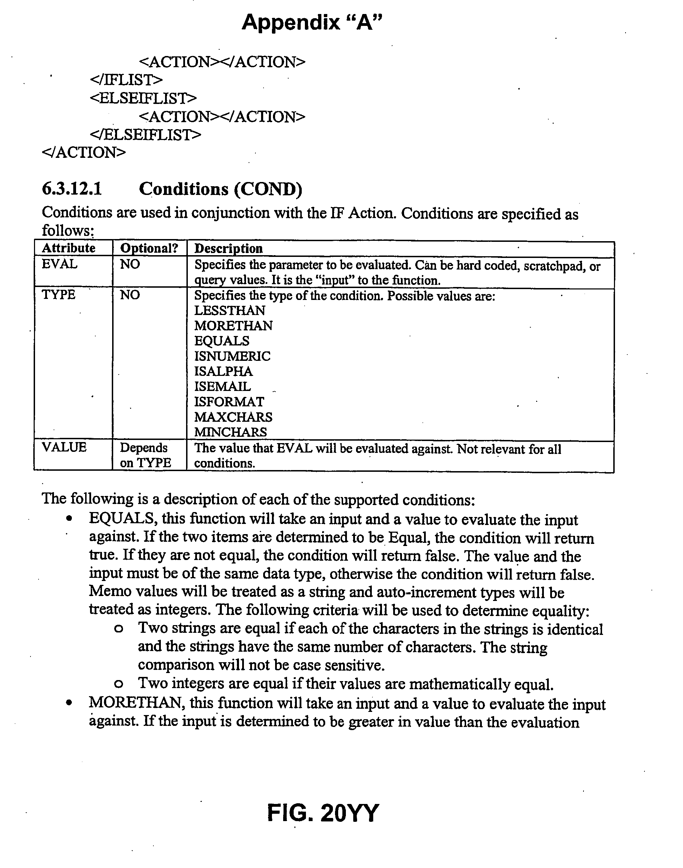

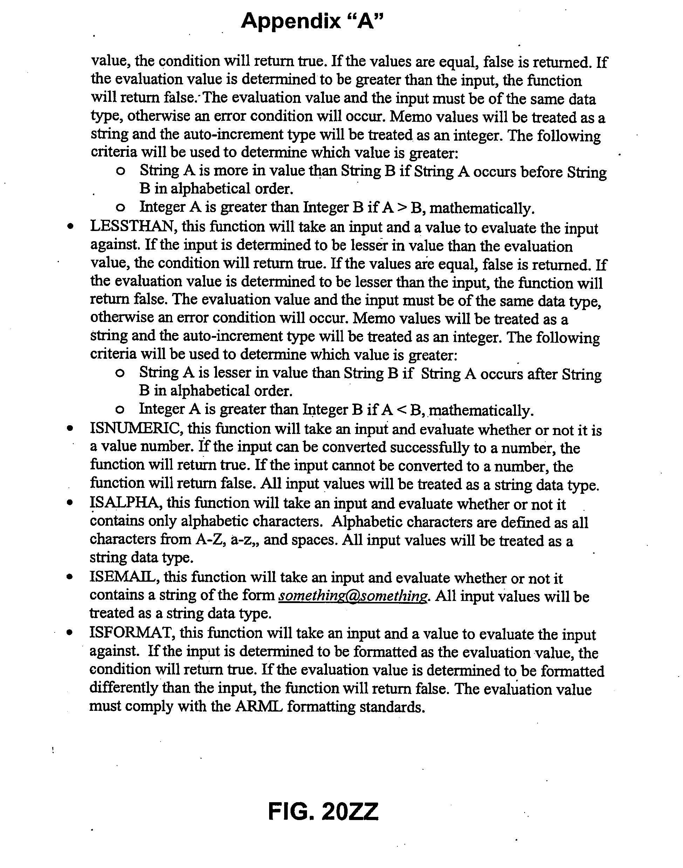

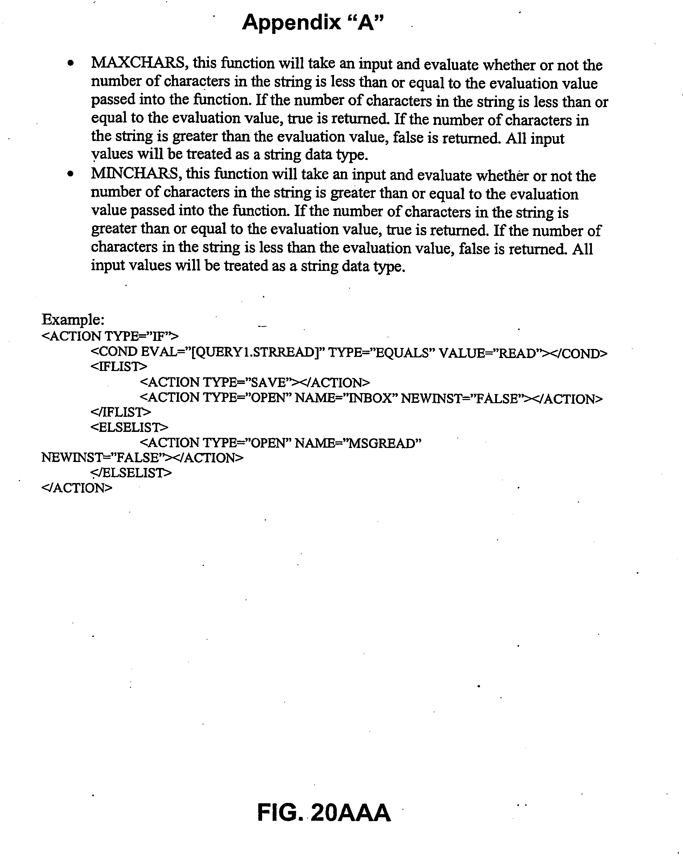

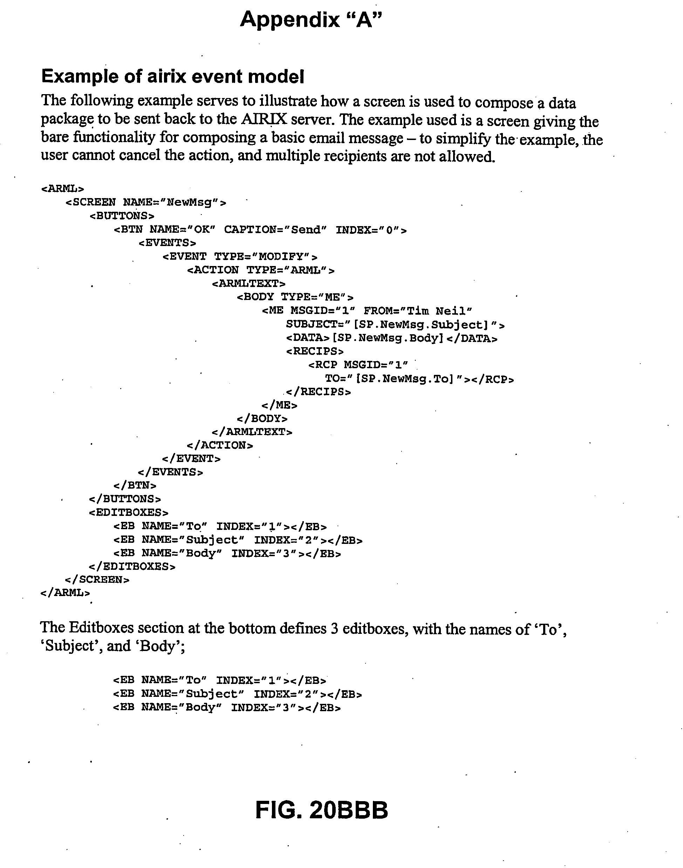

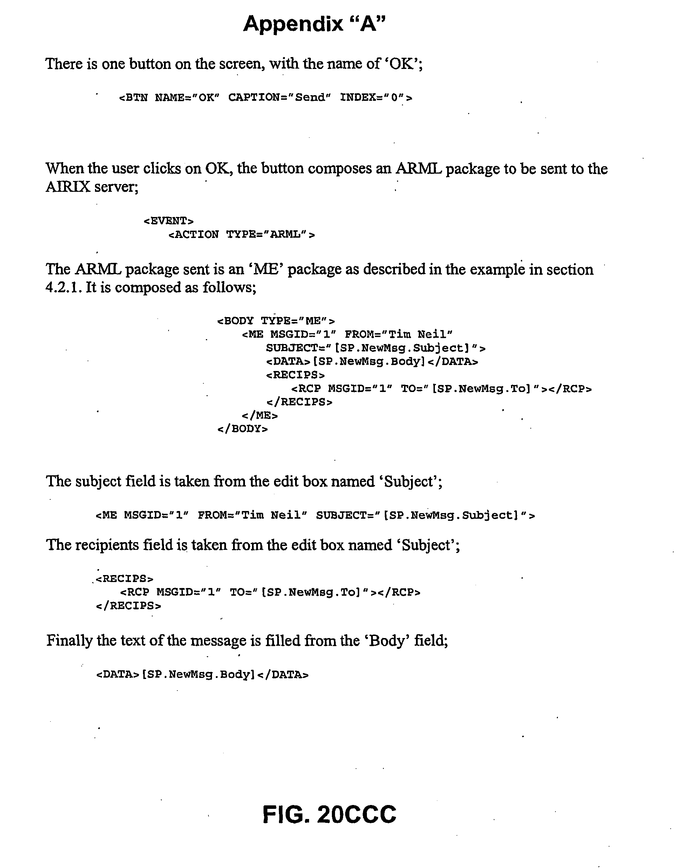

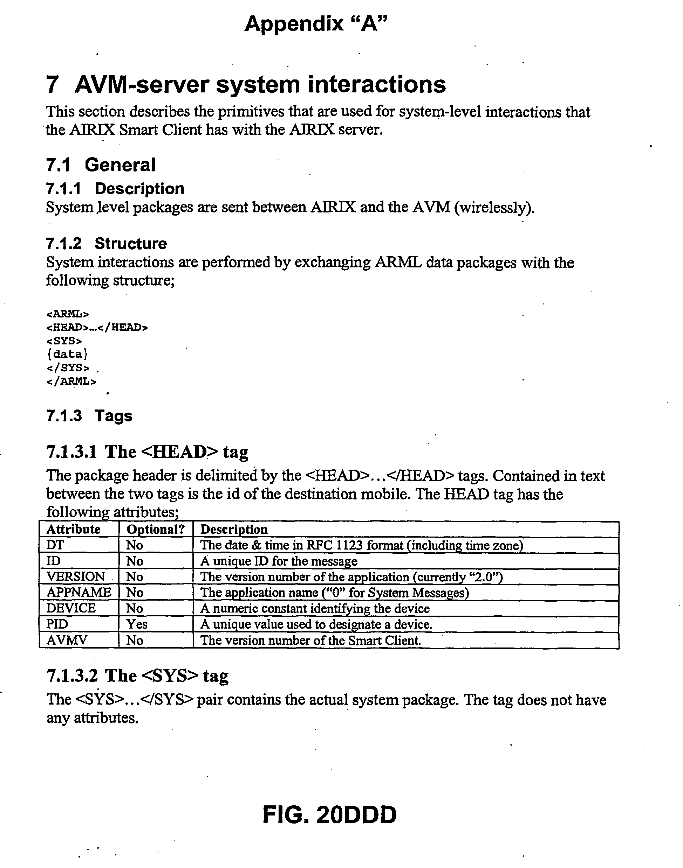

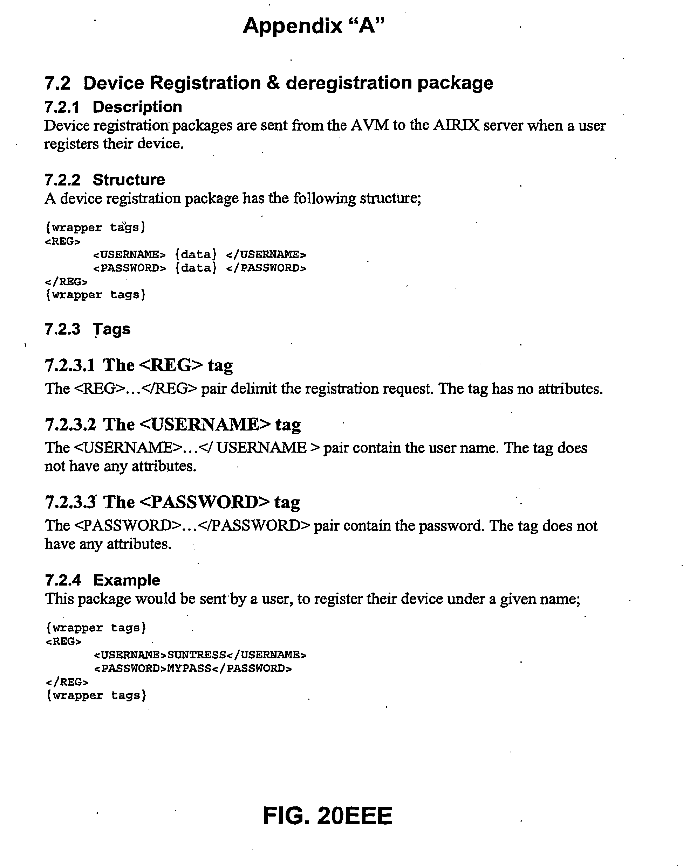

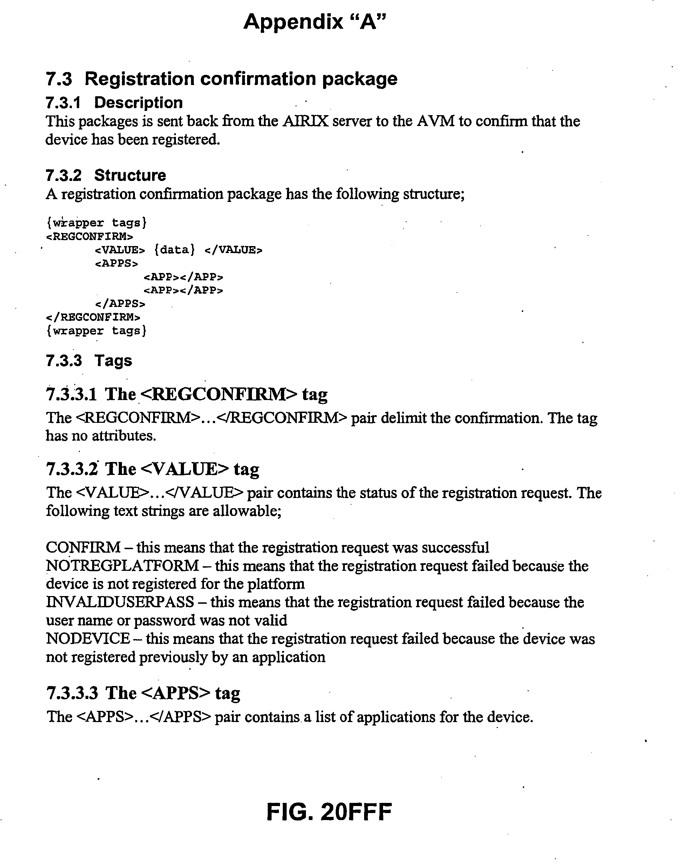

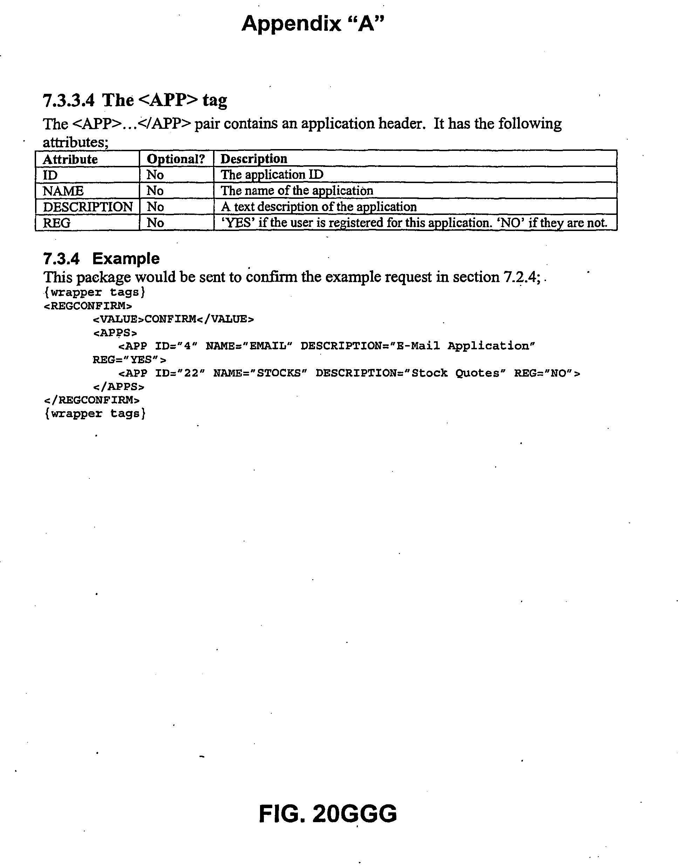

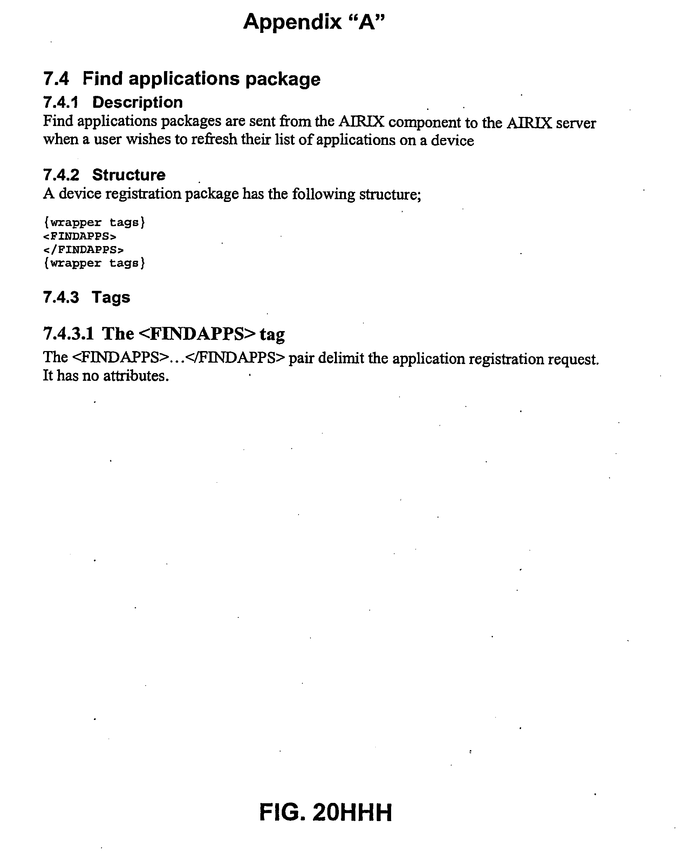

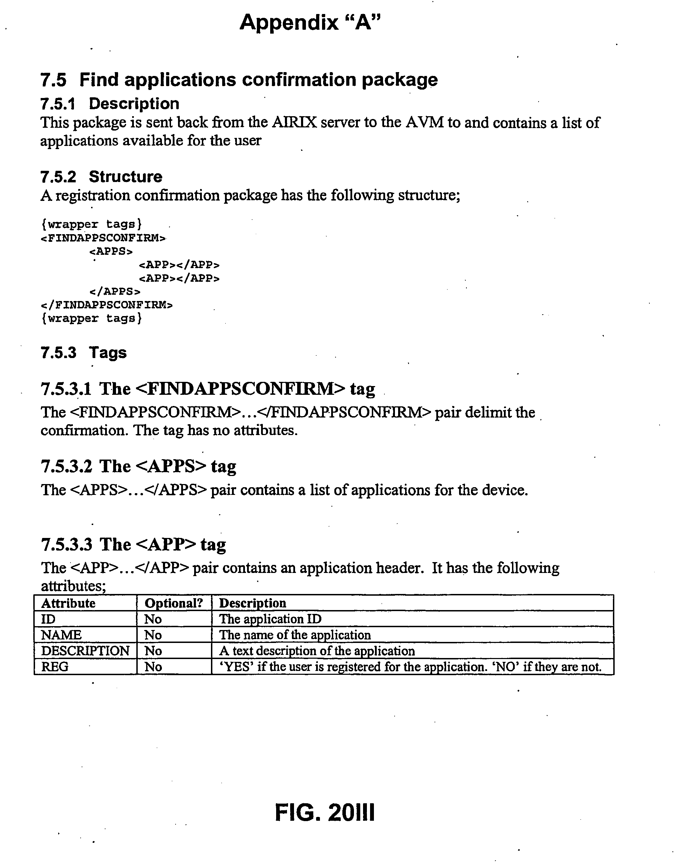

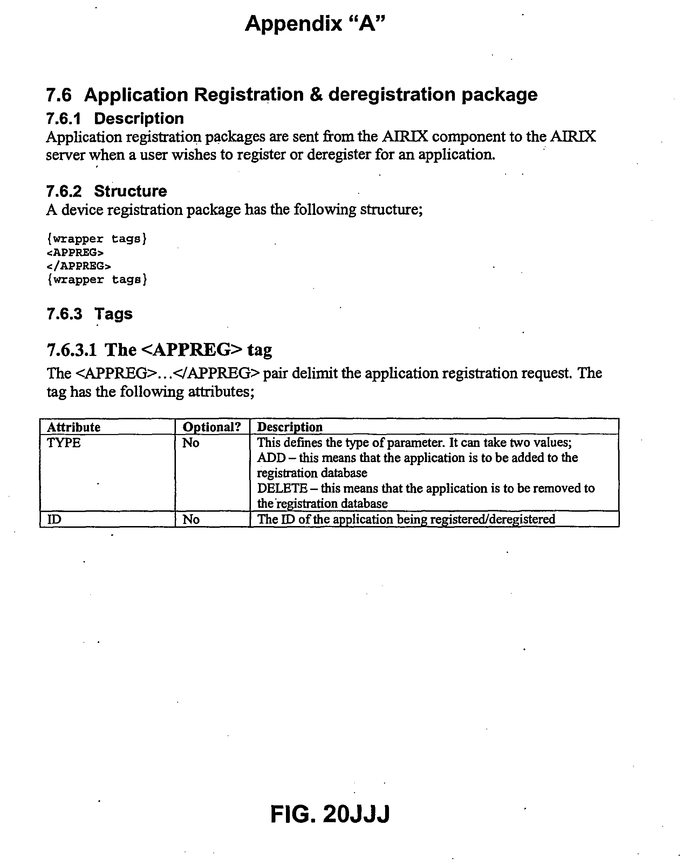

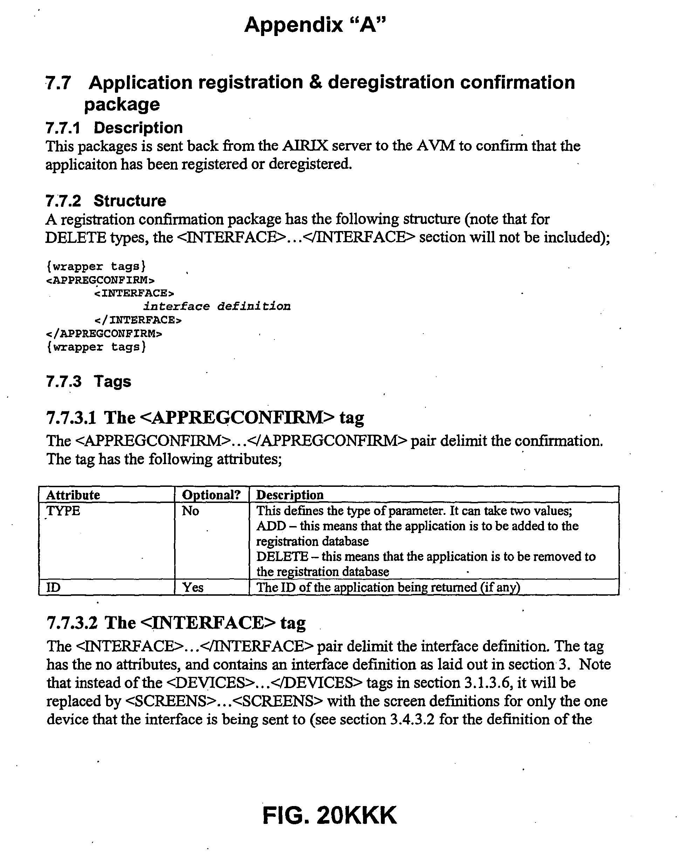

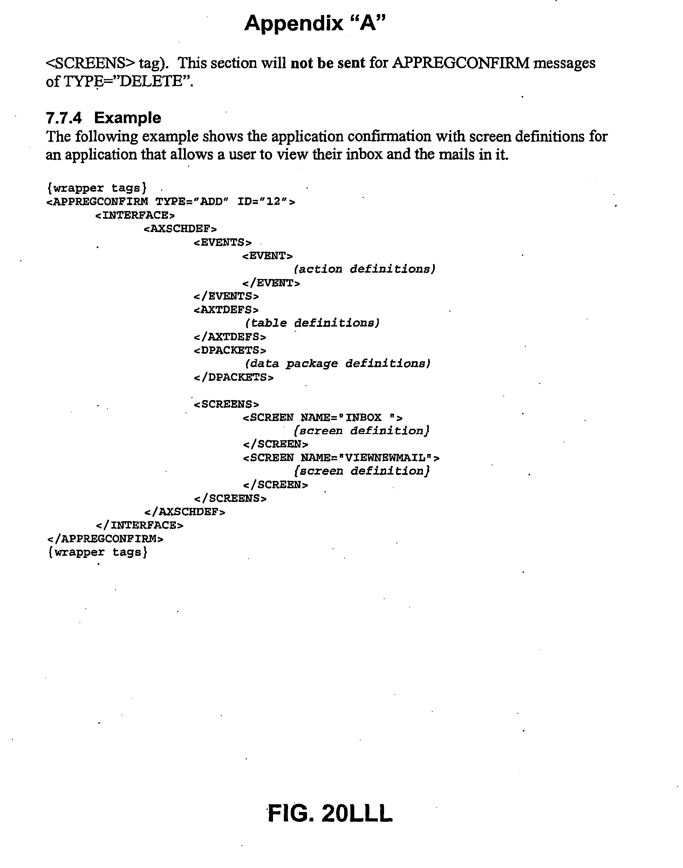

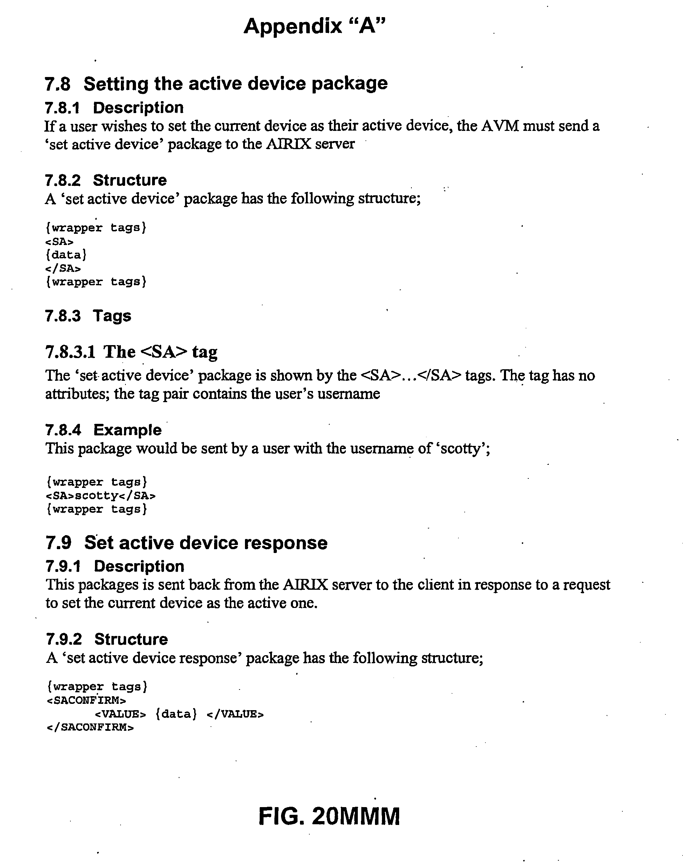

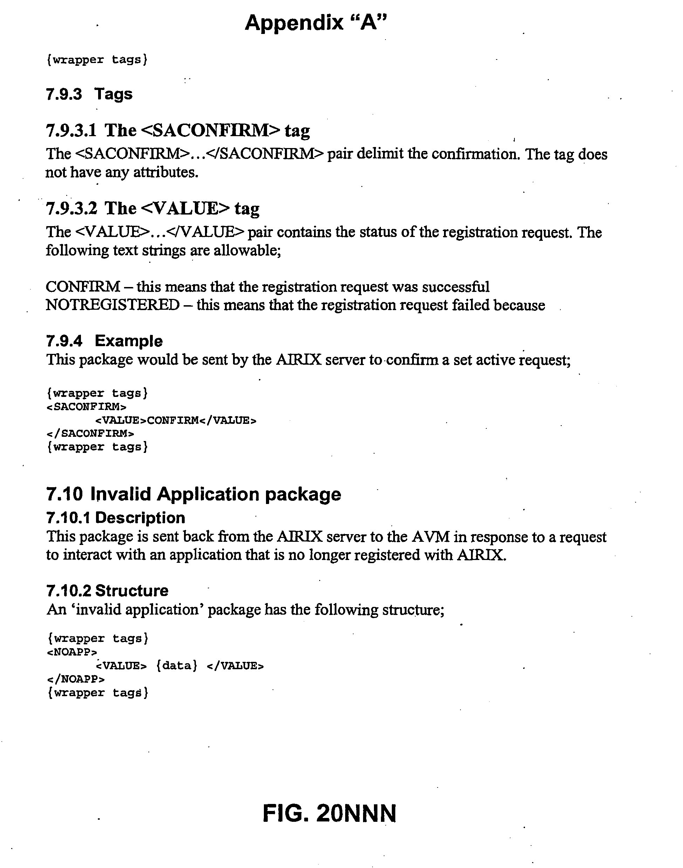

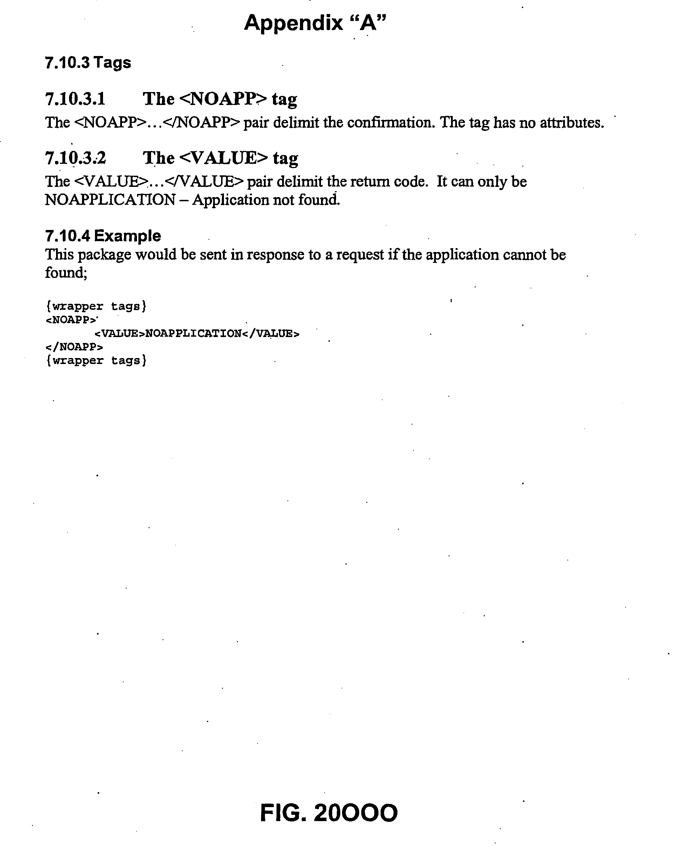

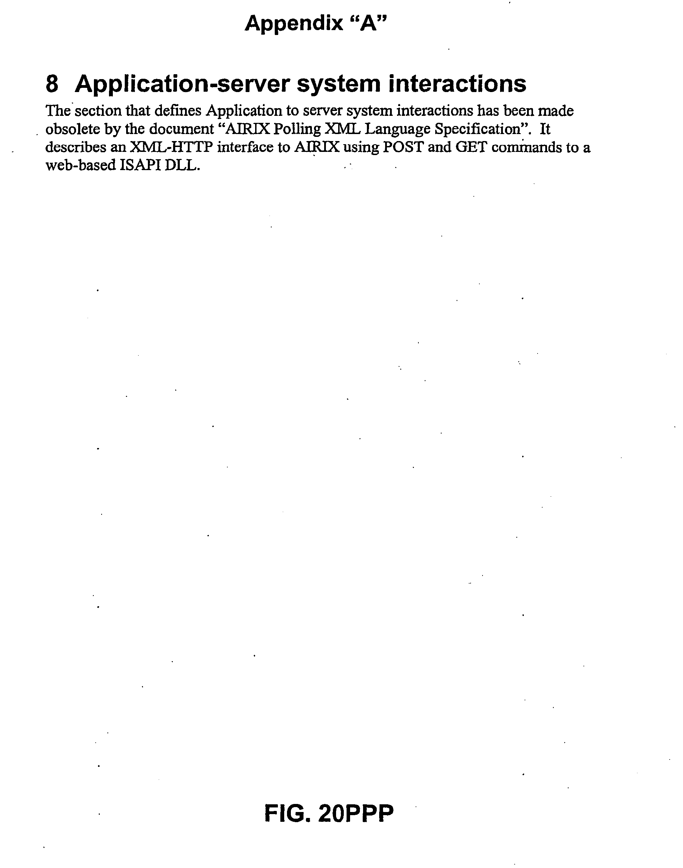

FIGS. 20A-20PPP contain Appendix "A" detailing example XML entities understood by the virtual machine software of the mobile device of FIG. 1.

### DETAILED DESCRIPTION

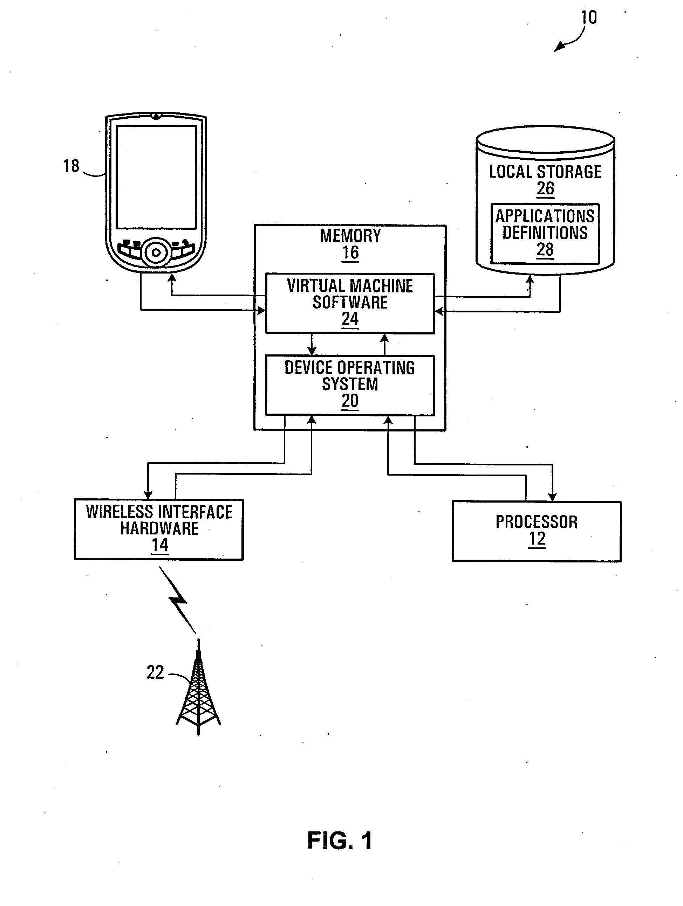

FIG. 1 illustrates a mobile device 10, exemplary of an embodiment of the present invention. Mobile device 10 may be any conventional mobile device, modified to function in manners exemplary of the present invention. As such, mobile device 10 includes a processor 12, in communication with a network interface 14, storage memory 16, and a user interface 18 typically including a keypad and/or touch-screen. Network interface 14 enables device 10 to transmit and receive data over a wireless network 22. Mobile device 10 may be, for example, be a Research in Motion (RIM) two-way paging device, a WinCE based device, a PalmOS device, a WAP enabled mobile telephone, or the like. Memory 16 of device 10 stores a mobile operating system such as the PalmOS, or WinCE operating system software 20. Operating system software 20 typically includes graphical user interface and network interface software having suitable application programmer interfaces ("API"s) for use by other applications executing at device 10.

Memory at device 10 further stores virtual machine software 24, exemplary of an embodiment of the present invention. Virtual machine software 24, when executed by mobile device 10 enables device 10 to present an interface for server side applications provided by a middleware server, described below. Specifically, virtual machine, software 24 interprets a text application definition file defining a user interface 18 controlling application functionality, and the display format (including display flow) at device 10 for a particular server-side application; the format of data to be exchanged over the wireless network for the application; and the format of data to be stored locally at device 10 for the application. Virtual machine software 24 uses operating system 20 and associated APIs to interact with device 10, in accordance with the received application definition file. In this way, device 10 may present interfaces for a variety of applications, stored at a server. From the perspective of operating system 20, virtual machine software 24 is viewed as another application resident at device 10. Moreover, multiple wireless devices each having a similar virtual machine software 24 may use a common server side application in combination with an application definition, to present a user interface and program flow specifically adapted for the device.

As such, and as will become apparent, the exemplary virtual machine software 24 is specifically adapted to work with the particular mobile device 10. Thus if device 10 is a RIM Blackberry device, virtual machine software 24 is a RIM. virtual machine. Similarly, if device 10 is a PalmOS or WinCE device, virtual machine software 24 would be a PalmOS or a WinCE virtual machine. As further illustrated in FIG. 1, virtual machine software 24 is capable of accessing local storage 26 at device 10.

As detailed below, an exemplary application definition file may be formed using a mark-up language, like XML. In accordance with an embodiment of the present invention, defined XML entities are understood by the virtual machine software 24. Defined XML entities are detailed in Appendix "A" hereto (the AIRIX Markup Language (ARML) Specification) and Appendix "A" of U.S. Patent Publication No. 2003/0060896. ARML is an XML markup language used in the present embodiment. The defined XML entities are interpreted by the virtual machine software 24, and may be used as building blocks to present server-side applications at mobile device 10, as detailed herein.

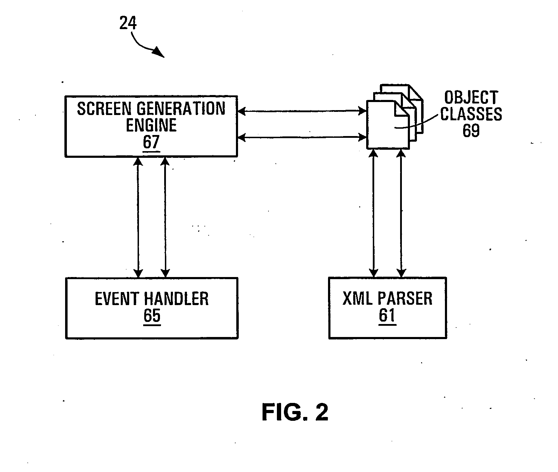

Specifically, as illustrated in FIG. 2, virtual machine software 24 includes a conventional XML parser 61; an event handler 65; a screen generation engine 67; and object classes 69 corresponding to XML entities supported by the virtual machine software 24, and possibly contained within an application definition file 28. Supported XML entities are detailed in Appendix "A" hereto. A person of ordinary skill will readily appreciate that those XML entities identified in Appendix "A" are exemplary only, and may be extended, or shortened as desired.

XML parser 61 may be formed in accordance with the Document Object Model, or DOM, available at www.w3.org/DOM/, which is hereby incorporated by reference hereinto,. Parser 61 enables virtual machine software 24 to read an application definition file. Using the parser, the virtual machine software 24 may form a binary representation of the application definition file for storage at the mobile device, thereby eliminating the need to parse text each time an application is used. Parser 61 may convert each XML tag contained in the application definition file, and its associated data to tokens, for later processing. As will become apparent, this may avoid the need to repeatedly parse the text of an application definition file.

Screen generation engine 67 displays initial and subsequent screens at the mobile device, in accordance with an application definition 28, as detailed below.

Event handler 65, of virtual machine software 24 allows device 10 under control of virtual machine software 24 to react to certain external events. Example events include user interaction with presented screens or display elements, incoming messages received from a wireless network, or the like.

Object classes 69 also form part of virtual machine 24 and define objects that allow device 10 to process each of the supported XML entities at the mobile device. Each of object classes 69 includes attributes used to store parameters defined by the XML file, and functions allowing the XML entity to be processed at the mobile device, as detailed in Appendix "A", for each supported XML entity. So, as should be apparent, supported XML entities are extensible. Virtual machine software 24 may be expanded to support XML entities not detailed in Appendix "A". Corresponding object classes could be added to virtual machine software 24.

As detailed below, upon invocation of a particular application at mobile device 10, the virtual machine software 24 presents an initial screen based on the contents of the application definition 28 for the application. Screen elements are created by screen generation engine 67 by creating instances of corresponding object classes for defined elements, as contained within object classes 69. The object instances are created using attributes contained in the application definition file 28. Thereafter the event handler 65 of the virtual machine software 24 reacts to events for the application. Again, the event handler consults the contents of the application definition file for the application in order to properly react to events. Events may be reacted to by creating instances of associated "action" objects, from object classes 69 of virtual machine software 24.

Similarly, object classes 69 of virtual machine software 24 further include object classes corresponding to data tables and network transactions defined in the Table Definition and Package Definition sections of Appendix "A". At run time, instances of object classes corresponding to these classes are created and populated with parameters contained within application definition file, as required.

Using this general description, persons of ordinary skill in the art will be able to form virtual machine software 24 for any particular device. Typically, virtual machine software 24 may be formed using conventional object oriented programming techniques, and existing device libraries and APIs, as to function as detailed herein. As will be appreciated, the particular format of screen generation engine 67, object classes 69 will vary depending on the type of virtual machine software, its operating system and API available at the device. Once formed, a machine executable version of virtual machine software 24 may be loaded and stored at a mobile device, using conventional techniques. It can be embedded in ROM, loaded into RAM over a network, or from a machine readable medium.

Although, in the preferred embodiment the virtual machine software 24 and software forming object classes 29 are formed using object oriented structures, persons of ordinary skill will readily appreciate that other approaches could be used to form suitable virtual machine software. For example, object classes 69 forming part of the virtual machine could be replaced by equivalent functions, data structures or subroutines formed using a conventional (i.e. non-object oriented) programming environment. Operation of virtual machine software 24 under control of an application definition containing various XML definitions exemplified in Appendix "A" is further detailed below.

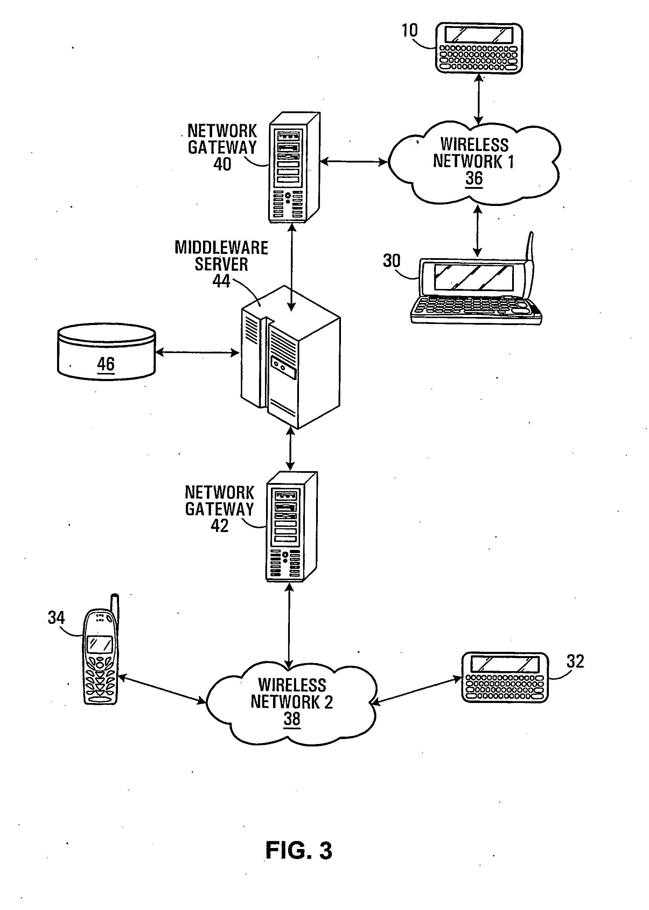

FIG. 3 illustrates the operating environment for a mobile device 10. Further example mobile devices 30, 32 and 34 are also illustrated in FIG. 3. These mobile devices 30, 32 and 34 are similar to device 10 and also store and execute virtual machine software exemplary of an embodiment of the present invention.

Virtual machine software like that stored at device 10, executes on each mobile device 10, 30, 32, 34, and communicates with a middleware server 44 by way of example wireless networks 36 and 38 and network gateways 40 and 42. Example gateways 40 and 42 are generally available as a service for those people wishing to have data access to wireless networks. Wireless networks 36 and 38 are further connected to one or more computer data networks, such as the Internet and/or private data networks by way of gateway 40 or 42. As will be appreciated, the invention may work with many types of wireless networks. Middleware server 44 is in turn in communication with a data network, that is in communication with wireless network 36 and 38. The communication used for such communication is via TCP/IP over an HTTP transport. As could be appreciated, other network protocols such as X.25 or SNA could equally be used for this purpose.

At least three categories of communication between middleware server 44 and devices 10, 30, 32, and 34 exist. First, virtual machine software 24 at each device may query middleware server 44 for a list of applications that a user of an associated mobile device 10, 30, 32 or 34 can make use of. If a user decides to use a particular application, device 10, 30, 32 or 34 can download a text description, in the form of an application definition file, for the application from the middleware server 44 over its wireless interface. As noted, the text description is preferably formatted using XML. Second, middleware server 44 may notify one or more of devices 10, 30, 32 and 34 of the availability of new applications or updated versions of existing applications at the application server so that a user of the mobile device(s) may decide whether or not it is desired to download a corresponding (new or updated) application definition file from the middleware server 44 so that the new or updated application may be used remotely. Third, virtual machine software 24 may send, receive, present, and locally store data related to the execution of applications, or its own internal operations. The format of exchanged data for each application is defined by an associated application definition file. Again, the exchanged data is formatted using XML, in accordance with the application definition file. As will become apparent, it is the second category of communication which is the focus of the present application.

Middleware server 44 stores text application definition files for those applications that have been enabled to work with the various devices 10, 30, 32, and 34 using virtual machine software 24 in a pre-defined format understood by virtual machine software 24. Software providing the functions of the middleware server 44, in the exemplary embodiment is written in C#, using SQL Server or MySQL database.

As noted, text files defining application definitions and data may be formatted in XML. For example XML version 1.0, detailed in the XML version 1.0 specification third edition and available at www.w3.org/TR/2004/REC-xml-20040404, may be used. However, as will be appreciated by those of ordinary skill in the art, the functionality of storing XML description files is not dependent on the use of any given programming language or database system.

Each application definition file is formatted according to defined rules and uses pre-determined XML mark-up tags known by both virtual machine software 24, and complementary middleware server software 68. That is, each application definition file 26 is an XML data instance file which conforms to a predefined XML schema designed to support the execution of server-side applications at various types of mobile devices. Tags define XML entities used as building blocks to present an application at a mobile device. Knowledge of these rules, and an understanding of how each tag and section of text should be interpreted, allows virtual machine software 24 to process an XML application definition and thereafter execute an application, as described below. Virtual machine software 24 effectively acts as an interpreter for a given application definition file.

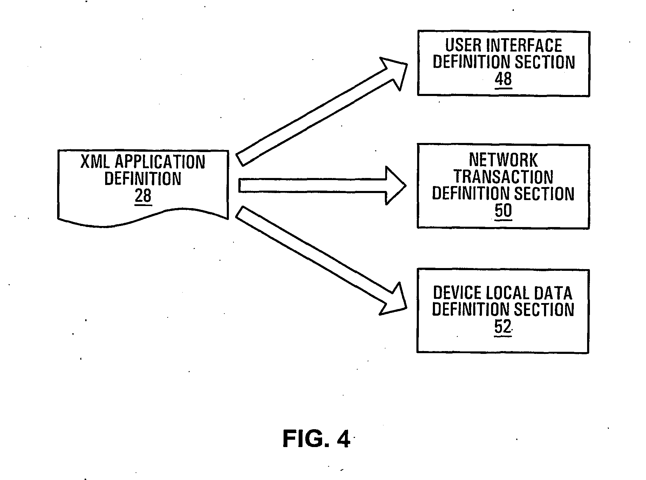

FIG. 4 illustrates an example format for an XML application definition file 28. As illustrated, the example application definition file 28 for a given device and application includes three components: a user interface definition section 48, specific to the user interface for the device 10, which defines the format of screen or screens for the application and how the user interacts with them and contains application flow control events and actions; a network transactions definition section 50 defining the format of data to be exchanged with the application; and a local data definition section 52 defining the format of data to be stored locally on the mobile device by the application.

Defined XML mark-up tags correspond to XML entities supported at a device, and are used to create an application definition file 28. The defined tags may broadly be classified into three categories, corresponding to the three sections 48, 50 and 52 of an application definition file 28.

Example XML tags and their corresponding significance are detailed in Appendix "A". As noted above, virtual machine software 24 at a mobile device includes object classes corresponding to each of the XML tags. At run time, instances of the objects are created as required.

Broadly, the following list includes example XML tags (i.e. XML elements) which may be used to define the user interface definition:
SCREEN - this defines a screen. A SCREEN tag pair contains the definitions of the user interface elements (buftons, radio buttons, and the like) and the events associated with the screen and its elements
BUTTON - this tag defines a button and its associated attributes
LIST -- this tag defines a list box
CHOICEBOX -- this tag defines a choice item, that allows selection of a value from predefined list
MENU -- the application developer will use this tag to define a menu for a given screen
EDITBOX -- this tag defines an edit box
TEXT ITEM -- this tag describes a text label that is displayed
CHECKBOX -- this tag describes a checkbox
HELP -- this tag can define a help topic that is used by another element on the screen
IMAGE -- this tag describes an image that appears on those displays that support images
ICON -- this tag describes an icon
EVENT -- this defines an event to be processed by the virtual machine software. Events can be defined against the application as a whole, individual screens or individual items on a given screen. Sample events would be receipt of data over the wireless interface, or a edit of text in an edit box
ACTION -- this describes a particular action that might be associated with an event handler. Sample actions would be navigating to a new window or displaying a message box.

The second category of example XML tags describes the network transaction section 50 of application definition 28. These may include the following example XML tags:
TABLEUPDATE-using this tag, the application developer can define an update that is performed to a table in the device's local storage. Attributes allow the update to be performed against multiple rows in a given table at once;
PACKAGEFIELD--this tag is used to define a field in a data package that passes over the wireless interface

The third category of XML tags used to describe an application are those used to define a logical database that may be stored at the mobile device. The tags available that may be used in this section are:
TABLE--this tag, and its attributes, define a table. Contained within a pair of TABLE tags are definitions of the fields contained in that table. The attributes of a table control such standard relational database functions as the primary key for the table.
FIELD--this tag describes a field and its attributes. Attributes of a field are those found in a standard relational database system, such as the data type, whether the field relates to one in a different table, the need to index the field, and so on.

In addition to these XML tags, virtual machine software 24 may, from time to time, be required to perform certain administrative functions on behalf of a user. In order to do this, one of object classes 69 has its own repertoire of tags to intercommunicate with the middleware server 44. Such tags differ from the previous three groupings in that they do not form part of an application definition file, but are solely used for administrative communications between the virtual machine software 24 and the middleware server 44. Data packages using these tags are composed and sent due to user interactions with the virtual machine's configuration screens. The tags used for this include:
REG--this allows the application to register and deregister a user for use with the middleware server
FINDAPPS--by using this operation, users can interrogate the server for the list of applications that are available to them
APP REG--using this operation, the end-user can register (or deregister) for an application and have the application interface downloaded automatically to their device (or remove the interface description from the device's local storage).
SETACTIVE--If the user's preferred device is malfunctioning, or out of power or coverage, they will need a mechanism to tell the Server to attempt delivery to a different device. The SETACTIVE command allows the user to set the device that they are currently using as their active one
APPNOTIFY --this XML element is used by the middleware server 44 to communicate the fact that a new application or updated version of an existing application is available for downloading and use by the mobile device (i.e. a transaction definition file which facilitates use of the new or updated application is available for download from the middleware server 44). As will be apparent, the APPNOTIFY tag is central to the new or updated application notification process.

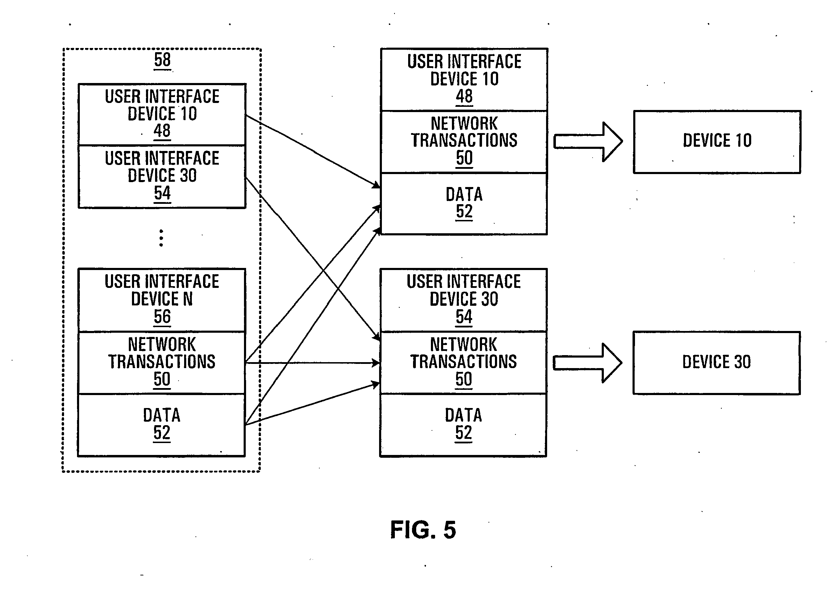

Referring again generally to the manner in which execution of server-based applications at mobile devices is facilitated, FIG. 5 illustrates the organization of application definitions at middleware server 44 and how middleware server 44 may form an application definition file 28 (FIG. 4) for a given device 10, 30, 32 or 34. In the illustration of FIG. 5, only two mobile devices 10 and 30 are considered. Typically, since network transactions and local data are the same across devices, the only piece of the application definition that varies for different devices is the user interface definition.

So, middleware server 44 stores a master definition 58 for a given server side application. This master definition 58 contains example user interface descriptions 48, 54, 56 for each possible type of mobile device 10, 30, 32; descriptions of the network transactions 50 that are possible and data descriptions 52 of the data to be stored locally on the mobile device. Preferably, the network transactions 50 and data descriptions 52 will be the same for all mobile devices 10, 30 and 32.

For device 10, middleware server 44 composes an application definition file 28 by querying the device type and adding an appropriate user interface description 48 for device 10 to the definitions for the network transactions 50 and the data 52. For device 30, middleware server 44 composes the application definition by adding the user interface description 54 for device 10 to the definitions for the network transactions 50 and data 52.

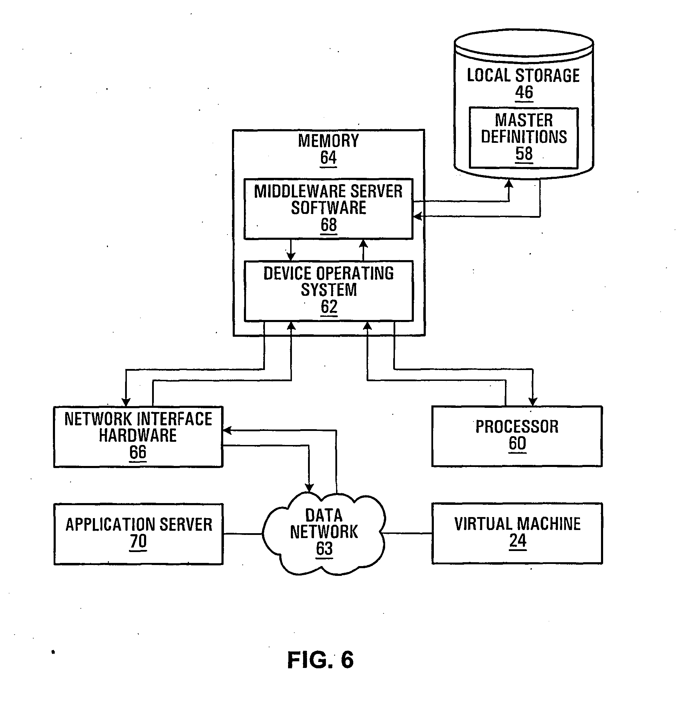

The master definition 58 for a given application is created away from the middleware server and loaded onto the middleware server by administrative staff charged with its operation. Master definition files could be created either by use of a simple text editor, or by a graphical file generation tool. Such a tool might generate part or all of the file, using knowledge of the XML formatting rules, based on the user's interaction with screen painters, graphical data definition tools and the like.
It will be appreciated that the master definition file 58 is an XML data instance which conforms to a predefined XML schema referenced above. Notably, when a new application or updated version of an existing application becomes available at the application server 70 (described in connection with FIG. 6 below), a new master definition file 58 corresponding to the new or updated application will be created and stored at middleware server 44.

FIG. 6 illustrates the organization of middleware server 44 and associated master definitions 58. Middleware server 44 may be any conventional application server, modified to function in manners exemplary of the present invention. As such, middleware server 44 includes a processor 60, in communication with a network interface 66 and storage memory 64. Middleware server 44 may be, for example, a Widows 2000 server, a Sun Solaris server, or the like. Memory of middleware server 44 stores an operating system such as Windows 2000, or Solaris operating system software 62.

Network interface 66 enables middleware server 44 to transmit and receive data over a data network 63. Transmissions are used to communicate with both the virtual machine software 24 (via the wireless networks 36, 38 and wireless gateways 40, 42) and one or more application servers, such as application server 70, that are the end recipients of data sent from the mobile client applications and the generators of data that is sent to the mobile client applications.

Memory at middleware server 44 further stores software 68, exemplary of an embodiment of the present invention. Middleware server software 68, when executed by middleware server 44 enables the middleware server to understand and compose XML data packages that are sent and received by the middleware server. These packages may be exchanged between middleware server 44 and the virtual machine software 24, or between the middleware server 44 and the application server 70. Middleware server software 68 may also provide a graphical user interface for use by a system administrator tasked with maintaining up-to-date access to applications hosted at application server 70 by users of mobile devices 10, 30, 32, and 34, or a subset thereof. Middleware server software 68 may be loaded from a machine readable medium.

As described above, communication between the application server 70 and the middleware server 44 can, in an exemplary embodiment, use HTTP running on top of a standard TCP/IP stack; however this is not a requirement. An HTTP connection between a running application at the application server 70 and the middleware server 44 is established in response to the application at a mobile device presenting the application. The server side application provides output to middleware server 44 over this connection. The server side application data is formatted into appropriate XML data packages understood by the virtual machine software 24 at a mobile device by the server side application.

That is, a server side application (or an interface portion of the application) formats application output into XML in a manner consistent with the format defined by the application definition file for the application. Alternatively, an interface component separate from the application could easily be formed with an understanding of the format and output for a particular application. That is, with a knowledge of the format of data provided and expected by an application at application server 70, an interface component could be a produced using techniques readily understood by those of ordinary skill. The interface portion could translate application output to XML, as expected by middleware server 44. Similarly, the interface portion may translate XML input from a mobile device into a format understood by the server side application.

The particular identity of the mobile device on which the application is to be presented may be identified by a suitable identifier, in the form of a header contained in the server side application output. This header may be used by middleware server 44 to forward the data to the appropriate mobile device. Alternatively, the identity of the connection could be used to forward the data to the appropriate mobile device.

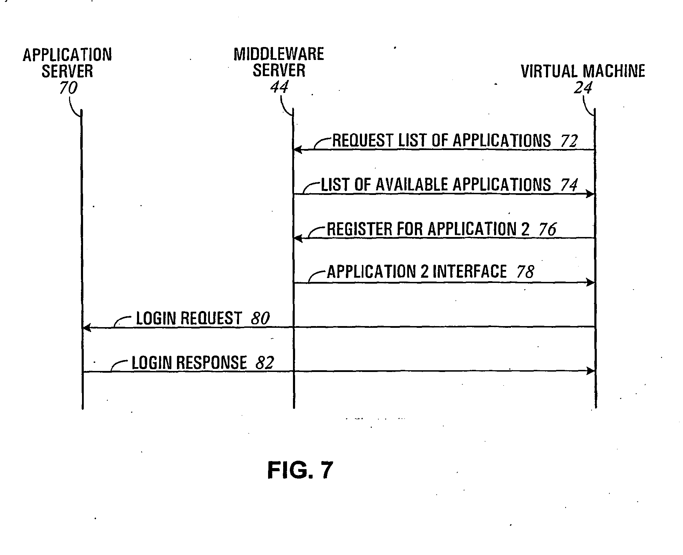

FIG. 7 illustrates a sequence diagram detailing data (application data or application definition files 28) flow between mobile device 10 and middleware server 44, in manners exemplary of an embodiment of the present invention.

For data requested from middleware server 44, device 10, under software control by virtual machine software 24 makes requests to middleware server 44 (also illustrated in FIG. 2), which passes over the wireless network 36 through network gateway 40. Network gateway 40 passes the request to the middleware server 44. Middleware server 44 responds by executing a database query on its database 46 that finds which applications are available to the user and the user's mobile device. For data passed from middleware server 44 to device 10, data is routed through network gateway 40. Network gateway 40 forwards the information to the user's mobile device over the wireless network 36.

FIG. 7 when considered with FIG. 3 illustrates a sequence of communications between device 10, and middleware server 44 that may occur when the user of a mobile device wishes to download an application definition file 28 for a server side application.

So, initially, device 10 interrogates server 44 to determine which applications are available for the particular mobile device being used. This may be accomplished by the user instructing the virtual machine software 24 at device 10 to interrogate the server 44. Responsive to these instructions the virtual machine software 24 sends an XML message to the server requesting the list of applications (data flow 72); as illustrated in FIG. 7 the XML message may contain the <FINDAPPS> tag, signifying to the middleware server 44, its desire for a list available application. In response, middleware server 44 makes a query to database 46. Database 46, responsive to this query, returns a list of applications that are available to the user and the mobile device. The list is typically based, at least in part, on the type of mobile device making the request, and the applications known to middleware server 44. Middleware server 44 converts this list to an XML message and sends to the virtual machine (data flow 74). Again, a suitable XML tag identifies the message as containing the list of available applications.

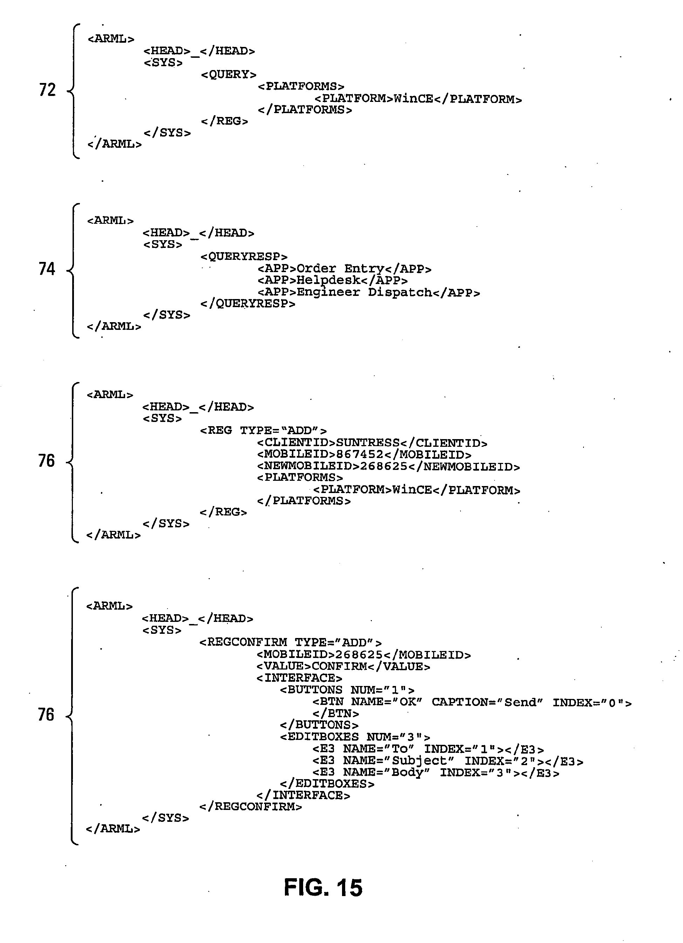

In response, a user at device 10 may choose to register for an available server side application. When a user chooses to register for an application, virtual machine software 24 at device 10 composes and sends an XML registration request for a selected application (data flow 76) to middleware server 44. As illustrated in FIG. 15, an XML message containing a <REG> tag is sent to middleware server 44. The name of the application is specified in the message. The middleware server 44, in response, queries its database for the user interface definition for the selected application for the user's mobile device. Thereafter, the middleware server creates the application definition file, as detailed with reference to FIG. 5. Then, middleware server 44 sends to the mobile device (data flow 78 -FIG. 7) the created application definition file 28.

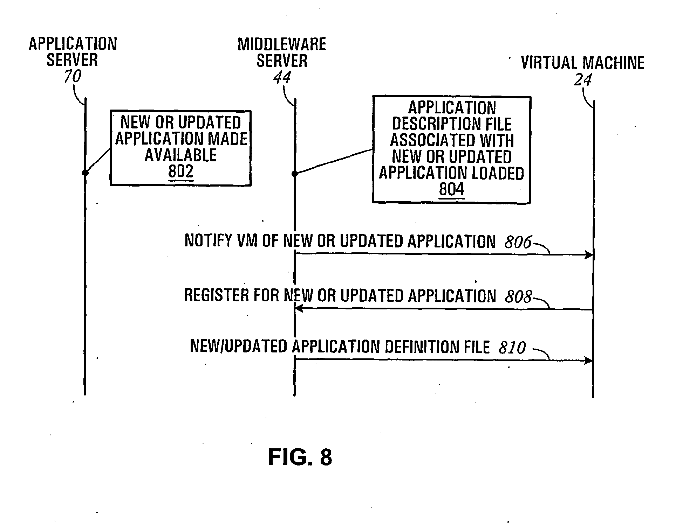

FIG. 8 is a sequence diagram illustrating operation for notifying a mobile device of the availability of a new or updated application. In particular, the sequence diagram illustrates data flow between middleware server 44 and the virtual machine 24 executing at an exemplary mobile device.

For purposes of FIG. 8, it is assumed that a new application or updated version of an existing application has been made available at the application server 70 (802). It is also assumed that a new application definition file which corresponds to the new or updated application at application server 70 has been loaded or otherwise made available at the middleware server 44 (804).

In an exemplary embodiment, new or updated application notification is triggered by a system administrator at middleware server 44. In particular, the system administrator, being aware of the new or updated application availability 802 and 804, interacts with middleware server software 68 to cause a notification of the availability of the new or updated application to be sent to one or more mobile devices 10.

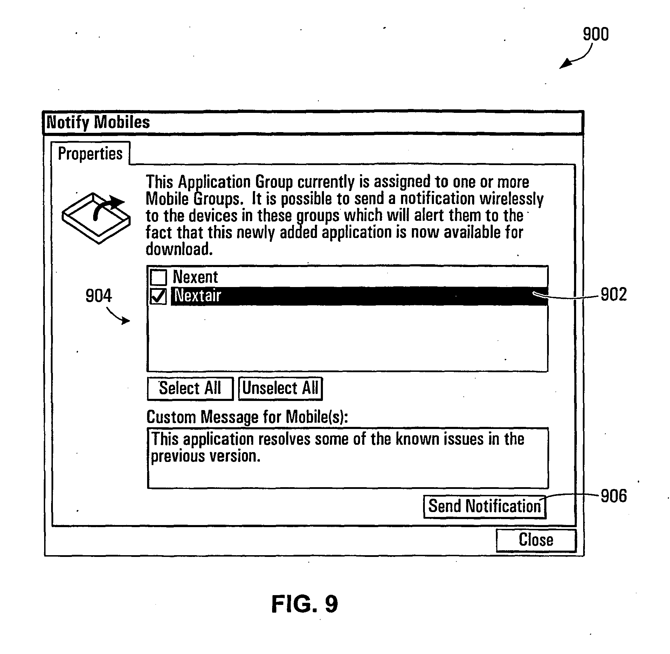

An exemplary GUI 900 by which notification may be triggered is illustrated in FIG. 9. As illustrated, GUI 900 includes a list box 902 which contains a list of two groups mobile devices ("mobile groups") with identifiers "Nexent" and "Nextair" of which the middleware server 44 is aware. mobile groups are sets of individual mobile devices which are grouped, e.g. by a system administrator, usually on the basis that the devices share similar application accessibility attributes. The grouping of mobile devices may be performed to ease system administration. For example, the mobile devices associated with employees of a particular department of a business enterprise may be incorporated into a single group (e.g. all mobile devices allocated to employees in a sales department are included in a "sales" group; all mobile devices allocated to marketing employees are included in a "marketing" group; and so on). Because employees of a particular department may all require access to the same set of applications, and because it may be desirable to ensure that employees are apprised of the latest applications, notification may be performed on the basis of mobile groups. Mobile groups may each have an associated maximum number of active mobile devices associated with the group.

Mobile groups may be used in conjunction with application groups defined at the middleware server 44 for purposes of defining the applications available to sets of mobile devices. Application groups are sets of applications to which access may be permitted or denied as a whole. Application groups may be defined, e.g. by a system administrator, to simplify application access control to applications on the middleware server 44 by sets of related mobile devices. For example, all sales-related applications may be grouped into a "sales" application group, to which each mobile device within a "sales" mobile group may be permitted access. The number of applications may differ between application groups. One application group may contain only a single application, while another may contain all of the applications present on the middleware server 44.

Of course, it will be appreciated that the use of mobile groups and application groups for new or updated application notification purposes is not required. Notification may also be performed on a mobile device-by-mobile device basis or on an application-by-application basis.

Referring again to FIG. 9, using the checkboxes 904, the system administrator may select which mobile devices are notified of the new or updated application. A check mark indicates notification is to be performed. In the illustrated example, the system administrator may also optionally enter a custom message that will be displayed to the mobile users along with the new application notification, which may help the user of the mobile device to better appreciate why the new or updated application should or should not be used.

When the Send Notification button 906 of the GUI 900 is depressed, the notification is sent to the virtual machine software 24, which notification is illustrated by in FIG. 8 at 806.

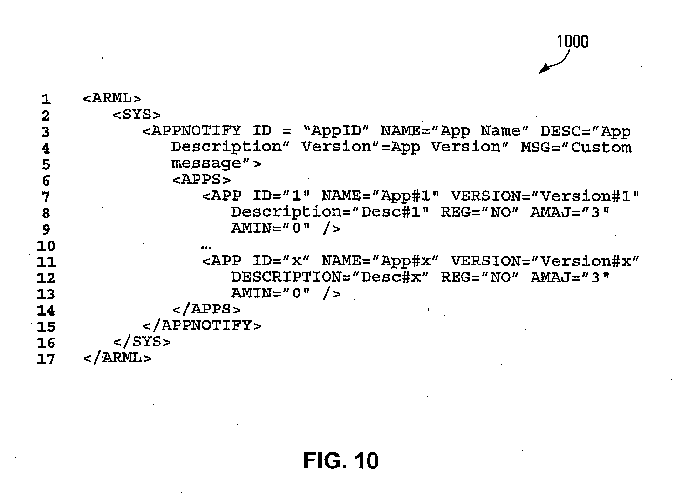

For each mobile in each mobile group which is checked in list box 902, a message will be queued, with the XML format 1000 illustrated in FIG. 10. As illustrated, the message includes an <APPNOTIFY> element (at lines 3 to 15) having the following attributes:
ID - The application ID of the application in respect of which notification is being sent. In the case where a general application notify is sent (e.g. when an application group is activated for a mobile group), this has a predetermined value of "-1".
NAME - The application name of the application in respect of which notification is being sent
DESC - A description of the application in respect of which notification is being sent
VERSION -The version of the application in respect of which notification is being sent
MSG - A custom message which may be entered by a system administrator triggering the notification.

Also included in the message to a given mobile device will be a list of applications currently available to the mobile device, which is provided within the tags <APPS>...</APPS> illustrated in FIG. 10 (at lines 6 to 14). Each <APP> element represents a single application available to the relevant mobile device.

At the virtual machine software 24 operating at a mobile device, upon receiving notification 806 (FIG. 8), the custom message (or a predetermined standard message) is displayed to the user to notify them of the availability of the new or updated application, and the user is presented with the opportunity to register for (i.e. download) the application. When a user chooses to register for an application, virtual machine software 24 composes and sends an XML registration request for the selected application (data flow 808, which is analogous to data flow 76 of FIG. 7) to middleware server 44. The middleware server 44, in response, queries its database for the user interface definition for the selected application for the user's mobile device. Thereafter, the middleware server creates the corresponding application definition file and sends it to the mobile device (data flow 810, which is analogous to data flow 78 of FIG. 7).

Following the receipt of an application definition file for a new or updated application at a mobile device 10, 30, 32, or 34, parser 61 of virtual machine software 24 may parse the XML text of the newly received application definition file to form a tokenized version of the file. That is, each XML tag may be converted a defined token for compact storage, and to minimize repeated parsing of the XML text file. The tokenized version of the application definition file may be stored for immediate or later use by device 10. In this context, the term "tokenized" may refer to placement of the XML structure into binary objects, which is much like conversion of a script into byte code.

Thereafter, assuming that the virtual machine software 24 of the mobile device is able to use the functionality defined by the interface definition file to send and receive data. Advantageously, the mobile device user now has access to the most recent version of the application.

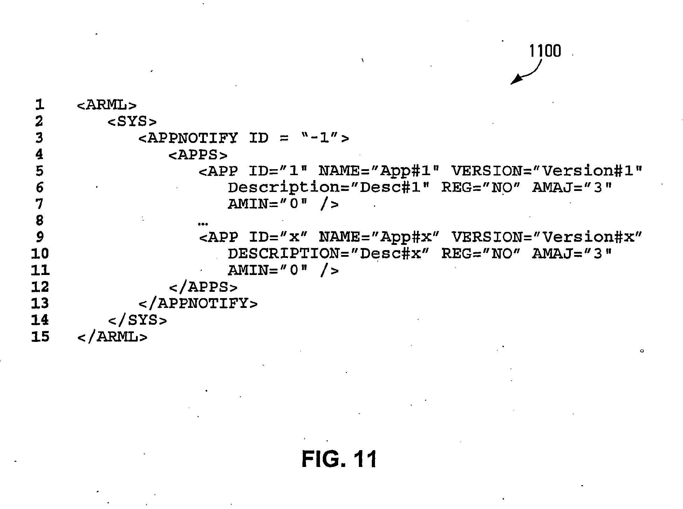

FIG. 11 illustrates the format 1100 of a general "application notify" message which may be sent whenever an application group is activated for a mobile group. This notification is similar to the notification illustrated in FIG. 10, except that the ID attribute is set to "-1" to indicate that a general notification is being provided and that the <APPNOTIFY> element lacks any other specified attributes.

It should be appreciated that new or updated application notification could be performed automatically in an alternative embodiment. That is, instead of being triggered by a system administrator at middleware server 44 as described above, application notification may occur automatically, e.g., whenever the middleware server 44 detects the loading of a new application definition file. Such automatic notification could be performed to all mobile devices (whether by mobile group or individually) or to a subset of mobile devices sharing a predetermined set of characteristics.

In the paragraphs which follow, the execution of a server-side application (whether a new/updated application or an existing application) by a mobile device in accordance with an application definition file is described.

Upon invocation of a particular application for which the device 10 has registered, the screen generation engine 67 of the virtual machine software 24 at the device causes the virtual device to locate the definition of an initial screen for that application. The initial screen is identified within the application definition file 28 for that application using a <SCREEN> tag, and an associated attribute of <First screen="yes">.

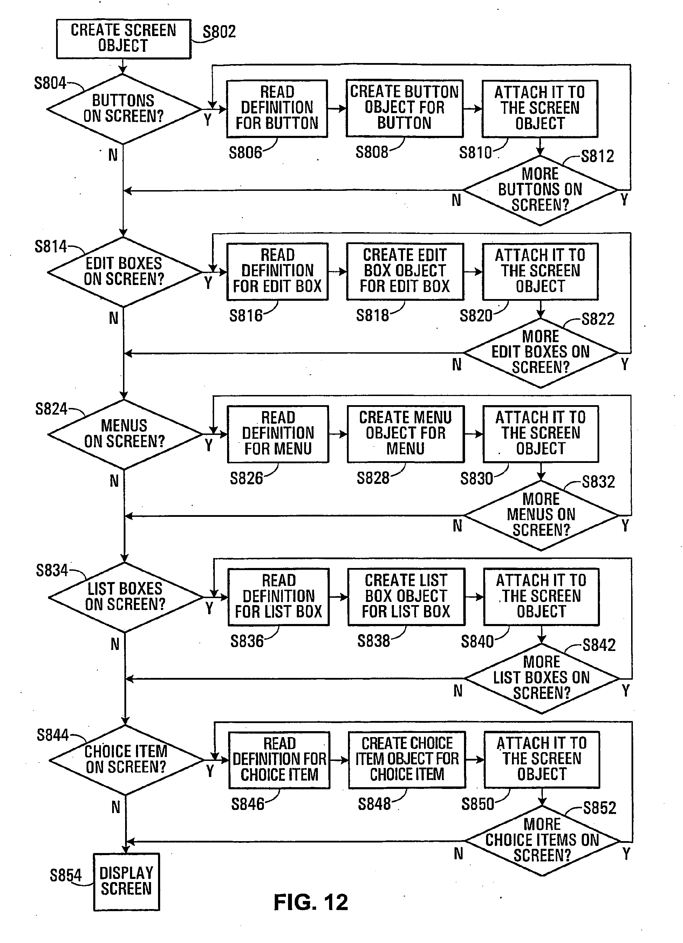

Steps performed by virtual machine software 24 in processing a first or subsequent screen are illustrated in FIG. 12. As illustrated, screen generation engine 67, generates an instance of an object class, defining a screen by parsing the section of the XML application definition file corresponding to the <SCREEN> tag in step S802. Supported screen elements may be buttons, edit boxes, menus, list boxes, and choice items, as identified in Appendix "A". Other screen elements, such as images and checkboxes, as detailed in Appendix "A" may also be supported. For clarity of illustration, their processing by screen generation engine 67 however, is not detailed. Each supported tag under the SCREEN definition section, in turn causes creation of instances of object classes within the virtual machine software 24. Typically, instances of objects corresponding to the tags, used for creation of a screen, result in presentation of data at mobile device 10. As well the creation of such objects may give rise to events (e.g. user interaction) and actions to be processed at device 10.

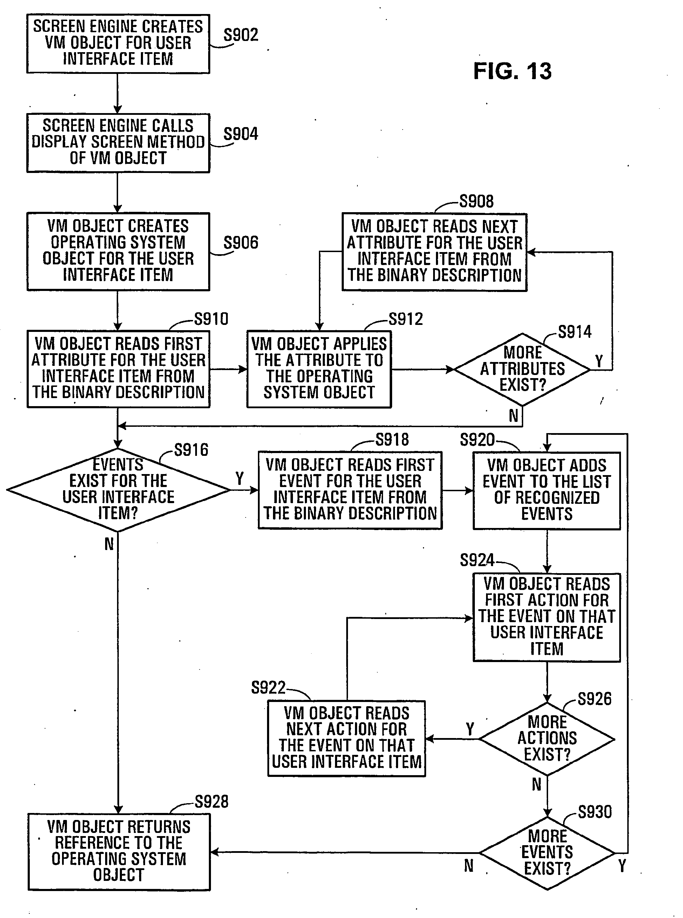

Each element definition causes virtual machine software 24 to use the operating system of the mobile device to create corresponding display element of a graphical user interface as more particularly illustrated in FIG. 13. Specifically, for each element, the associated XML definition is read in step S806, S816, S826, S836, and S846, and a corresponding instance of a screen object defined as part
of the virtual machine software 24 is created by the virtual machine software 24 in steps S808, S818, S828, S838 and S848, in accordance with steps S902 and onward illustrated in FIG. 13. Each interface object instance is created in step S902. Each instance takes as attribute values defined by the XML text associated with the element. A method of the virtual machine object is further called in step S904, and causes a corresponding device operating system object to be created. Those attributes defined in the XML text file, stored within the virtual machine object instance are applied to the corresponding instance of a display object created using the device operating system in steps S908S-S914. These steps are repeated for all attributes of the virtual machine object instance. For any element allowing user interaction, giving rise to an operating system event, the event handler 65 of virtual machine software 24 is registered to process operating system events, as detailed below.

Additionally, for each event (as identified by an <EVENT> tag) and action (as identified by an <ACTION> tag) associated with each XML element, virtual machine software 24 creates an instance of a corresponding event and action object forming part of virtual machine software 24. Virtual machine software 24 further maintains a list identifying each instance of each event and action object, and an associated identifier of an event in steps S916 to S928.

Steps S902-S930 are repeated for each element of the screen in steps S808, S818, S828, S838 and S848 as illustrated in FIG. 12. All elements between the <SCREEN> definition tags are so processed. After the entire screen has been so created in memory, it is displayed in step S854, using conventional techniques.

As will be appreciated, objects are specific to the type of device executing the virtual machine software 24. Functions initiated as a result of the XML description may require event handling. This event handling is processed by event handler 65 of virtual machine software 24 in accordance with the application definition file 28. Similarly, receipt of data from a mobile network will give rise to events. Event handler 65, associated with a particular application presented at the device similarly processes incoming messages for that particular application. In response to the events, virtual machine software 24 creates instance of software objects, and calls functions of those object instances, as required by the definitions contained within the XML definitions contained within the application definition file 28, giving rise to the event.

As noted, the virtual machine software 24 includes object classes, allowing the virtual machine to create object instances corresponding to an <EVENT> tag. The event object classes includes methods specific to the mobile device that allow the device to process each of the defined XML descriptions contained within the application definition file, and also to process program/event flow resulting from the processing of each XML description.

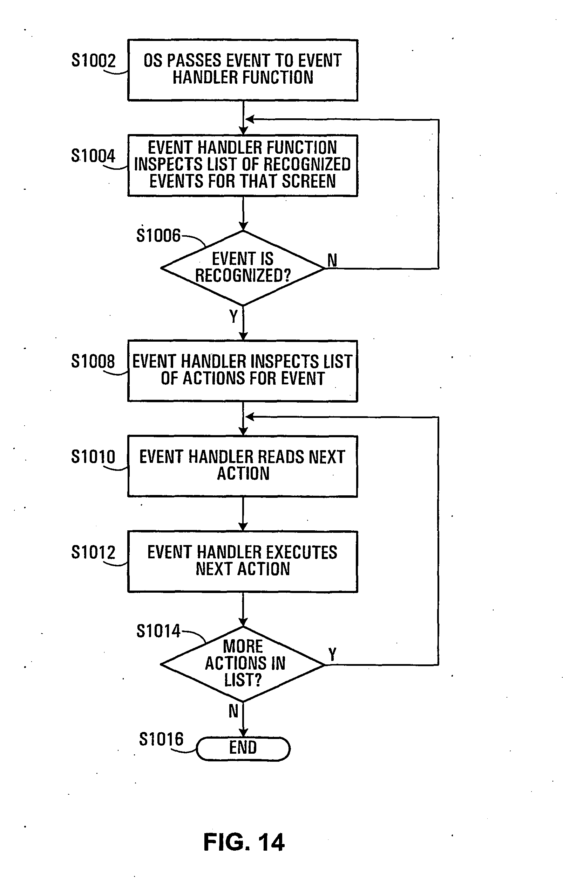

Events may be handled by virtual machine software 24 as illustrated in FIG. 14. Specifically, as device handler 65 has been registered with the operating system for created objects, upon occurrence of an event, steps S1002 and onward are performed in response to the operating system detecting an event.

An identifier of the event is passed to event handler 65 in step S1002. In steps S1004-S1008, this identifier is compared to the known list of events, created as a result of steps S916-S930. For an identified event, actions associated with that event are processed in step S1008-S1014.

That is, virtual machine software 24 performs the action defined as a result of the <ACTION> tag associated with the <EVENT> tag corresponding to the event giving rise to processing by the event handler 65. The <ACTION> may cause creation of a new screen, as defined by a screen tag, a network transmission, a local storage, or the like.

New screens, in turn, are created by invocation of the screen generation engine 61, as detailed in FIGS. 8 and 9. In this manner the navigation through the screens of the application is accomplished according to the definition embodied in the XML application definition.

Similarly, when the user wishes to communicate with the middleware server, or store data locally, event handler 65 creates instances of corresponding object classes within the object classes 69 of virtual machine software 24 and calls their methods to store or transmit the data using the local device operating system. The format of data is defined by the device local definition section 52; the format of network packages is defined in the network transaction package definition section 50.

For example, data that is to be sent to the wireless network is assembled into the correct XML packages using methods within an XML builder object, formed as a result of creating an instance of a corresponding object class within object classes 69 of virtual machine software 24. Methods of the XML builder object create a full XML package before passing the completed XML package to another message server object. The message server object uses the device's network APIs to transmits the assembled data package across the wireless network.

Received XML data packages from network 63 (FIG. 2) give rise to events processed by event handler 65. Processing of the receipt of data packages is not specifically illustrated in FIG. 13. However, the receipt of data triggers a "data" event of the mobile device's operating system. This data event is passed to the virtual machine, and event handler 65 inspects the package received. As long as the data received is a valid XML data package as contained within the application definition, the virtual machine inspects the list of recognised XML entities.

So, for example, a user could send a login request 80 by interacting with an initial login screen, defined in the application definition file for the application. This would be passed by the middleware server 44 to the backend application server 70. The backend application server according to the logic embedded within its application, would return a response, which the middleware server 44 would pass to the virtual machine software 24. Other applications, running on the same or other application servers might involve different interactions, the nature of such interactions being based upon the functionality and logic embedded within the application server 70.

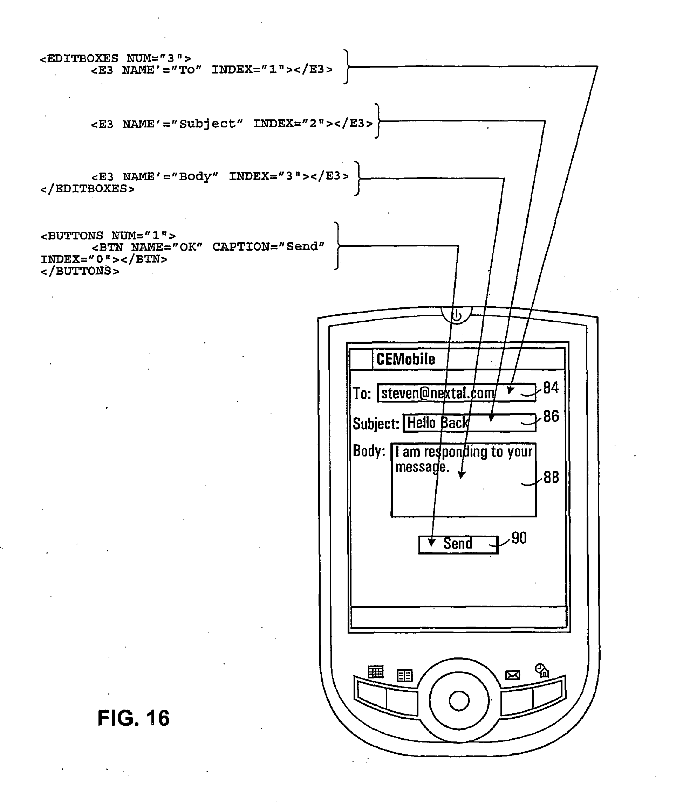

FIG. 16 illustrates sample XML messages passed as the result of message flows illustrated in FIG. 6. For each message, the header portion, between the <HEAD> ... </HEAD> tags contains a timestamp and the identifier of the sending device.

Example message 72 is sent by the mobile device to request the list of applications that the server has available to that user on that device. It specifies the type of device by a text ID contained between the <PLATFORM> ... </PLATFORM> tags. Example message 74 is sent in response to message 70 by middleware server 44 to the mobile device 10. It contains a set of <APP> ... </APP> tag pairs, each of which identifying a single application that is available to the user at device 10. Example message 76 is sent from the mobile device 10 to middleware server 44 to register for a single server side application. The tags specify information about the user. Message 78 is sent by the middleware server 44 to the mobile device in response to a request to register device 10 for an application. The pair of tags <VALUE> ... </VALUE> gives a code indicating success or failure. In the sample message shown, a success is shown, and is followed by the interface description for the application, contained between the <INTERFACE> ... </INTERFACE> tags. This interface description may then be stored locally within memory 16 of device 10.

As noted, when a user starts an application that has been downloaded in the manner described above, the virtual machine software 24 reads the interface description that was downloaded for that device 10, and the virtual machine software 24 identifies the screen that should be displayed on startup, and displays its elements as detailed in relation to FIGS. 9 and 10. The user may then use the functionality defined by the user interface definition section 48 of the application definition 28 to send and receive data from a server side application.

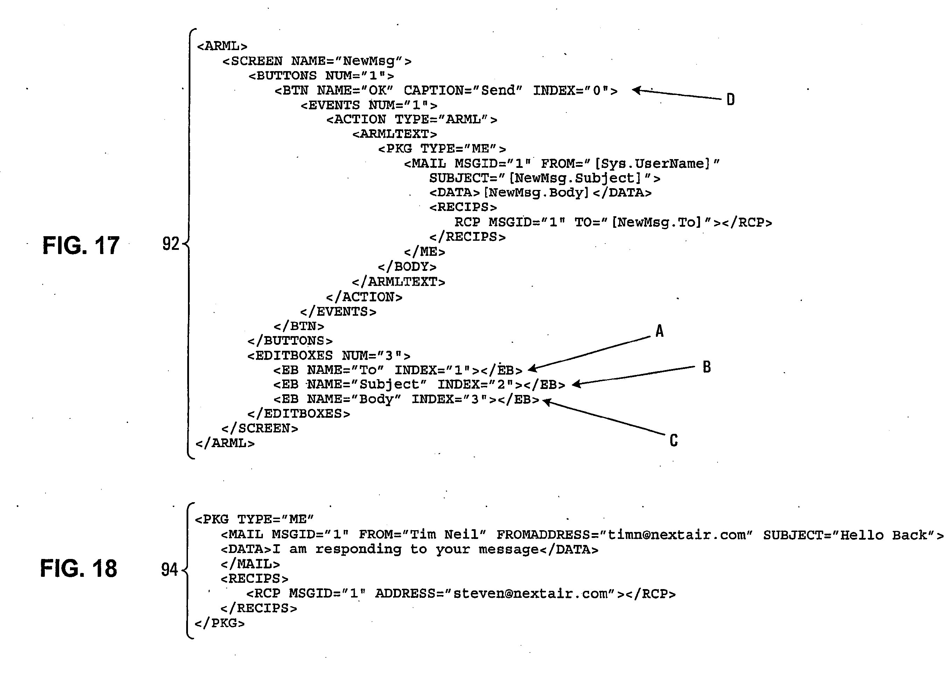

For the purposes of illustration, FIGS. 16 and 17 illustrate the presentation of a user interface for a sample screen on a Windows CE Portable Digital Assistant. As illustrated in FIG. 17, a portion of an application definition file 28 defines a screen with the name 'New Msg'. This interface description may be contained within the user interface definition section 48 of an application definition file 28 associated with the application. The screen has a single button identified by the <'BTN NAME'="OK", CAPTION="Send" INDEX="0"> tag, and identified as item D in FIG. 17. This button (if selected at run time) gives rise to a single event, (identified by the <EVENTS NUM="1" tag) giving rise to a single associated action (defined by the tag <ACTION TYPE ="ARML">). This action results in the generation of a network package (defined by the tag <PKG TYPE="ME">), having an associated data format as defined between the corresponding tags. Additionally, the screen has three editboxes, as defined after the <EDITBOXESNUM=3> tag, and identified as items A, B, and C.

Upon invocation of the application at the local device, screen generation engine 67 of virtual machine software 24 at the device process the screen definition, as detailed with reference to FIGS. 8 and 9. That is, for each tag D, the screen generation engine 67 creates a button object instance, in accordance with steps S804-S812. Similarly for each tag A, B and C within the application definition file, virtual machine software 24 at the device creates an instance an of edit box object (i.e. steps S834-S842 (FIGS. 8 and 9)). The data contained within the object instances reflects the attributes of the relevant button and edit box tags, contained in the application definition 28 for the application.

The resulting screen at the mobile device is illustrated in FIG. 16. Each of the screen items is identified with reference to the XML segment within XML portion 92 giving rise to the screen element. The user interface depicts a screen called 'NewMsg', which uses the interface items detailed in FIG. 12, but which adds the ability to compose and send data. This screen has three edit boxes, named 'To', 'Subject' and 'Body' as displayed in FIG. 16 (84,86,88); these are represented by the XML tags A, B and C. The screen also incorporates a button, named 'OK', also as displayed in FIG. 16 (90), which represents the XML BTN element (tag D of FIG. 17).

Call-backs associated with the presented button cause graphical user interface application software/operating system at the mobile device to return control to the event handler 65 of virtual machine software 24 at the device. Thus, as the user interacts with the application, the user may input data within the presented screen using the mobile device API. Once data is to be exchanged with middleware server 44, the user may press the OK button, thereby generating an event, initially handled by the operating system of the mobile device. However, during the creation of button D, in steps S804-S810 any call-back associated with the button was registered to be handled by event handler 65 of virtual machine software 24. Upon completion, virtual machine software 24 receives data corresponding to the user's interaction with the presented user interface and packages this data into XML messages using corresponding objects, populated according to the rules within the application definition file.

Event handler 65, in turn processes the event caused by interaction of the button in accordance with the <EVENT> tag and corresponding <ACTION> tag associated with the button D. The events, and associated actions are listed as data items associated with the relevant user interface item, as result of the EVENT and ACTION tags existing within the definitions of the relevant user interface item, within the application definition file. This <ACTION> tag causes the virtual machine software 24 to create an instance of an object that sends an XML package to the middleware server in accordance with the format defined between the <ACTION> tag. That is, a "template" (defined after the <PKG TYPE="ME"> tag) for the XML package to be sent is defined against the EVENT handler for a given user interface item. This template specifies the format of the package to be sent, but will include certain variable fields. These are pieces of data in the formatted XML package that will vary according to the values contained in data entry fields on the current and previous screens. The definition of the template specifies which data entry field should be interrogated to populate a given entry within a data package that is to be sent.

This template fills some of its fields dynamically from data inserted by a user into edit boxes that were presented on the mobile device's screen. The template has within it certain placeholders delimited by square brackets. These placeholders specify a data source from which that section of the template should be filled. A data source might be a user interface field on the current screen, a user interface field on the previous screen, or a database table. Virtual machine software 24, reading the data source name, searches for the field corresponding to that data source and replaces the placeholder with actual data contained within the data source. For example, the SUBJECT attribute of the MAIL tag in XML portion 92 is read from the edit box named 'Subject' on the screen named 'NewMsg' This process is repeated for each such placeholder, until the virtual machine, reading through the template has replaced all placeholders in the template. At this point the template has been converted into a well-formed XML message 94.

A resulting XML message 94 containing data formed as a result of input provided to the fields of the "NewMsg" screen is illustrated in FIG. 18. This exemplary XML message 94 that is created by pressing the button 90 in XML message portion 92. In this case, the editbox 86 named 'Subject' contains the text "Hello Back"; the editbox 84 named 'To' contains the text "jdoe@mycompany.com"; and the editbox 88 named 'Body' contains the text "I am responding to your message".

The virtual machine software 24 using the template inspects these three fields, and places the text contained within each edit box in the appropriate position in the template. For example, the placeholder [Subject] is replaced by "Hello Back". The virtual machine software 24, inspecting the template contained in the XML message portion 92 and populating the variable fields, creates the sample XML message 94 by invoking the functionality embedded within an XML builder software object. Once the XML message 94 has been assembled in this fashion, the relevant method of the message server object is then invoked to transmit the XML message 94 in a data package across the network.

Similarly, when data is received, the event handler 65 of the virtual machine software 24 is notified. In response, the event handler examines the data package that it has received using the parser 61 to build a list of name value pairs containing the data received. Thereafter, methods within an object class for processing incoming packets are invoked to allow virtual machine software 24 to inspect the application definition for the application to identify the fields in the database and user interface screens that need to be updated with the new data. Where screens are updated, this is done according to the procedures normal to that device.

Handling of incoming packages is defined in the application definition file 28 at the time the application description file was downloaded. That is, for each of the possible packages that can be received, application description file 28 includes definitions of database tables and screen items that should be updated, as well as which section of the package updates which database or screen field. When a package is received, event handler 65 of virtual machine software 24 uses rules based on the application description file 28 to identify which database and screen fields need to be updated.

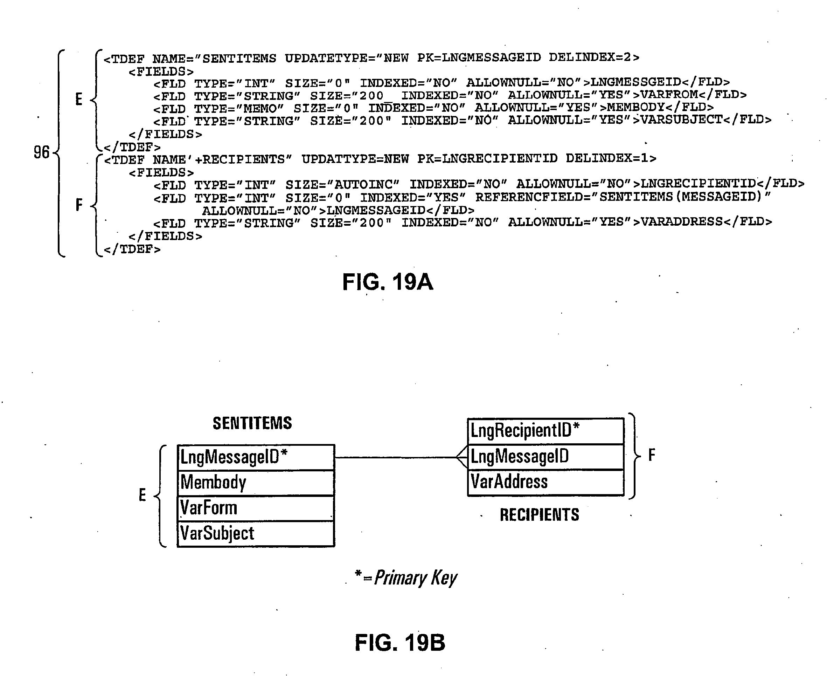

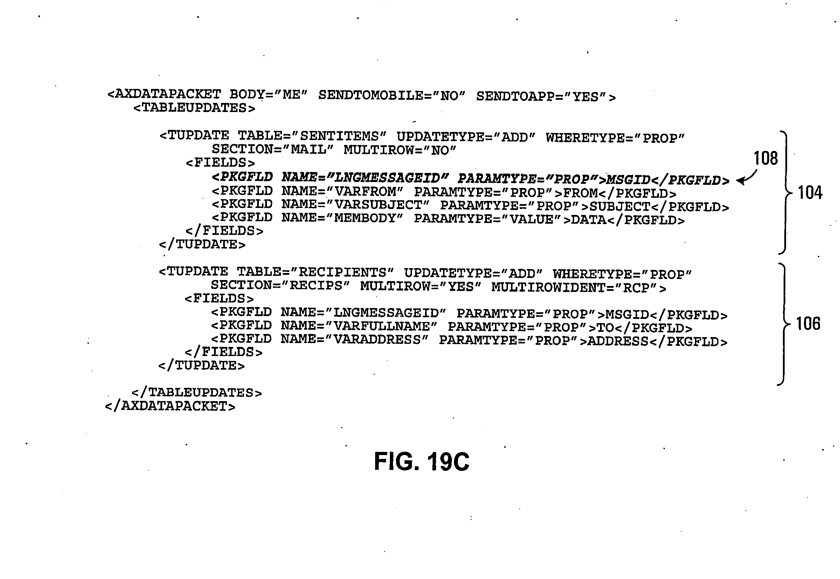

FIGS. 19A-19C similarly illustrates how local storage on the device, and the messages that update it, are defined in the application definition file 28. XML portion 96 forming part of the device local definition section 52 of an application definition defines an example format of local storage for the email application described in FIGS. 12 and 13. Two example tables, labeled E and F are defined in the local storage for the application. One table (E) stores details of sent emails. A second table (F) stores the recipients of sent emails. The first table E, "Sentltems", has four fields; the second table F, "Recipients" has three fields. This is illustrated in graphical form below the XML fragment.

FIGS. 19A and 19B further illustrates the use of local storage to store to data packages that are sent and received. Specifically, as illustrated in FIG. 19A the table given in FIG. 19A may store an email contained in the example message 94, shown in FIG. 18. So application definition file 28 for this application would contain, along with XML message portions 92 and XML portion 96, the XML fragment 102. XML fragment 102 defines how the data packages composed by the XML message portion 92 (an example of which was illustrated in FIG. 17), updates the tables defined by the XML portion 96.

XML fragment 102 includes two sections 104 and 106. First section 104 defines how the fields of the data package would update the "Sentltems" table E. An example line 108 describes how the 'MSGID' field in the data package would update the 'LNGMESSAGEID' field in the table E. Similarly, the second section 106 describes how the fields of the data package would update the "Recipients" table.

Attributes of the illustrated <AXDATAPACKET> tag instruct the virtual machine software 24 as to whether a given data package should update tables in local storage. These rules are applied whenever that package is sent or received.

As can be seen from the preceding description and example, such an approach has significant advantages over the traditional method of deploying applications onto mobile devices. First, the definition of an application's functionality is separated from the details associated with implementing such functionality, allowing the implementers of a mobile application to concentrate on the functionality and ignore implementation details. Second, application definitions can be downloaded wirelessly, wherever the device happens to be at the time. This greatly improves the usefulness of the mobile device, by removing reliance on returning the device to a cradle and running a complex installation program. Thirdly, the use of application definition files allows flexible definitions for numerous applications. Server-side application may be easily ported for a number of devices.

It will be further understood that the invention is not limited to the embodiments described herein which are merely illustrative of a preferred embodiment of carrying out the invention, and which is susceptible to modification of form, arrangement of parts, steps, details and order of operation. The invention, rather, is intended to encompass all such modification within its scope, as defined by the claims.

## Claims

1. A computer-implemented method, comprising:
in response to either of a new application being made available at a server (44) or an updated version of an application being made available at a server (44), transmitting a message over a wireless network (36, 38) to a set of wireless communication devices (10, 30, 32, 34) allocated to a plurality of users, said message indicating that said new or updated application is available, said transmitting being triggered automatically in response to said new application being made available at said server (44) or said updated version of said application being made available at said server (44), said transmitting further being conditional upon said new application or said updated version of said application being added to a group of applications with which said set of wireless communications devices (10, 30, 32, 34) is associated and to which access by said set of wireless communication devices (10, 30, 32, 34) is provided as a whole;
receiving over said wireless network (36, 38) from at least one wireless communication device (10, 30, 32, 34) of said set a user indication that said new application or said updated version of said application is desired, said user indication being responsive to said message; and
in response to said receiving, transmitting said new application or said updated version of said application over said wireless network (36, 38) to said at least one wireless communication device (10, 30, 32, 34).

2. The method of claim 1 wherein said set of wireless communications devices (10, 30, 32, 34) is a subset of an overall set of wireless communications devices (10, 30, 32, 34) in communication with said server (44).

3. The method of any one of the preceding claims wherein said new application or said updated version of said application is a markup language document describing the format of screens for the new application or updated version of the application, possible user interaction with said screens, and application flow control events and actions.

4. The method of any one of the preceding claims wherein said message comprises a list of applications presently available to said set of wireless communications devices (10, 30, 32, 34).

5. A server (44) comprising a processor (60) and memory (64) in communication with said processor (60) storing instructions which, when executing by said processor (60), adapt said server (44) to perform the steps of the method of any one of claims 1 to 4.

6. A machine-readable medium storing instructions which, when executed by a processor (60) of a server (44), adapt said server (44) to perform the steps of the method of any one of claims 1 to 4.

7. A method of deploying software from a server (44) to a set of wireless communication devices (10, 30, 32, 34) allocated to a plurality of users, comprising:
in response to either of a new application being made available at said server (44) or an updated version of an application being made available at said server (44), transmitting a message over a wireless network (36, 38) to said set of wireless communication devices (10, 30, 32, 34) indicating that said new or updated application is available, said transmitting being triggered automatically in response to said new application being made available at said server (44) or said updated version of said application being made available at said server (44), said transmitting further being conditional upon said new application or said updated version of said application being added to a group of applications with which said set of wireless communications devices (10, 30, 32, 34) is associated and to which access by said set of wireless communication devices (10, 30, 32, 34) is provided as a whole;
at each wireless communication device (10, 30, 32, 34) of said set, presenting a selectable option to a user whose selection by the user indicates that said new application or said updated version of said application is desired, said presenting being responsive to said message;
from each wireless communication device (10, 30, 32, 34) of said set where said user selection has been made, sending an indication of said user selection over said wireless network (36, 38) to said server (44); and
in response to said indication, transmitting said new application or said updated version of said application, from said server (44) and over said wireless network (36, 38), to said each wireless communication device (10, 30, 32, 34) of said set where said user selection has been made.

## Patentansprüche

1. Computerimplementiertes Verfahren, das aufweist:
in Reaktion darauf, dass entweder eine neue Anwendung an einem Server (44) verfügbar gemacht wird oder eine aktualisierte Version einer Anwendung an einem Server (44) verfügbar gemacht wird, Übertragen einer Nachricht über ein drahtloses Netzwerk (36, 38) an einen Satz von drahtlosen Kommunikationsvorrichtungen (10, 30, 32, 34), die einer Vielzahl von Benutzern zugeordnet sind, wobei die Nachricht anzeigt, dass die neue oder aktualisierte Anwendung verfügbar ist, wobei die Übertragung automatisch ausgelöst wird in Reaktion darauf, dass die neue Anwendung an dem Server (44) verfügbar gemacht wird oder die aktualisierte Version der Anwendung an dem Server (44) verfügbar gemacht wird, wobei die Übertragung weiter abhängig ist davon, dass die neue Anwendung oder die aktualisierte Version der Anwendung zu einer Gruppe von Anwendungen hinzugefügt wird, zu denen der Satz von drahtlosen Kommunikationsvorrichtungen (10, 30, 32, 34) zugehörig ist und auf die ein Zugriff durch den Satz von drahtlosen Kommunikationsvorrichtungen (10, 30, 32, 34) als Ganzes vorgesehen ist;
Empfangen, über das drahtlose Netzwerk (36, 38), von zumindest einer drahtlosen Kommunikationsvorrichtung (10, 30, 32, 34) des Satzes einer Benutzeranzeige, dass die neue Anwendung oder die aktualisierte Version der Anwendung gewünscht ist, wobei die Benutzeranzeige in Reaktion auf die Nachricht ist; und
in Reaktion auf das Empfangen, Übertragen der neuen Anwendung oder der aktualisierten Version der Anwendung über das drahtlose Netzwerk (36, 38) an die zumindest eine drahtlose Kommunikationsvorrichtung (10, 30,32,34).

2. Verfahren gemäß Anspruch 1, wobei der Satz von drahtlosen Kommunikationsvorrichtungen (10, 30, 32, 34) ein Teilsatz eines Gesamtsatzes von drahtlosen Kommunikationsvorrichtungen (10, 30, 32, 34) in Kommunikation mit dem Server (44) ist.

3. Verfahren gemäß einem der vorhergehenden Ansprüche, wobei die neue Anwendung oder die aktualisierte Version der Anwendung ein Auszeichnungssprachedokument ist, das das Format von Bildschirmen für die neue Anwendung oder die aktualisierte Version der Anwendung, eine mögliche Benutzerinteraktion mit den Bildschirmen und Anwendungsflusssteuerungsereignisse und -aktionen beschreibt.

4. Verfahren gemäß einem der vorhergehenden Ansprüche, wobei die Nachricht eine Liste von Anwendungen aufweist, die momentan für den Satz von drahtlosen Kommunikationsvorrichtungen (10, 30, 32, 34) verfügbar sind.

5. Server (44), der einen Prozessor (60) und einen Speicher (64) in Kommunikation mit dem Prozessor (60) aufweist, der Anweisungen speichert, die bei Ausführung durch den Prozessor (60) den Server (44) ausbilden, die Schritte des Verfahrens gemäß einem der Ansprüche 1 bis 4 durchzuführen.

6. Maschinenlesbares Medium, das Anweisungen speichert, die bei Ausführung durch einen Prozessor (60) eines Servers (44) den Server (44) ausbilden, die Schritte des Verfahrens gemäß einem der Ansprüche 1 bis 4 durchzuführen.

7. Verfahren zum Verteilen von Software von einem Server (44) auf einen Satz von drahtlosen Kommunikationsvorrichtungen (10, 30, 32, 34), die einer Vielzahl von Benutzern zugeordnet sind, das aufweist:
in Reaktion darauf, dass entweder eine neue Anwendung an dem Server (44) verfügbar gemacht wird oder eine aktualisierte Version einer Anwendung an dem Server (44) verfügbar gemacht wird, Übertragen einer Nachricht über ein drahtloses Netzwerk (36, 38) an den Satz von drahtlosen Kommunikationsvorrichtungen (10, 30, 32, 34), die anzeigt, dass die neue oder aktualisierte Anwendung verfügbar ist, wobei die Übertragung automatisch ausgelöst wird in Reaktion darauf, dass die neue Anwendung an dem Server (44) verfügbar gemacht wird oder die aktualisierte Version der Anwendung an dem Server (44) verfügbar gemacht wird, wobei die Übertragung weiter abhängig ist davon, dass die neue Anwendung oder die aktualisierte Version der Anwendung zu einer Gruppe von Anwendungen hinzugefügt wird, zu denen der Satz von drahtlosen Kommunikationsvorrichtungen (10, 30, 32, 34) zugehörig ist und auf die ein Zugriff durch den Satz von drahtlosen Kommunikationsvorrichtungen (10, 30, 32, 34) als Ganzes vorgesehen ist;
an jeder drahtlosen Kommunikationsvorrichtung (10, 30, 32, 34) des Satzes, Präsentieren einer auswählbaren Option einem Benutzer, deren Auswahl durch den Benutzer anzeigt, dass die neue Anwendung oder die aktualisierte Version der Anwendung gewünscht ist, wobei das Präsentieren in Reaktion auf die Nachricht geschieht;
von jeder drahtlosen Kommunikationsvorrichtung (10, 30, 32, 34) des Satzes, an der die Benutzerauswahl getroffen wurde, Senden einer Anzeige der Benutzerauswahl über das drahtlose Netzwerk (36, 38) an den Server (44); und
in Reaktion auf die Anzeige, Übertragen der neuen Anwendung oder der aktualisierten Version der Anwendung von dem Server (44) und über das drahtlose Netzwerk (36, 38) an jede drahtlose Kommunikationsvorrichtung (10, 30, 32, 34) des Satzes, an der die Benutzerauswahl getroffen wurde.

## Revendications

1. Procédé mis en oeuvre par ordinateur, comprenant les étapes consistant à :
à la suite soit de la mise à disposition d'une nouvelle application sur un serveur (44), soit de la mise à disposition d'une version mise à jour d'une application sur un serveur (44), émettre un message sur un réseau sans fil (36, 38) vers un ensemble de dispositifs de communication sans fil (10, 30, 32, 34) attribués à une pluralité d'utilisateurs, ledit message indiquant que ladite application nouvelle ou mise à jour est disponible, ladite émission étant déclenchée automatiquement à la suite soit de la mise à disposition de ladite nouvelle application sur ledit serveur (44), soit de la mise à disposition de ladite version mise à jour d'une application sur ledit serveur (44), ladite émission étant en outre liée à la condition que ladite application nouvelle ou ladite version mise à jour de ladite application soit ajoutée à un groupe d'applications auquel est associé ledit ensemble de dispositifs de communication sans fil (10, 30, 32, 34) et auquel un accès est accordé audit ensemble de dispositifs de communication sans fil (10, 30, 32, 34) globalement ;
recevoir sur ledit réseau sans fil (36, 38), en provenance d'au moins un dispositif de communication sans fil (10, 30, 32, 34) dudit ensemble, une indication d'un utilisateur selon laquelle il souhaite ladite application nouvelle ou ladite version mise à jour de ladite application, ladite indication de l'utilisateur étant envoyée en réponse audit message ; et
à la suite de ladite réception, émettre ladite application nouvelle ou ladite version mise à jour de ladite application sur ledit réseau sans fil (36, 38) vers ledit au moins un dispositif de communication sans fil (10, 30, 32, 34).

2. Procédé selon la revendication 1, dans lequel ledit ensemble de dispositifs de communication sans fil (10, 30, 32, 34) est un sous-ensemble d'un ensemble général de dispositifs de communication sans fil (10, 30, 32, 34) en communication avec ledit serveur (44).

3. Procédé selon l'une quelconque des revendications précédentes, dans lequel ladite application nouvelle ou ladite version mise à jour de ladite application est un document en langage de balisage décrivant le format d'écrans pour l'application nouvelle ou la version mise à jour de l'application, les interactions possibles de l'utilisateur avec lesdits écrans et les événements et actions qui commandent le flux de l'application.

4. Procédé selon l'une quelconque des revendications précédentes, dans lequel ledit message comprend une liste des applications actuellement disponibles pour ledit ensemble de dispositifs de communication sans fil (10, 30, 32, 34).

5. Serveur (44) comprenant un processeur (60) et de la mémoire (64) en communication avec ledit processeur (60) et stockant des instructions qui, lorsqu'elles sont exécutées par ledit processeur (60), adaptent ledit serveur (44) pour exécuter les étapes du procédé selon l'une quelconque des revendications 1 à 4.

6. Support lisible par la machine, stockant des instructions qui, lorsqu'elles sont exécutées par un processeur (60) d'un serveur (44), adaptent ledit serveur (44) pour exécuter les étapes du procédé selon l'une quelconque des revendications 1 à 4.

7. Procédé de déploiement de logiciel à partir d'un serveur (44), vers un ensemble de dispositifs de communication sans fil (10, 30, 32, 34) attribués à une pluralité d'utilisateurs, comprenant les étapes consistant à :
à la suite soit de la mise à disposition d'une nouvelle application sur un serveur (44), soit de la mise à disposition d'une version mise à jour d'une application sur un serveur (44), émettre un message sur un réseau sans fil (36, 38) vers ledit ensemble de dispositifs de communication sans fil (10, 30, 32, 34), ledit message indiquant que ladite application nouvelle ou mise à jour est disponible, ladite émission étant déclenchée automatiquement à la suite soit de la mise à disposition de ladite nouvelle application sur ledit serveur (44), soit de la mise à disposition de ladite version mise à jour d'une application sur ledit serveur (44), ladite émission étant en outre liée à la condition que ladite application nouvelle ou ladite version mise à jour de ladite application soit ajoutée à un groupe d'applications auquel est associé ledit ensemble de dispositifs de communication sans fil (10, 30, 32, 34) et auquel un accès est accordé audit ensemble de dispositifs de communication sans fil (10, 30, 32, 34) globalement ;
sur chacun des dispositifs de communication sans fil (10, 30, 32, 34) dudit ensemble, présenter à un utilisateur une option pouvant être sélectionnée, la sélection par l'utilisateur indiquant qu'il souhaite ladite application nouvelle ou ladite version mise à jour de ladite application, ladite présentation s'effectuant en réponse audit message ;
à partir de chacun des dispositifs de communication sans fil (10, 30, 32, 34) dudit ensemble sur lesquels ladite sélection a été faite par l'utilisateur, envoyer une indication de ladite sélection par l'utilisateur sur ledit réseau sans fil (36, 38), vers ledit serveur (44) ; et
en réponse à ladite indication, émettre à partir dudit serveur (44) ladite application nouvelle ou ladite version mise à jour de ladite application sur ledit réseau sans fil (36, 38), vers chacun desdits dispositifs de communication sans fil (10, 30, 32, 34) dudit ensemble sur lesquels ladite sélection a été faite par ledit utilisateur.
